(19) Europäisches Patentamt
European Patent Office
Office européen des brevets

(11) **EP 3 889 922 B1**

(12) **EUROPÄISCHE PATENTSCHRIFT**

(45) Veröffentlichungstag und Bekanntmachung des Hinweises auf die Patenterteilung:
**29.11.2023** **Patentblatt 2023/48**

(21) Anmeldenummer: **21166671.4**

(22) Anmeldetag: **01.04.2021**

(51) Internationale Patentklassifikation (IPC):
**G07D 7/12** *(2016.01)* **G07D 7/202** *(2016.01)*
**G07D 7/20** *(2016.01)* **G06V 30/40** *(2022.01)*
**G07D 7/2033** *(2016.01)*

(52) Gemeinsame Patentklassifikation (CPC):
**G07D 7/12; G06V 30/40; G07D 7/2016;**
**G07D 7/202; G07D 7/2033; G07D 7/2041**

(54) **INTEGRITÄTSPRÜFUNG EINES DOKUMENTS MIT PERSONENBEZOGENEN DATEN**

INTEGRITY CHECK OF A DOCUMENT WITH PERSONAL DATA

VÉRIFICATION DE L'INTÉGRITÉ D'UN DOCUMENT COMPORTANT DES DONNÉES À CARACTÈRE PERSONNEL

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.04.2020 DE 102020109171**

(43) Veröffentlichungstag der Anmeldung:
**06.10.2021 Patentblatt 2021/40**

(73) Patentinhaber: **Bundesdruckerei GmbH 10969 Berlin (DE)**

(72) Erfinder:
• **GRIESER, Ralf**
**10589 Berlin (DE)**
• **SCHULTHEIß, Christoph**
**85622 Feldkirchen (DE)**
• **KNEBEL, Michael**
**13086 Berlin (DE)**
• **WOLF, Andreas**
**13158 Berlin (DE)**

(74) Vertreter: **Richardt Patentanwälte PartG mbB Wilhelmstraße 7 65185 Wiesbaden (DE)**

(56) Entgegenhaltungen:
DE-A1-102016 001 449    US-A1- 2004 081 332
US-A1- 2012 324 534    US-A1- 2017 249 452

• CHRISTOPH BUSCH ET AL: "Towards Unattended and Privacy Protected Border Control", BIOMETRICS SYMPOSIUM, 2007, IEEE, PI, 1. September 2007 (2007-09-01), Seiten 1-6, XP031202437, ISBN: 978-1-4244-1548-9
• CHAN HOCK CHUAN ED - YOSHIZAWA MAKOTO: "Perceived image similarity and quantization resolution", DISPLAYS DEVICES, Bd. 29, Nr. 5, 12. März 2008 (2008-03-12), Seiten 451-457, XP029173913, ISSN: 0141-9382, DOI: 10.1016/J.DISPLA.2008.03.002

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

### Gebiet

Die Erfindung betrifft ein Verfahren und System zur Prüfung der Integrität eines Dokuments.

### Stand der Technik

Dokumente, z.B. Wert- und Sicherheitsdokumente wie z.B. Personalausweise, Reisepässe oder Kreditkarten, kommen bei vielen sicherheitskritischen Anwendungsszenarien zum Einsatz. Entsprechend hoch ist die Gefahr, dass der berechtigte Besitzer eines solchen Dokuments oder ein unberechtigter Dritter das Dokument physisch nach dessen Herausgabe und Personalisierung manipuliert, um sich z.B. Zutritt zu einem geschützten Gebäudekomplex, Zugriff auf geschützte Daten, oder die Leistungen von Diensten zu verschaffen. Beispielsweise könnte ein unberechtigter Dritter versuchen, das Gesichtsbild des Besitzers, welches auf einem bereits hergestellten und herausgegebenen Ausweisdokument oder auf einem personalisierten Wertdokument aufgedruckt ist, durch sein eigenes Gesichtsbild oder durch ein gemorphtes Bild zu ersetzen (Identitätsdiebstahl). Auch andere Manipulationen sind möglich, beispielsweise eine Manipulation von Orts- und Altersangaben auf dem Dokument oder die Anfertigung einer physischen Kopie eines echten Dokuments.

Sofern das Dokument über elektronische Komponenten wie insbesondere einen Speicher und einen Mikroprozessor verfügt, gibt es im Stand der Technik verschiedene Ansätze, ein Dokument oder zumindest den Inhalt dessen Datenspeichers mittels individueller Kennungen, kryptographischer Schlüssel, Signaturen und sonstige dokumentenindividueller oder personenindividueller Daten oder Algorithmen eindeutig und manipulationssicher identifizierbar zu machen. Beispielsweise beschreibt die Gebrauchsmusterschrift DE202011107898U1 ein Internet-gestütztes Verfahren (Web-Service), welches es ermöglicht, Dokumente auf ihre Echtheit und Authentizität zu überprüfen, sofern diese mit einer eineindeutigen Zeichenkombination (True-Val) versehen sind. Die Zeichenkombination TrueVal ist eine Zusammensetzung aus einer eindeutigen Unternehmensnummer und einer für jedes Unternehmen eindeutigen Dokumentennummer. Der Web-Service verwaltet die Unternehmensnummern mit den dazugehörenden Stammdaten und wird zur Integritätsprüfung des Dokuments eingesetzt.

Allerdings verfügen nicht alle Wert- und Sicherheitsdokumente auch über entsprechende Datenspeicher und/oder Mikroprozessoren, um mittels algorithmischer und/oder kryptographischer Verfahren die Manipulationssicherheit des Dokumentes und/oder dessen Informationsgehalt zu gewährleisten. Sogar falls diese Komponenten vorhanden sind, ist deren Verwendung im Zuge einer Integritätsprüfung oftmals zu zeitaufwändig, oder zu komplex. Die besagten elektronischen Mittel zur Integritätsprüfung sind oftmals auch ungenügend, nämlich dann, wenn die Integrität des Dokuments zumindest bei manchen Gelegenheiten auch anhand rein optischer Merkmale (Hologramme, Gesichtsbild des Inhabers des Dokuments, handschriftliche Unterschrift des Inhabers, etc.) erfolgen soll. Beispielsweise dient das Gesichtsbild einer Person, das auf dem Reisepass oder Personalausweis oder Mitarbeiterausweis dieser Person aufgedruckt ist, regelmäßig des Nachweises gegenüber anderen Personen, dass der Besitzer des Dokuments die Person ist, für welche der Ausweis ausgestellt wurde. Es ist in solchen Szenarien also nicht ausreichend, nur sicherzustellen, dass elektronische Komponenten oder Datenspeicher des Dokuments integer sind, also nicht manipuliert wurden. Es muss vielmehr auch und insbesondere sichergestellt werden, dass die optisch erfassbaren, personenbezogenen Daten des Dokuments nicht manipuliert werden bzw. eine entsprechende Manipulation schnell und zuverlässig identifiziert werden kann.

Die US 2012/0324534 A1 beschreibt ein System zur Überprüfung der Integrität von Ausweisdokumenten. Dabei werden aus Bildern von Ausweisdokumenten Signaturen generiert. Es können mehrere Signaturen generiert werden, indem ein Bild in mehrere Abschnitte unterteilt wird, sodass lokale Signaturen für die einzelnen Abschnitte erzeugt werden. Zur Überprüfung der Echtheit eines Ausweisdokuments können die Signaturen mit vorab für das Ausweisdokument generierten Signaturen abgeglichen werden.

Die DE 10 2016 001 449 A1 beschreibt ein Verfahren zur Verifikation eines mit einem Sicherheitselement versehenen Gegenstands, bei dem das Sicherheitselement in einem Mehrschrittverfahren mit Registerschwankungen hergestellt ist und in einem Prüffeld (12) ein individuelles charakteristisches Merkmal des Sicherheitselements in Form von zumindest zwei Punkt- oder Linienelementen enthält, die bei der Herstellung des Sicherheitselements in unterschiedlichen Herstellungsschritten mit Registerschwankungen erzeugt sind, und die zwei oder mehr Markierungspunkte mit charakteristischen Abständen definieren, wobei bei dem Verfahren das Prüffeld des Sicherheitselements mit einer Kamera optisch erfasst wird, charakteristische Abstände der zwei oder mehr Markierungspunkte des Prüffelds bestimmt werden und daraus ein Prüfwert für das individuelle charakteristische Merkmal des Sicherheitselements gebildet wird, der gebildete Prüfwert mit einem Referenzprüfwert verglichen wird, und auf Grundlage des Vergleichsergebnisses ein Verifikationsresultat für den mit dem Sicherheitselement versehenen Gegenstand erstellt wird.

### Zusammenfassung

Der Erfindung liegt die Aufgabe zugrunde, ein verbessertes Verfahren und System zur Prüfung der Integrität von Dokumenten vorzuschlagen, sowie ein entsprechendes Verfahren und System zur Ermöglichung dieser Prüfung, z.B. im Zuge der Herstellung, Personalisierung und/oder Registrierung eines solchen Dokuments.

Die der Erfindung zugrunde liegenden Aufgaben werden jeweils mit den Merkmalen der unabhängigen Patentansprüche gelöst. Ausführungsformen der Erfindung sind in den abhängigen Ansprüchen angegeben. Die im Folgenden aufgeführten Ausführungsformen sind frei miteinander kombinierbar, sofern sie sich nicht gegenseitig ausschließen.

In einem Aspekt betrifft die Erfindung ein computerimplementiertes Verfahren zur Ermöglichung der Prüfung der Integrität eines Dokuments. Das Verfahren umfasst:

- Erfassen eines digitalen Bildes von zumindest einem Teil eines Dokuments durch einen optischen Sensor, wobei das Dokument einer Person zugeordnet ist, wobei das Dokument optisch lesbare, personenbezogene Daten umfasst, wobei das digitale Bild zumindest die personenbezogenen Daten abbildet;

- Berechnung von Bildreferenzdaten durch Anwenden einer irreversiblen, informationsverlustbehafteten Rechenfunktion auf **Eingabedaten,** wobei die Eingabedaten Intensitätsdaten von Pixeln des digitalen Bildes oder Intensitätsdaten von Pixeln von Teilbildern des digitalen Bildes sind, wobei der Informationsverlust mindestens so groß ist, dass die Bildreferenzdaten depersonalisiert sind und maximal so groß ist, dass die Bildreferenzdaten Dokument-individuell sind;

- Berechnung von weiteren Referenzdaten durch Anwenden einer weiteren irreversiblen, informationsverlustbehafteten Rechenfunktion auf weitere Daten, wobei das Dokument die weiteren Daten umfasst, wobei die weiteren Daten optisch erfassbare, nicht-personenbezogene Daten sind, wobei das digitale Bild auch die weiteren Daten abbildet, wobei die weiteren Daten ein oder mehrere graphische Elemente umfassen, wobei die graphischen Elemente im Rahmen einer produktionsbedingten Fehlertoleranz in oder auf das Dokument ein- bzw. aufgebracht wurden, wobei die Berechnung der weiteren Referenzdaten umfasst:

  • Durchführung einer Bildanalyse zur Bestimmung der Größe und optional zusätzlich auch von Positionsdaten jedes der ein oder mehreren graphischen Elemente auf dem Dokument, wobei die Genauigkeit der Größenbestimmung und der ggf. optional durchgeführten Positionsdatenbestimmung höher ist als die produktionsbedingte Fehlertoleranz; und

  • Verwendung der Größen und optional zusätzlich auch der Positionsdaten als die weiteren Referenzdaten;

- Speicherung der Bildreferenzdaten und der weiteren Referenzdaten in eine Datenbank. Bei der Datenbank kann es sich um eine dokument-interne oder vorzugsweise um eine dokument-externe Datenbank handeln. Beispielsweise werden die Bildreferenzdaten verknüpft mit einer Dokument-ID des Dokuments gespeichert, insbesondere falls es sich bei der Datenbank um eine dokument-externe Datenbank handelt. Falls es sich z.B. um eine dokument-interne Datenbank handelt, werden die Daten durch die Speicherung in eben dieser Datenbank implizit mit diesem Dokument verknüpft gespeichert.

Insbesondere kann der Umstand, dass die Bildreferenzdaten Dokument-individuell sind, beinhalten, dass die Bildreferenzdaten für alle Dokumente des gleichen Herstellers oder Herausgebers des Dokuments einzigartig sind, zumindest dann, wenn jedes dieser Dokumente für eine andere Person ausgestellt wurde.

Ausführungsformen der Erfindung können den Vorteil haben, dass ein auf die oben beschriebene Weise hergestelltes, personalisiertes und/oder registriertes Dokument mit technisch sehr einfachen Mitteln (optischer Sensor) auf schnelle und zuverlässige Weise daraufhin getestet werden kann, ob das Dokument, und hier insbesondere die optisch erfassbaren personenbezogenen Daten (zum Beispiel Gesichtsbild), manipuliert wurden, und dies, ohne sensible personenbezogene Daten zu diesem Zweck in einem Register speichern und ggf. aufwändig schützten zu müssen.

Zur Verifikation eines Dokumentes und zur Fälschungserkennung von optisch erfassbaren personenbezogenen Daten wäre es zwar möglich, im Zuge der Herstellung und/oder Personalisierung eines Dokumentes, nachdem die personenbezogenen optischen Daten in oder auf das Dokument aufgebracht wurden, ein Bild des Dokuments in Form eines hochauflösenden Fotos zu erfassen und zentral in einem Register zu speichern. Wenn die Person, für die das Dokument ausgestellt wurde, sich mithilfe des Dokuments zu einem späteren Zeitpunkt zum Beispiel gegenüber einem Terminal ausweisen möchte, wäre es möglich, dass das Terminal die aktuell auf dem vorgelegten Ausweisdokument vorhandenen, personenbezogenen optischen Merkmale mit dem im Zuge der Herstellung und/oder Personalisierung des Dokuments in den zentralen Register hinterlegten Foto vergleicht. Dies hätte jedoch den gravierenden Nachteil, dass sensible personenbezogene Daten in dem Register für längere Zeit gespeichert werden müssten. Dies kann gegen datenschutzrechtliche Bestimmungen verstoßen. Doch auch wenn dies nicht der Fall sein sollte, würde eine zentrale Speicherung von personenbezogenen Daten zum Zwecke der späteren Dokumentenprüfung bedeuten, dass erhebliche technische Schutzvorkehrungen getroffen werden müssten, um sicherzustellen, dass kein unberechtigter Dritter Zugriff auf die zentral hinterlegten Daten des Registers hat. Außerdem wäre ein solches Szenario mit dem Risiko verbunden, dass die aktuell vom Terminal erfassten Bilder von dem aktuellen Zustand des Dokumentes mit dem entsprechenden Bild im Register verglichen werden müsste, sodass ein Austausch der sensiblen personenbezogenen Daten über eine Netzwerkverbindung erforderlich wäre. In diesem Szenario müssten also sowohl das Register als auch der Datenkommunikationskanal zwischen Register und Terminal vor jeglichem unberechtigten Zugriff sicher geschützt werden. Es verbliebe jedoch immer ein Restrisiko, dass personenbezogene Daten gestohlen werden..

Ausführungsformen der Erfindung sehen jedoch keinen Vergleich von Fotografien des Dokuments zum Zeitpunkt der Ausstellung bzw. Personalisierung einerseits und dem Zeitpunkt der Prüfung andererseits vor. Vielmehr sehen Ausführungsformen der Erfindung vor, dass ein während der Herstellung oder Personalisierung des Dokuments erfasstes Bild oder dessen Teilbilder mit einer nicht-umkehrbaren (irreversiblen) Rechenfunktion in Bildreferenzdaten transformiert werden, welche zwar noch hinreichend spezifisch sind, dass sie für das jeweilige Dokument einmalig sind, dabei aber gleichzeitig auch derartig informationsreduziert sind, dass es auf Basis der Bildreferenzdaten nicht möglich ist, das ursprünglich erfasste digitale Bild soweit zu rekonstruieren, dass die Person, dem das Dokument zugewiesen ist, identifizierbar wäre. Bei den Bildreferenzdaten handelt es sich also um depersonalisierte Daten.

Ausführungsformen der Erfindung können den Vorteil haben, dass eine zentrale Speicherung der Bildreferenzdaten einer Vielzahl von Dokumenten in einem Register problemlos möglich ist, ohne dass hierbei gegen Datenschutzgesetze verstoßen würde und ohne dass die Gefahr besteht, dass bei einem erfolgreichen Angriff die abhandengekommenen oder kopierten Bildreferenzdaten dazu genutzt werden könnten, um sensible personenbezogene Daten wie zum Beispiel Gesichtsbilder, Adressen, Bankverbindungsdetails etc. für kriminelle Zwecke zu rekonstruieren.

Gleichzeitig können Ausführungsformen der Erfindung den Vorteil haben, dass die in den Bildreferenzdaten enthaltene Information immer noch hinreichend spezifisch ist, um zu gewährleisten, dass eine Integritätsprüfung des Dokuments auf Basis dieser Daten hinreichend exakt ist und insbesondere auch kleinere Manipulationen wie zum Beispiel den Austausch eines Gesichtsbildes mit einem Bild eines sehr ähnlichen oder gemorphten Bildes einer anderen Person verlässlich erkennen kann.

Somit können Ausführungsformen der Erfindung den Vorteil haben, dass alle auf dem Dokument optisch erfassbaren Personendaten eliminiert werden und trotzdem die Eigenschaften der speziellen Ausprägung des Dokuments bzw. der personenbezogenen Daten auf diesem Dokument weitestgehend erhalten bleiben und in den Bildreferenzdaten auf sichere Weise gespeichert werden können.

Gemäß Ausführungsformen der Erfindung ermöglichen die personenbezogenen Daten in dem erfassten digitalen Bild eine Identifikation der Person.

Beispielsweise kann die Dokument-ID eine Seriennummer sein, die optisch und/oder anderweitig erfasst wird. Beispielsweise kann die Seriennummer manuell von einem Nutzer eingegeben werden, per RFID Technik oder einer vergleichbaren Technik aus einem Datenspeicher des Dokuments gelesen werden etc. Das Verfahren kann einen Schritt der Erfassung der Dokument-ID durch einen optischen Sensor, elektromagnetischen Sensor, RFID Sensor etc. beinhalten.

Nach Ausführungsformen der Erfindung umfasst das Verfahren ein Löschen des erfassten digitalen Bildes von allen Datenspeichern eines Systems, das zur Durchführung dieses Verfahrens zur Ermöglichung der Integritätsprüfung verwendet wurde. Die Löschung erfolgt, nachdem die Bildreferenzdaten erzeugt wurden. Die Löschung erfolgt vorzugsweise nach der Speicherung der Bildreferenzdaten in der Datenbank, und zwar vorzugsweise unmittelbar nach der Speicherung.

Dies kann vorteilhaft sein, da hierdurch sichergestellt werden kann, dass die erfassten digitalen Bilder mit den sensiblen personenbezogenen Daten nicht gestohlen werden können, denn sie werden unmittelbar nach Erfassung und Verwendung gelöscht. Ausführungsformen können zudem den Vorteil haben, dass weniger Speicher verbraucht wird, denn die Bildreferenzdaten sind aufgrund des Informationsverlusts in der Regel kleiner als die erfassten digitalen Originalbilder.

Nach Ausführungsformen der Erfindung erfolgt die Erfassung des digitalen Bildes, die Berechnung der Bildreferenzdaten und die Speicherung der Bildreferenzdaten im Zuge des Herstellens des Dokuments und/oder Personalisierens des Dokuments für die Person. Beispielsweise können die besagten Schritte im Zuge einer Qualitätsprüfung ("Ausgangsprüfung") des frisch hergestellten und/oder personalisierten Dokumentes durchgeführt werden.

Nach Ausführungsformen der Erfindung beinhalten die personenbezogenen Daten ein Bild der Person, insbesondere ein Gesichtsbild der Person, oder andere optisch erfassbarer biometrischer Merkmale, zum Beispiel ein Aufdruck von Name und Adresse der Person, ein gedruckter Fingerabdruck der Person, ein Irisbild der Person, etc.

Nach Ausführungsformen ist die Datenbank dazu ausgebildet, in Antwort auf den Erhalt einer Prüfanfrage bezüglich des Dokuments Bildreferenzdaten, die für dieses Dokument gespeichert wurden, zu identifizieren und/oder zurückzugeben. Beispielsweise kann die Prüfanfrage eine Seriennummer des Dokuments enthalten, sodass eine Dokument-externe Datenbank die Bildprüfdaten und ggf. weiteren Prüfdaten dieses Dokuments anhand der Seriennummer, die in der Datenbank verknüpft mit den Bildprüfdaten gespeichert ist, zu identifizieren.

Beispielsweise kann es sich bei der Datenbank um einen bestimmten Speicherort, z.B. Auf einem Datenspeicher des Dokuments oder, vorzusweise, auf einem dokuent-externen Datenspeicher, handeln. Bei der Datenbank kann es sich auch um eine konventionelle Datenbank (z.B. relationale Datenbank) handeln. Der Begriff "Datenbank" ist hier breit zu verstehen und kann den Datenspeicher oder eine Kombination aus dem Datenspeicher und einer diesen verwaltenden Software, die auch als Datenbankmanagementsystem bezeichnet wird, bezeichnen. Das DBMS kann z.B. ein MySQL, Oracle, IBM DB2 oder PostgreSQL DBMS sein. Die Datenbank kann z.B. als eine In-Memory Datenbank, eine hierarchische oder objektzentrische Datenbank ausgebildet sein. Die "Datenbank" kann aber auch eine funktionale Einheit aus einer Datenbank und einer mit der Datenbank oder dem DBMS interoperablen Softwareapplikation handeln, wobei die Softwareapplikation beispielsweise als Zugriffsschicht ("Access Layer") der Datenbank dient.

Vorzugsweise handelt es sich bei der Datenbank um eine dokument-externe Datenbank, die auf einem Datenbankserver gehostet wird und/oder die Teil eines Prüfsystems, z.B. Prüfterminals, ist. Hier sind Aspekte des Schutzes personenbezogener Daten besonders wichtig. Außerdem kann die Verwendung dokument-externer Datenbanken zur Speicherung der Referenzdaten den Vorteil haben, dass eine Prüfung des Dokuments auch dann erfolgen kann, wenn das Dokument keinen eigenen Datenspeicher hat oder dieser defekt ist.

Nach Ausführungsformen der Erfindung umfasst die Berechnung der Bildreferenzdaten:

- Unterteilen des digitalen Bildes in die Teilbilder gemäß vordefinierter, mit einem Prüfgerät vereinbarter, Teilbildgrenzen oder Teilbildgrenzziehungsalgorithmen;

- Für jedes der Teilbilder, Berechnung von Teilbildreferenzdaten durch Anwendung der irreversiblen, informationsverlustbehafteten Rechenfunktion auf die Intensitäten der Pixel innerhalb dieses Teilbildes; und

- Verwendung der Teilbildreferenzdaten der Teilbilder als die Bildreferenzdaten.

Beispielsweise kann das Verfahren zur Ermöglichung der Prüfung der Integrität von einem System zur Herstellung, Personalisierung und/oder Registrierung von Dokumenten durchgeführt werden. Dieses System kann mit mehreren Prüfsystemen Datenstrukturen und/oder Algorithmen vereinbart haben, um zu gewährleisten, dass ein von dem einen System hergestellte, personalisierte und/oder registrierte Dokumente von dem Prüfsystem im Hinblick auf die Integrität der Dokumente prüfbar sind. Zu diesen vereinbarten Datenstrukturen und/oder Algorithmen gehören nach Ausführungsformen die irreversible, informationsverlustbehaftete Rechenfunktion, die Teilbildgrenzen und/oder die Teilbildgrenzziehungsalgorithmen.

Die Anwendung der Rechenfunktion auf die einzelnen Teilbilder anstelle des gesamten digitalen Bildes kann den Vorteil haben, dass allein hierdurch bereits eine Transformation der in dem Originalbild erfassten Intensitätswerten in Ausgabewerte erfolgt, die einer Rekonstruktion des Originalbildes entgegenstehen oder diese erschweren. Beispielsweise können die Teilbilder horizontale oder vertikale Bildstreifen sein, deren Grenzen bzw. Breiten vordefiniert sind und sich nicht danach orientieren, welche Bildbereiche eine vergleichbare Intensität aufweisen. Die von der Funktion für jedes Teilbild berechneten Ausgabedaten sind zudem grobgranularer als das Originalbild, denn ein Teilbild umfasst mehrere Pixel. Die Aufteilung in Teilbilder kann z.B. als vorbereitender Bildverarbeitungsschritt durchgeführt werden, um danach für jedes der Teilbilder Referenzdaten zu berechnen, die die in den Pixelintensitäten der Teilbilder enthaltenen Informationen auf verschiedene Weise aggregiert, wobei es zu einem Informationsverlust kommt. Durch Modifikation der Größe der gebildeten Teilbilder und/oder durch Modifikation der Rechenfunktion kann die Höhe des Informationsverlusts bei der Berechnung der Bildreferenzdaten sehr exakt auf ein für den jeweiligen Dokumententyp geeignetes Maß eingestellt werden.

Nach Ausführungsformen beinhaltet das Verfahren einen Schritt der Bereitstellung einer Nutzerschnittstelle, insbesondere einer graphischen Benutzeroberfläche ("GUI"), welche es einem Nutzer ermöglicht, die Teilbildgrenzen und/oder Teilbildgrenzziehungsalgorithmen zu modifizieren, beispielsweise durch Eingeben der Streifenbreiten, Rechteckskanten, Segmentierungsparameter, etc. Zusätzlich oder alternativ dazu kann die Nutzerschnittstelle es dem Nutzer auch erlauben, die informationsverlustbehaftete Rechenfunktion zu modifizieren. Beispielsweise kann die Rechenfunktion eine Erstellung von klassenweise erfassten Häufigkeiten von Pixelintensitäten für jedes der Teilbilder vorsehen und die Nutzerschnittstelle es einem Nutzer ermöglichen, die Granularität dieser Häufigkeitsverteilung durch Festlegung der Breite oder Anzahl der Klassen ("Bins") festzulegen. Hierdurch kann auf sehr flexible weise der Grad des Informationsverlusts auf den Typ des jeweiligen Dokuments bzw. auf die Größe, Auflösung und Beschaffenheit der optisch erfassbaren personenbezogenen Daten angepasst werden. In manchen Ausführungsformen wird der Typ des Dokuments automatisch erfasst oder wird für eine Serie von Dokumenten, die herausgegeben, personalisiert oder registriert werden, vorkonfiguriert. Die Auswahl der Parameter der informationsverlustbehafteten Rechenfunktion und/oder die Teilbildgrenzen oder Teilbildgrenzziehungsalgorithmen werden in einer dokumententypabhängigen Weise automatisch ausgewählt, z.B. mittels computerimplementierter Regeln.

Nach Ausführungsformen der Erfindung umfasst das Unterteilen des digitalen Bildes in die Teilbilder:

- Unterteilen des digitalen Bildes in mehrere horizontale oder vertikale Streifen unter Verwendung vordefinierter, mit dem Prüfgerät vereinbarter, Streifenbreiten und/oder Streifenpositionen;

- Unterteilen des digitalen Bildes in mehrere überlappende oder nicht-überlappende Rechtecke unter Verwendung vordefinierter, mit dem Prüfgerät vereinbarter, Rechteckskantenlängen und/oder Rechtreckspositionen;

- Durchführung eines mit dem Prüfgerät vereinbarten Segmentierungsalgorithmus; und

- Unterteilen des digitalen Bildes in Teilbereiche, deren Grenze gemäß einer Vereinbarung mit dem Prüfgerät durch Gesichtsbild-Landmarken definiert werden.

Nach Ausführungsformen der Erfindung beinhalten die personenbezogenen Daten ein Gesichtsbild der Person. Die Teilbilder haben z.B. je eine Fläche von 5%-20% der Fläche des Gesichtsbildes. In manchen Ausführungsformen enthält ein Dokument auch mehrere Regionen mit optisch erfassbaren personenbezogenen Daten, z.B. eine Kombination aus Gesichtsbild, Unterschrift und/oder Irisbild. In diesem Fall kann das Verfahren für jede dieser Regionen durchgeführt werden.

Entsprechende Ausführungsformen der Erfindung können den Vorteil haben, dass die Größe der Teilbilder im Verhältnis zur Größe des Gesamt-Gesichtsbildes bereits dazu beiträgt, dass die Charakteristika des Gesichts zwar nicht völlig verloren gehen und somit Gesichts-individuelle bzw. Dokumenten-individuelle Bildreferenzdaten erzeugt werden, jedoch keine Rekonstruktion des Gesichtsbildes der Person in hinreichender Qualität, um die Person damit identifizieren zu können, erlaubt.

Nach Ausführungsformen der Erfindung umfasst das Anwenden der irreversiblen, informationsverlustbehafteten Rechenfunktion auf die Eingabedaten: Für die Pixel des digitalen Bildes oder für die Pixel jedes der Teilbilder, automatische Bestimmung einer Häufigkeitsverteilung der Intensitäten dieser Pixel. Insbesondere kann diese Häufigkeitsverteilung eine klassenweise erfasste Häufigkeit von Pixeln mit einem Intensitätswert innerhalb eines klassenspezifischen Intensitätswertbereiches sein. Derartige Verteilungen lassen sich z.B. als Histogramm visualisieren; und Verwendung der bestimmten Häufigkeitsverteilung oder der Gesamtheit der bestimmten Häufigkeitsverteilungen als die Bildreferenzdaten.

Entsprechende Ausführungsformen der Erfindung können vorteilhaft sein, da eine Häufigkeitsverteilung von Pixelintensitäten zwar weiterhin spezifische, aus den optischen personenbezogenen Daten abgeleitete Informationen enthält diese Informationen jedoch im Hinblick auf wesentliche Aspekte reduziert wurden, nämlich die Ortsinformationen. Eine Häufigkeitsverteilung von Pixelintensitäten innerhalb eines Bildes oder Teilbildes enthält nicht mehr eine Zuordnung von einer spezifischen Intensität zu einem spezifischen Pixel. Dadurch ist es unmöglich, das ursprüngliche Bild zu rekonstruieren. Die Verwendung von Häufigkeitsverteilungen in Form von klassenbezogenen Pixel Intensitätshäufigkeiten, wie diese beispielsweise mit Histogramm dargestellt werden können, ist dabei besonders vorteilhaft, da durch die Wahl der Größe der Klassen (Breite der Bins) und der von den Klassen jeweils repräsentierten Pixelintensitätswertebereichen die Stärke des Informationsverlustes bzw. die Spezifität der Intensitätsverteilung für die ursprünglichen personenbezogenen Daten sehr feingranular bestimmt werden kann. Insbesondere durch die rechnerische Ermittlung von klassenspezifischen Intensitätshäufigkeiten für einzelne Teilbilder kann der die Stärke des Informationsverlust flexibel an die Art der jeweils zu depersonalisierenden Daten bzw. die Größe und Auflösung der erfassten personenbezogenen Daten (Gesichtsbild, Irisbild, Unterschrift, etc.) flexibel und feingranular an die jeweiligen Dokumententypen und Anwendungsszenarien angepasst werden.

Nach alternativen Ausführungsformen der Erfindung umfasst das Anwenden der irreversiblen, informationsverlustbehafteten Rechenfunktion auf die Eingabedaten: Für die Pixel des digitalen Bildes oder für die Pixel jedes der Teilbilder, automatische Erkennung von Position und Erstreckung von Linien durch Analyse der Intensitäten dieser Pixel; und Verwendung der erkannten Linien des Bildes oder der Gesamtheit der erkannten Positionen und Erstreckungen der Linien der Teilbilder als die Bildreferenzdaten.

Diese Ausführungsform kann insbesondere dann von Vorteil sein, wenn es sich bei den optisch erfassbaren personenbezogenen Daten um eine handschriftliche Unterschrift handelt, die zum Beispiel im Zuge der Herausgabe, Personalisierung und/oder Registrierung automatisch in oder auf das Dokument aufgebracht wurde oder welche manuell von dem Besitzer des Dokumentes durch leisten einer Unterschrift auf das Dokument aufgebracht wurde.

Die Erkennung von Position und Erstreckung von Linien kann z.B. mittels konventioneller Algorithmen zur Kantendetektion (englisch edge detection) durchgeführt werden. Hierbei kann der Kantendetektionsalgorithmus beispielsweise beinhalten, flächige Bereiche in einem digitalen Bild oder Teilbild voneinander zu trennen, wenn sie sich entlang gerader oder gekrümmter Linien ausreichend in Farb- oder Grauwert, Helligkeit oder Textur unterscheiden. Spezielle Kantenoperatoren erkennen die Übergänge zwischen diesen Bereichen und markieren diese als Linien ("Kanten"). Ein Kantendetektor gemäß Ausführungsformen der Erfindung berechnet einen Intensitätsgradienten an jedem einzelnen Bildpunkt eines Bildes oder Teilbildes durch Untersuchung eines den Punkt umgebenden Bereiches. Dieser Vorgang erfolgt durch diskrete Faltung des Bildes mit einer Faltungsmatrix, dem Kantenoperator. Letzterer definiert dabei die Größe des zu untersuchenden Umfeldes und mit welcher Wichtung dessen einzelne Bildpunkte in die Berechnung eingehen. Die sich so ergebende Matrix der Gradienten an jedem Bildpunkt wird - als Bild interpretiert - Kantenbild genannt. Auf ihm heben sich die Kanten zwischen homogenen Bereichen ab, da an diesen Stellen ein vergleichsweise großer Gradient der Bildpunktwerte vorliegt. Die Kanten treten in der zweiten Ableitung (Änderung des Helligkeits-Gradienten) meist am deutlichsten hervor. Beispielsweise kann einer der folgenden im Bereich der Bildanalyse bekannten Kantenoperatoren (auch Kantenfilter) verwendet werden: Sobel-Operator, Scharr-Operator, Laplace-Filter, Prewitt-Operator, Roberts-Operator und andere.

Nach Ausführungsformen wird die Erfassung des digitalen Bildes und die Berechnung und Speicherung der Bildreferenzdaten jeweils für eines von mehreren unterschiedlichen Spektralbereichen durchgeführt. Die Spektralbereiche sind ausgewählt aus einer Gruppe umfassend: Infrarotlicht, Licht im sichtbaren Wellenlängenbereich, UV-Licht; kohärentes Licht einer Wellenlänge, das identisch ist zu der Wellenlänge des zur Erstellung eines holographischen Sicherheitsmerkmals des Dokuments verwendeten Lichts.

Zusätzlich oder alternativ dazu wird die Erfassung des digitalen Bildes und die Berechnung und Speicherung der Bildreferenzdaten jeweils für eine von mehreren unterschiedlichen Beleuchtungstechnologien durchgeführt, wobei die Beleuchtungstechnologien ausgewählt sind aus einer Gruppe umfassend: Auflicht, Durchlicht, Beleuchtung des Dokuments mit kohärentem Licht zur Rekonstruktion eines Hologramms.

Beispielsweise kann im Zuge der Herausgabe, Personalisierung und/oder Registrierung jeweils ein digitales Bild des Dokuments oder eines Teiles des Dokuments für zwei oder mehr verschiedene Spektralbereiche und/oder für zwei oder mehr verschiedene Beleuchtungstechnologien erfasst werden. Für jedes dieser digitalen Bilder wird ein Satz an Spektralbereich-spezifischen oder Beleuchtungstechnologiespezifischen Bildreferenzdaten berechnet. Ein oder mehrere korrespondierende Systeme zur Prüfung der Integrität Dokumentes können Leuchtquellen und/oder optische Sensoren beinhalten, die einige oder alle der zwei oder mehr verschiedenen Spektralbereiche und/oder einige oder alle der zwei oder mehr verschiedenen Beleuchtungstechnologien abdecken bzw. unterstützen. Vorzugsweise werden die Bildreferenzdaten, die für jedes der Spektralbereich-spezifischen und Beleuchtungstechnologiespezifischen, erfassten digitalen Bilder berechnet werden, mit Metadaten verknüpft in der Datenbank gespeichert, wobei die Metadaten angeben, welche Spektralbereich und/oder welche Beleuchtungstechnologie bei der Erfassung der digitalen Bilder jeweils verwendet wurden. Das Prüfsystem hat daher durch Analyse dieser Metadaten in der Datenbank die Möglichkeit, jeden auf Basis einer bestimmten Beleuchtungstechnologie und/oder auf Basis eines bestimmten Spektralbereichs der Lichtquelle erstellten Satz an Bildprüfdaten mit auf Basis eben dieses Spektralbereiches bzw. eben dieser Beleuchtungstechnologie erstellten Bildreferenzdaten zu vergleichen. Hierbei kann pro Vergleich ein Ähnlichkeitsindikator berechnet werden und in einem letzten Arbeitsschritt kann ein Gesamt-Ähnlichkeitsindikator durch Aggregation sämtlicher berechneter Ähnlichkeitsindikatoren berechnet werden.

Die Anmelderin hat beobachtet, dass die Berücksichtigung mehrerer unterschiedlicher Spektralbereiche und/oder Beleuchtungstechnologien zur Erstellung mehrerer unterschiedlicher Sätze an Bildreferenzdaten für das gleiche Dokument und die Analyse mehrerer Prüfbilder, die unterschiedliche Spektralbereiche abbilden und/oder mittels unterschiedlicher Beleuchtungstechnologien erzeugt wurden, den Vorteil haben kann, dass die Exaktheit des Prüfverfahrens erheblich verbessert werden kann. Unterschiedliche Manipulationen des Dokuments (Bekleben des Dokuments mit einer bestimmten Folie, Abkratzen eines Teils eines Sicherheitselements, Überdrucken des Dokuments mit einer bestimmten Druckfarbe, Manipulation und einem Hologramm etc.) können innerhalb mancher Spektralbereiche und/oder bei Verwendung bestimmter Beleuchtungstechnologien erhebliche Auswirkungen auf die Beschaffenheit der optisch erfassten personenbezogenen Daten haben, die in anderen Spektralbereichen und/oder bei der Verwendung anderer Beleuchtungstechnologien nicht erkannt werden können. Insbesondere kann dadurch einem Szenario vorgebeugt werden, dass eine Manipulation des Dokumentes übersehen wird, weil die Manipulation sich nur auf Eigenschaften des Dokuments auswirkt, die nur innerhalb eines bestimmten Spektralbereiches und/oder nur bei einer bestimmten Beleuchtungstechnologien sichtbar sind bzw. von dem optischen Sensor erfasst werden können.

Das Dokument umfasst weitere Daten. Die weiteren Daten umfassen optisch erfassbare, nicht-personenbezogene Daten, wie z.B. Staatswappen, Firmenlogos, reflektierende Sicherheitsstreifen, oder sonstige Daten, die z.B. den Dokumententyp, den Herausgeber, Hersteller oder Verwendungszweck des Dokuments widergeben. Das erfasste digitale Bild bildet auch die weiteren Daten ab. Das Verfahren umfasst ferner eine Berechnung von weiteren Referenzdaten durch Anwenden einer weiteren irreversiblen, informationsverlustbehafteten Rechenfunktion auf die weiteren Daten. Das Verfahren umfasst ferner eine Speicherung der weiteren Referenzdaten des Dokuments in der Datenbank. Beispielsweise können die weiteren Referenzdaten verknüpft mit der Dokument-ID des Dokuments verknüpft gespeichert werden.

Vorzugsweise, jedoch nicht notwendigerweise, ist der Informationsverlust maximal so groß, dass die weiteren Referenzdaten Dokument-individuell sind für alle Dokumente des gleichen Herstellers oder Herausgebers. Beispielsweise könnte die exakte Position eines Staatswappens, Firmenlogos oder sonstigen Aufdrucks Fertigungstoleranzen unterliegen, sodass die exakte Position dieser optisch erfassbaren weiteren Daten auf dem Dokument für das Dokument charakteristisch ist.

Die weiteren Daten umfassen ein oder mehrere graphische Elemente. Die graphischen Elemente wurden im Rahmen einer produktionsbedingten Fehlertoleranz in oder auf das Dokument ein- bzw. aufgebracht. Die graphischen Elemente können z.B. aus einem oder mehreren der folgenden Elemente bestehen: eine alphanumerische Symbolsequenz, ein alphanumerisches Symbol, ein graphisches Symbol, ein Staatswappen, ein Firmenlogo, ein Hologramm, ein Sicherheitsstreifen, ein optisch erfassbares Sicherheitsmerkmal. Die Symbolsequenz kann z.B. auf der sog. MRZ (Machine-Readable-Zone) aufgebracht sein, bei dem Hologramm kann es sich um ein Hologramm handeln, das ein Firmenlogo oder ein sonstiges Objekt darstellt.

Die spezielle Ausprägung der weiteren Daten setzt sich aus Fertigungstoleranzen, Farbeindruck und kleineren lokalen Störungen zusammen. Es wird gemäß Ausführungsformen eine Liste generiert, die für verschiedene optisch erfassbare Informationen in oder auf dem Dokument die von diesen abgeleiteten, zugehörigen Referenzdaten beinhalten. Diese Liste wird in einer Datenbank (z.B. Cloudspeicherdienst und/oder dokument-interne Datenbank) gespeichert und kann während einer Prüfung als Vergleichsreferenz herangezogen werden. Beispielsweise kann die Liste verknüpft mit einer Dokument-ID (z.B. optisch erfasste Seriennummer) des Dokumentes gespeichert werden oder mit einer impliziten Dokumentenzuweisung durch Speicherung innerhalb des Dokuments.

Die Berechnung der weiteren Referenzdaten umfasst: Durchführung einer Bildanalyse zur Bestimmung von Positionsdaten und/oder Größen jedes der ein oder mehreren graphischen Elemente auf dem Dokument, wobei die Genauigkeit der Positionsdatenbestimmung und/oder Größenbestimmung höher ist als die produktionsbedingte Fehlertoleranz; und Verwendung der Positionsdaten und/oder Größen als die weiteren Referenzdaten.

Die zusätzliche Verwendung der weiteren optischen Daten um weitere, vorzugsweise dokument-individuelle, Referenzdaten für ein bestimmtes Dokument z.B. bei der Herausgabe, Personalisierung und/oder Registrierung des Dokuments zu berechnen kann vorteilhaft sein, da die Exaktheit eines entsprechenden Verfahrens zur Prüfung der Integrität des Dokuments erhöht werden kann. Zum einen wird eine größere Fläche des Dokuments von der Integritätsprüfung erfasst, zumindest dann, wenn die personenbezogenen und nicht-personenbezogenen Daten zumindest teilweise auf unterschiedlichen Bereichen des Dokuments angebracht sind.

In einem weiteren Aspekt betrifft die Erfindung ein computerimplementiertes Verfahren zur Prüfung der Integrität eines Dokuments. Das Verfahren umfasst:

- Erfassen eines Prüfbildes durch einen optischen Sensor, wobei das Prüfbild ein digitales Bild von zumindest einem Teil eines Dokuments ist, wobei das Dokument einer Person zugeordnet ist, wobei das Dokument optisch lesbare, personenbezogene Daten umfasst, wobei das Prüfbild zumindest die personenbezogenen Daten abbildet;

- Berechnung von Bildprüfdaten durch Anwenden einer irreversiblen, informationsverlustbehafteten Rechenfunktion auf Eingabedaten, wobei die Eingabedaten Intensitätsdaten von Pixeln des Prüfbildes oder Intensitätsdaten von Pixeln von Teilbildern des Prüfbildes sind, wobei der Informationsverlust mindestens so groß ist, dass die Bildprüfdaten depersonalisiert sind und maximal so groß ist, dass die Bildprüfdaten Dokument-individuell sind ("individuell" bezieht sich hier insbesondere auf die Dokumente des gleichen Herstellers oder Herausgebers; andere Hersteller haben typischerweise auch andere Layouts);

- Berechnung von weiteren Bildprüfdaten durch Anwenden einer weiteren irreversiblen, informationsverlustbehafteten Rechenfunktion auf weitere Daten, wobei das Dokument die weiteren Daten umfasst, wobei die weiteren Daten optisch erfassbare, nicht-personenbezogene Daten sind, wobei das Prüfbild auch die weiteren Daten abbildet, wobei die weiteren Daten ein oder mehrere graphische Elemente umfassen, wobei die graphischen Elemente im Rahmen einer produktionsbedingten Fehlertoleranz in oder auf das Dokument ein- bzw. aufgebracht wurden, wobei die Berechnung der weiteren Bildprüfdaten umfasst:

  • Durchführung einer Bildanalyse zur Bestimmung der Größe und optional zusätzlich auch von Positionsdaten jedes der ein oder mehreren graphischen Elemente auf dem Dokument, wobei die Genauigkeit der Größenbestimmung und der ggf. optional durchgeführten Positionsdatenbestimmung höher ist als die produktionsbedingte Fehlertoleranz; und

  • Verwendung der Größen und optional zusätzlich auch der Positionsdaten als die weiteren Bildprüfdaten;

- Identifikation von Bildreferenzdaten des Dokuments in einer Datenbank; Beispielsweise können die Bildreferenzdaten identifiziert werden, die in der Datenbank mit einer Dokument-ID des Dokuments verknüpft gespeichert sind;

- Identifikation von weiteren Referenzdaten des Dokuments in der Datenbank;

- Berechnung eines Ähnlichkeitsindikators durch Vergleich der Bildprüfdaten und der identifizierten Bildreferenzdaten; wobei die Berechnung des Ähnlichkeitsindikators einen Vergleich der weiteren Bildprüfdaten und der identifizierten weiteren Referenzdaten umfasst und die Ähnlichkeit der verglichenen weiteren Bildprüfdaten und Referenzdaten in den Ähnlichkeitsindikator eingeht; und

- Verwendung des Dokuments und/oder Durchführung einer Software- oder Hardwarefunktion nur dann, wenn der Ähnlichkeitsindikator einen Mindestwert überschreitet.

Ausführungsformen können den Vorteil haben, dass ein Dokument einschließlich von auf oder in diesem enthaltenen personenbezogenen, optisch erfassbaren Daten auf technisch einfache, auch kontaktlose Weise im Hinblick darauf geprüft werden kann, ob das Dokument bzw. diese Daten manipuliert wurden, und zwar ohne dass hierfür die sensiblen personenbezogenen Daten für längere Zeit zentral hinterlegt werden müssen. Vielmehr werden stark informationsreduzierte Bildprüfdaten berechnet und mit Bildreferenzdaten, die mit der gleichen Rechenfunktion berechnet wurden, verglichen, um festzustellen, ob eine Manipulation vorlag oder nicht. Dokument-individuelle Bildprüfdaten sind z.B. Prüfdaten, die sich von allen auf gleiche Weise berechneten Prüfdaten aller anderen Dokumente des gleichen Herstellers oder Herausgebers unterscheiden.

Bei der Software- oder Hardwarefunktion kann es sich z.B. um eine Software- oder Hardwarefunktion des Dokumentes oder eines dokumenten-externen Datenverarbeitungsgeräts, z.B. eines Computers oder Computersystems handeln.

Nach Ausführungsformen handelt es sich bei dem Dokument um ein Sicherheitsdokument, insbesondere ein Ausweisdokument. Die Erfassung des digitalen Bildes, die Berechnung der Bildprüfdaten und die Speicherung der Bildprüfdaten erfolgt im Zuge des Prüfens des Dokuments zum Zwecke der Zutritts- oder Zugriffskontrolle bezüglich der das Dokument besitzenden Person erfolgt. Beispielsweise kann das Prüfverfahren von einem Terminal an einem Grenzübergang, einem Bahnhof, einem Flughafen oder am Eingang eines Firmengeländes, eines Gebäudes oder einer anderen Räumlichkeit durchgeführt werden.

Alternativ dazu handelt es sich bei dem Dokument um ein Sicherheitsdokument oder Wertdokument. Die Erfassung des digitalen Bildes, die Berechnung der Bildprüfdaten und die Speicherung der Bildprüfdaten erfolgt zum Zwecke der Echtheitsprüfung des Dokuments.

Nach Ausführungsformen beinhalten die personenbezogenen Daten ein Bild der Person, insbesondere ein Gesichtsbild der Person.

Nach Ausführungsformen umfasst die Berechnung der Bildprüfdaten:

- Unterteilen des Prüfbildes in die Teilbilder gemäß vordefinierter Teilbildgrenzen oder vordefinierter Teilbildgrenzziehungsalgorithmen;

- Für jedes der Teilbilder, Berechnung von Teilbildreferenzdaten durch Anwendung der irreversiblen, informationsverlustbehafteten Rechenfunktion (916) auf die Intensitäten der Pixel innerhalb dieses Teilbildes; und

- Verwendung der Teilbildreferenzdaten der Teilbilder als die Bildprüfdaten.

Nach Ausführungsformen umfasst das Unterteilen des Prüfbildes in die Teilbilder:

- Unterteilen des Prüfbildes in mehrere horizontale oder vertikale Streifen unter Verwendung vordefinierter Streifenbreiten und/oder Streifenpositionen;

- Unterteilen des Prüfbildes in mehrere überlappende oder nicht-überlappende Rechtecke unter Verwendung vordefinierter Rechteckskantenlängen und/oder Rechteckspositionen;

- Durchführung eines Segmentierungsalgorithmus zur Segmentierung des Prüfbildes in die Teilbilder; und

- Unterteilen des digitalen Bildes in Teilbereiche, deren Grenze durch Gesichtsbild-Landmarken definiert werden.

Vorzugsweise erfolgt die Unterteilung gemäß vordefinierter Teilbildgrenzen oder vordefinierter Teilbildgrenzziehungsalgorithmen gemäß Teilbildgrenzen oder mit Hilfe von Teilbildgrenzziehungsalgorithmen, die vorab mit einem System zur Berechnung der Bildreferenzdaten vereinbart wurde. Bei diesem System kann es sich z.B. um ein System zur Herstellung oder Personalisierung oder Registrierung des Dokumentes handeln.

In einem weiteren Aspekt betrifft die Erfindung personenbezogene Daten ein Gesichtsbild der Person beinhalten und wobei die Teilbilder je eine Fläche von 5% bis 20% der Fläche des Gesichtsbildes haben.

Nach Ausführungsformen umfasst das Anwenden der irreversiblen, informationsverlustbehafteten Rechenfunktion auf die Eingabedaten zur Berechnung der Bildprüfdaten folgende Schritte:

- Für die Pixel des Prüfbildes oder für die Pixel jedes der Teilbilder des Prüfbildes, automatische Bestimmung einer Häufigkeitsverteilung der Intensitäten dieser Pixel. Vorzugsweise wird die Häufigkeitsverteilung als klassenweise erfasste Häufigkeit von Pixeln mit einem Intensitätswert innerhalb eines klassenspezifischen Intensitätswertbereiches erfasst. Die Intensitätsverteilung kann also insbesondere eine klassenweise spezifizierte Häufigkeitsverteilung von Intensitäten der Pixel eines Bildes oder Teilbildes sein, wobei jede der Klassen einen kontinuierlichen Teilbereich der möglichen Intensitätswerte der Pixel des digitalen Bildes repräsentiert und wobei für jede Klasse nur die Häufigkeit derjenigen Pixel des Bildes oder Teilbildes erfasst werden, deren Intensität innerhalb dieses Intensitätswertebereichs liegt; eine solche Häufigkeitsverteilung lässt sich z.B. als Histogramm graphisch veranschaulichen; und

- Verwendung der bestimmten Häufigkeitsverteilung oder der Gesamtheit der bestimmten Häufigkeitsverteilungen als die Bildprüfdaten.

Nach alternativen Ausführungsformen umfasst das Anwenden der irreversiblen, informationsverlustbehafteten Rechenfunktion auf die Eingabedaten zur Berechnung der Bildprüfdaten folgende Schritte:

- Für die Pixel des Prüfbildes oder für die Pixel jedes der Teilbilder des Prüfbildes, automatische Erkennung von Position und Erstreckung von Linien durch Analyse der Intensitäten dieser Pixel; und

- Verwendung der erkannten Linien des Prüfbildes oder der Gesamtheit der erkannten Linien der Teilbilder des Prüfbildes als die Bildprüfdaten.

Die Verwendung von Algorithmen zur Erkennung von Linien kann z.B. dann vorteilhaft sein, wenn es sich bei den optisch erfassbaren, personenbezogenen Daten um eine handschriftliche Unterschrift auf dem Dokument handelt.

Nach Ausführungsformen der Erfindung wird die Erfassung des Prüfbildes und die Berechnung der Bildprüfdaten jeweils für eines von mehreren unterschiedlichen Spektralbereichen durchgeführt. Die Spektralbereiche sind ausgewählt aus einer Gruppe umfassend: Infrarotlicht, Licht im sichtbaren Wellenlängenbereich, UV-Licht, und kohärentes Licht einer Wellenlänge, das identisch ist zu der Wellenlänge des zur Erstellung eines holographischen Sicherheitsmerkmals des Dokuments verwendeten Lichts.

Zusätzlich oder alternativ dazu wird die Erfassung des Prüfbildes und die Berechnung der Bildprüfdaten jeweils für eine von mehreren unterschiedlichen Beleuchtungstechnologien durchgeführt. Die Beleuchtungstechnologien sind ausgewählt aus einer Gruppe umfassend: Auflicht, Durchlicht, Beleuchtung des Dokuments mit kohärentem Licht zur Rekonstruktion eines Hologramms.

Vorzugsweise korrespondieren die Spektralbereiche der bei der Erfassung des Prüfbildes verwendeten Lichtquellen und/oder die bei der Erfassung des Prüfbildes verwendete Beleuchtungstechnologien zu denjenigen Spektralbereichen und Beleuchtungstechnologien, die im Zuge der Herstellung oder Personalisierung oder Registrierung des Dokuments für die Erfassung eines digitalen Bildes, aus welchem die Referenzbilddaten dieses Dokuments berechnet wurden, verwendet wurden.

Das Dokument umfasst weitere Daten. Die weiteren Daten sind optisch erfassbare, nicht-personenbezogene Daten, wobei das Prüfbild auch die weiteren Daten abbildet. Das Verfahren umfasst ferner:

- Berechnung von weiteren Prüfdaten durch Anwenden einer weiteren irreversiblen, informationsverlustbehafteten Rechenfunktion auf die weiteren Daten;

- Identifikation von weiteren Referenzdaten, die für das Dokuments in der Datenbank (z.B. verknüpft mit einer Dokument-ID des Dokuments) gespeichert sind; die Berechnung des Ähnlichkeitsindikators umfasst einen Vergleich der weiteren

- Prüfdaten und der identifizierten weiteren Referenzdaten. Die Ähnlichkeit der verglichenen weiteren Prüfdaten und Referenzdaten geht in den Ähnlichkeitsindikator ein.

Die weitere irreversible, informationsverlustbehaftete Rechenfunktion ist vorzugsweise dazu ausgebildet, die weiteren Prüfdaten so zu berechnen, dass der dabei auftretende Informationsverlust maximal so groß ist, dass die für ein bestimmtes Dokument berechneten weiteren Referenzdaten sich von den weiteren Referenzdaten aller anderen Dokumente des gleichen Herstellers oder Herausgebers unterscheiden. In manchen Ausführungsformen ist der dabei auftretende Informationsverlust maximal so groß, dass die für ein bestimmtes Dokument berechneten weiteren Referenzdaten in Kombination mit den weiteren Bildreferenzdaten sich von einer Kombination aus Bildreferenzdaten und weiteren Referenzdaten aller anderen Dokumente des gleichen Herstellers oder Herausgebers unterscheiden.

Die weiteren Daten umfassen ein oder mehrere graphische Elemente. Die graphischen Elemente wurden im Rahmen einer produktionsbedingten Fehlertoleranz in oder auf das Dokument ein- bzw. aufgebracht. Die graphischen Elemente können beispielsweise als eine alphanumerische Symbolsequenz, als ein alphanumerisches Symbol, als ein graphisches Symbol, als ein Staatswappen, als ein Firmenlogo, als ein Hologramm, als ein Sicherheitsstreifen, und/oder als ein optisch erfassbares Sicherheitsmerkmal ausgebildet sein. Die Berechnung der weiteren Prüfdaten umfasst:

- Durchführung einer Bildanalyse zur Bestimmung der Größe und optional zusätzlich auch von Positionsdaten jedes der ein oder mehreren graphischen Elemente auf dem Dokument, wobei die Genauigkeit der Größenbestimmung und der ggf. optional durchgeführten Positionsdatenbestimmung höher ist als die produktionsbedingte Fehlertoleranz; und

- Verwendung der Größen und optional zusätzlich auch der Positionsdaten als die weiteren Referenzdaten. Nach Ausführungsformen umfassen die Bildreferenzdaten

    a) zumindest eine erste Häufigkeitsverteilung von Intensitäten eines digitalen Bildes oder eines Teilbildes des digitalen Bildes umfasst, wobei das digitale Bild zumindest einen Teil des Dokuments zum Zeitpunkt der Herstellung oder Personalisierung abbildet; und wobei die Bildprüfdaten zumindest eine zweite Häufigkeitsverteilung von Intensitäten des Prüfbildes oder eines Teilbildes des Prüfbildes umfasst, wobei der Ähnlichkeitsindikator als Funktion der Ähnlichkeiten der ersten und zweiten Häufigkeitsverteilungen berechnet wird; oder

    b) zumindest erste Linien, die durch Bildanalyse eines digitalen Bildes oder eines Teilbildes des digitalen Bildes erhalten wurden, umfasst, wobei das digitale Bild zumindest einen Teil des Dokuments zum Zeitpunkt der Herstellung oder Personalisierung abbildet; und wobei die Bildprüfdaten zumindest zweite Linien, die durch Bildanalyse des Prüfbildes oder eines Teilbildes des Prüfbildes erhalten wurden, umfasst, wobei der Ähnlichkeitsindikator als Funktion der Ähnlichkeiten der Positionen und Längen der ersten und zweiten Linien berechnet wird.

Gemäß mancher Ausführungsformen gemäß Option a) wird das Verfahren so durchgeführt, dass der Ähnlichkeitsindikator als Funktion der Ähnlichkeiten der Entropien der ersten und zweiten Häufigkeitsverteilungen berechnet wird. Der Ähnlichkeitsindikator kann insbesondere die Kullback-Leibler-Divergenz der Entropien des ersten und zweiten Häufigkeitsverteilungen sein oder ein über die Kullback-Leibler-Divergenzen der Entropien mehrerer (jeweils z.B. für Teilbilder berechneter) erster und zweiter Häufigkeitsverteilungen aggregierter Wert sein.

Gemäß mancher Ausführungsformen gemäß Option b) wird das Verfahren so durchgeführt, dass die Berechnung des Ähnlichkeitsindikators umfasst:

- Ermittlung erster Parameterwerte umfassend die Länge, Position und den Abstand der ersten Linien;

- Ermittlung zweiter Parameterwerte umfassend die Länge, Position und den Abstand der zweiten Linien;

- Berechnen des Ähnlichkeitsindikators als Funktion der Ähnlichkeiten der Entropien des ersten und zweiten Parameter, wobei der Ähnlichkeitsindikator insbesondere die Kullback-Leibler-Divergenz der Entropien des ersten und zweiten Parameter ist oder ein über die Kullback-Leibler-Divergenzen der Entropien mehrerer Mengenpaare an ersten und zweiten Parametern aggregierter Wert ist.

In einem weiteren Aspekt betrifft die Erfindung ein Verfahren, welches umfasst:

- ein Verfahren zur Ermöglichung der Prüfung der Integrität eines Dokuments gemäß einer der hier beschriebenen Ausführungsformen und Beispiele; und

- ein Verfahren zur Prüfung der Integrität eines Dokuments gemäß einer der hier beschriebenen Ausführungsformen und Beispiele.

In einem weiteren Aspekt betrifft die Erfindung ein Computerprogramm, welches dazu konfiguriert ist,

- ein Verfahren zur Ermöglichung der Prüfung der Integrität eines Dokuments gemäß einer der hier beschriebenen Ausführungsformen und Beispiele durchzuführen; und/oder

- ein Verfahren zur Prüfung der Integrität eines Dokuments gemäß einer der hier beschriebenen Ausführungsformen und Beispiele durchzuführen.

In einem weiteren Aspekt betrifft die Erfindung ein System zur Herausgabe, Personalisierung oder Registrierung eines Dokuments, umfassend:

- einen optischen Sensor, der dazu ausgebildet ist, ein digitales Bild von zumindest einem Teil eines Dokuments zu erfassen, wobei das Dokument einer Person zugeordnet ist, wobei das Dokument optisch lesbare, personenbezogene Daten umfasst, wobei das digitale Bild zumindest die personenbezogenen Daten abbildet;

- ein Referenzerstellungs-Computersystem, wobei das Referenzerstellungs-Computersystem ausgebildet ist zur Berechnung von Bildreferenzdaten durch Anwenden einer irreversiblen, informationsverlustbehafteten Rechenfunktion auf Eingabedaten, wobei die Eingabedaten Intensitätsdaten von Pixeln des digitalen Bildes oder Intensitätsdaten von Pixeln von Teilbildern des digitalen Bildes sind, wobei der Informationsverlust mindestens so groß ist, dass die Bildreferenzdaten depersonalisiert sind und maximal so groß ist, dass die Bildreferenzdaten Dokument-individuell sind, wobei das Referenzerstellungs-Computersystem ferner ausgebildet ist zur Berechnung von weiteren Referenzdaten durch Anwenden einer

- weiteren irreversiblen, informationsverlustbehafteten Rechenfunktion auf weitere Daten, wobei das Dokument die weiteren Daten umfasst, wobei die weiteren Daten optisch erfassbare, nicht-personenbezogene Daten sind, wobei das digitale Bild auch die weiteren Daten abbildet, wobei die weiteren Daten ein oder mehrere graphische Elemente umfassen, wobei die graphischen Elemente im Rahmen einer produktionsbedingten Fehlertoleranz in oder auf das Dokument ein- bzw. aufgebracht wurden, wobei die Berechnung der weiteren Referenzdaten umfasst:

- Durchführung einer Bildanalyse zur Bestimmung der Größe und optional zusätzlich auch von Positionsdaten jedes der ein oder mehreren graphischen Elemente auf dem Dokument, wobei die Genauigkeit der Größenbestimmung und der ggf. optional durchgeführten Positionsdatenbestimmung höher ist als die produktionsbedingte Fehlertoleranz; und

- Verwendung der Größen und optional zusätzlich auch der Positionsdaten als die weiteren Referenzdaten;

- eine Datenbank, in welcher die Bildreferenzdaten und die weiteren Referenzdaten verknüpft mit dem Dokument gespeichert sind. Die Verknüpfung kann z.B. explizit über eine Speicherung verknüpft mit der Dokument-ID des Dokuments und/oder implizit durch Speicherung der Bildreferenzdaten in einer dokument-internen Datenbank des Dokuments erfolgen.

Nach Ausführungsformen ist das System zur Herausgabe, Personalisierung oder Registrierung eines Dokuments bzw. dessen Komponenten dazu ausgebildet, ein Verfahren zur Ermöglichung der Integritätsprüfung eines Dokuments gemäß einer der hier beschriebenen Ausführungsformen durchzuführen.

In einem weiteren Aspekt betrifft die Erfindung ein System zur Prüfung der Integrität eines Dokuments, umfassend:

- einen optischen Sensor, der ausgebildet ist zum Erfassen eines Prüfbildes eines Dokuments, wobei das Prüfbild ein digitales Bild von zumindest einem Teil eines Dokuments ist, wobei das Dokument einer Person zugeordnet ist,
- wobei das Dokument optisch lesbare, personenbezogene Daten umfasst, wobei das Prüfbild zumindest die personenbezogenen Daten abbildet;
- ein Prüfsystem, wobei das Prüfsystem ausgebildet ist zur:

- Berechnung von Bildprüfdaten durch Anwenden einer irreversiblen, informationsverlustbehafteten Rechenfunktion auf Eingabedaten, wobei die Eingabedaten Intensitätsdaten von Pixeln des Prüfbildes oder Intensitätsdaten von Pixeln von Teilbildern des Prüfbildes sind, wobei der Informationsverlust mindestens so groß ist, dass die Bildprüfdaten depersonalisiert sind und maximal so groß ist, dass die Bildprüfdaten Dokument-individuell sind (z.B. für alle Dokumente des gleichen Herstellers oder Herausgebers);

- Berechnung von weiteren Bildprüfdaten durch Anwenden einer weiteren irreversiblen, informationsverlustbehafteten Rechenfunktion auf weitere Daten, wobei das Dokument die weiteren Daten umfasst, wobei die weiteren Daten optisch erfassbare, nicht-personenbezogene Daten sind, wobei das Prüfbild auch die weiteren Daten abbildet, wobei die weiteren Daten ein oder mehrere graphische Elemente umfassen, wobei die graphischen Elemente im Rahmen einer produktionsbedingten Fehlertoleranz in oder auf das Dokument ein- bzw. aufgebracht wurden, wobei die Berechnung der weiteren Bildprüfdaten umfasst: Durchführung einer Bildanalyse zur Bestimmung von Positionsdaten und/oder der Größe jedes der ein oder mehreren graphischen Elemente auf dem Dokument, wobei die Genauigkeit der Positionsdatenbestimmung und/oder Größenbestimmung höher ist als die produktionsbedingte Fehlertoleranz und Verwendung der Positionsdaten und/oder der Größen als die weiteren Bildprüfdaten;

- Identifikation von Bildreferenzdaten, die für das Dokument (z.B. verknüpft mit einer Dokument-ID des Dokuments) in einer Datenbank gespeichert sind;

- Identifikation von weiteren Referenzdaten des Dokuments in der Datenbank;

- Berechnung eines Ähnlichkeitsindikators durch Vergleich der Bildprüfdaten und der identifizierten Bildreferenzdaten; wobei die Berechnung des Ähnlichkeitsindikators einen Vergleich der weiteren Bildprüfdaten und der identifizierten weiteren Referenzdaten umfasst und die Ähnlichkeit der verglichenen weiteren Prüfdaten und Referenzdaten in den Ähnlichkeitsindikator eingeht;

- Verwendung des Dokuments und/oder Durchführung einer Software- oder Hardwarefunktion (z.B. des Dokuments oder eines anderen Objekts) nur dann, wenn der Ähnlichkeitsindex einen Mindestwert überschreitet.

Bei der Software- oder Hardwarefunktion kann es sich z.B. um eine Software oder Hardwarefunktion des Dokuments oder einer anderen Entität (Überwachungsanlage, Schließanlage, Computersystem, Fahrzeug, etc.) handeln. Beispielsweise kann die Funktion beinhalten, dass ein Verschluss- oder Verriegelungsmechanismus (Tür, Tor, Schranke, etc.) automatisch geöffnet oder entsperrt wird, sodass einer Person, der ein Dokument zugeordnet ist, dessen Integrität bestätigt wurde, sich Zugriff oder Zutritt zu einem Raum, zu Daten oder zu sonstigen Dingen verschaffen kann.

Bei den Mitteln zur Identifikation von Bildreferenzdaten kann es sich z.B. um eine Prüfsoftware oder Prüfsoftwaremodul handeln, welches Zugriff auf eine dokument-externe Datenbank hat und mittels einer Dokument-ID, z.B. einer Seriennummer, lesend auf die für dieses Dokument in der Datenbank gespeicherten Bildreferenzdaten zugreift. Alternativ dazu kann es sich auch um eine Prüfsoftware oder Prüfsoftwaremodul handeln, die bzw. das dazu konfiguriert ist, auf einen Dokumenten-internen Datenspeicher mit der Datenbank zuzugreifen und die Bildreferenzdaten von dort auszulesen.

Nach Ausführungsformen ist das System zur Prüfung der Integrität eines Dokuments bzw. dessen Komponenten dazu ausgebildet, ein Verfahren zur Prüfung der Integrität eines Dokuments gemäß einer der hier beschriebenen Ausführungsformen durchzuführen.

In einem weiteren Aspekt betrifft die Beschreibung ein System umfassend:

- zumindest ein System zur Herausgabe, Personalisierung oder Registrierung eines Dokuments nach einer der hier beschriebenen Ausführungsformen; und
- ein oder mehrere Systeme zur Prüfung der Integrität des Dokuments nach einer der hier beschriebenen Ausführungsformen.

Unter einem **"Histogramm"** wird hier eine grafische Darstellung der Häufigkeitsverteilung von Datenwerten, insbesondere von kardinal skalierten Datenwerten, verstanden. Die Klassen können eine konstante oder variable Breite haben. Es werden direkt nebeneinanderliegende Rechtecke von der Breite der jeweiligen Klasse gezeichnet, deren Flächeninhalte die (relativen oder absoluten) Klassenhäufigkeiten darstellen. Die Höhe jedes Rechtecks stellt dann die (relative oder absolute) Häufigkeitsdichte dar, also die (relative oder absolute) Häufigkeit dividiert durch die Breite der entsprechenden Klasse.

Unter einer **"klassenweise erfasste Häufigkeit"** von Pixeln eines bestimmten Intensitätswertes wird hier eine Einteilung der Pixel einer Menge von Pixeln in Klassen (englisch "bins") verstanden. Die Klassen können eine konstante oder variable Breite haben. Jede Klasse repräsentiert einen zusammenhängenden Wertebereich von Pixelintensitäten.

Unter einer **"Datenbank"** wird hier ein Container und/oder System zur Speicherung und Verwaltung elektronischer Daten verstanden. Die Datenbank kann Bestandteil des Dokuments sein und speichert dann nur die Bildreferenzdaten dieses Dokuments. Vorzugsweise ist die Datenbank eine dokument-externe Datenbank, die die Bildreferenzdaten und optional auch weitere Referenzdaten für eine Vielzahl von Dokumenten speichert.

Eine Datenbank kann also z.B. als Verzeichnis oder Verzeichnisbaum ausgebildet sein. Vorzugsweise handelt es sich bei einer Datenbank jedoch um ein Datenbanksystem, das dafür ausgebildet ist, große Datenmengen effizient, widerspruchsfrei und dauerhaft zu speichern und benötigte Teilmengen in unterschiedlichen, bedarfsgerechten Darstellungsformen für Benutzer und Anwendungsprogramme bereitzustellen. Nach Ausführungsformen der Erfindung besteht ein Datenbanksystem aus zwei Teilen: der Verwaltungssoftware, genannt Datenbankmanagementsystem (DBMS), und der Menge der zu verwaltenden Daten, der Datenbank (DB) im engeren Sinn, zum Teil auch "Datenbasis" genannt. Die Verwaltungssoftware organisiert intern die strukturierte Speicherung der Daten und kontrolliert alle lesenden und schreibenden Zugriffe auf die Datenbank. Zur Abfrage und Verwaltung der Daten bietet ein Datenbanksystem eine Datenbanksprache an.

Unter einem **"Teilbild"** ist hier ein Teilbereich innerhalb eines digitalen Bildes zu verstehen, wobei der Teilbereich mehrere Pixel umfasst, jedoch weniger Pixel als das digitale Bild. Das Teilbild kann je nach Ausführungsform verschiedene Umrisse haben, z.B. kreisförmig, quadratisch, rechteckig, streifenförmig. Ein Teilbild kann auch einen individuellen, algorithmisch (z.B. per Bildsegmentation) berechneten Umriss haben.

Ein **"Dokument"** ist ein physisches Objekt, zum Beispiel eine papierbasierte oder kunststoffbasierte Karte mit einem Chip, die die Identität oder eine Eigenschaft oder ein Recht des Inhabers des Dokuments nachweist. Ein Dokument kann insbesondere ein Wert- oder Sicherheitsdokument sein. Ein Identitätsdokument ist ein Dokument, welches Angaben bezüglich der Identität seines Besitzers (Name, Adresse, Gesichtsbild, Unterschrift, etc.) beinhaltet. Ein Identitätsdokument kann zum Beispiel einen Personalausweis, ein Reisepass, ein Mitarbeiterausweis oder ein personalisiertes Wertdokument (zum Beispiel Kreditkarte) sein. Dokumente beinhalten oftmals Sicherheitsmerkmale wie zum Beispiel Gesichtsbilder, Hologramme, Prüfzahlen, kryptographische Schlüssel oder dergleichen.

Unter einem **"optischen Sensor"** wird hier ein Sensor bezeichnet, welcher dazu ausgebildet ist, ein oder mehrere Bilder eines physischen Objekts, z.B. eines Dokuments oder eines Teils eines Dokuments, zu erfassen. Die Bilder können insbesondere digitale Bilder sein. Der optische Sensor kann z.B. eine Kamera oder eine Videokamera sein. Der optische Sensor kann z.B. dazu ausgebildet sein, selektiv Licht eines bestimmten Wellenlängenbereichs zu erfassen, z.B. Infrarotlicht (IR-Licht) oder Licht im für das menschliche Auge sichtbaren Wellenlängenbereich (Weißlicht, Tageslicht). Die erfassten Bilder werden chemisch oder elektronisch aufgezeichnet. Vorzugsweise handelt es sich bei den erfassten Bildern um digitale Bilder, die elektronisch gespeichert und/oder ein das Bild weiterverarbeitendes System gesendet werden.

Unter einem **"Gesichtsbild"** wird hier ein Bild, insbesondere ein digitales Bild, verstanden, welches das Gesicht einer Person abbildet.

Ein **"digitales Bild"** ist ein Datensatz, in dem Bildinhalte repräsentiert und gespeichert werden. Insbesondere kann es sich bei dem digitalen Bild um einen Datensatz handeln, in dem der Inhalt eines Bildes durch ganze Zahlen repräsentiert wird. Insbesondere kann es sich bei dem digitalen Bild um eine Rastergraphik handeln.

Unter einem **"Ähnlichkeitsindikator"** wird ein Datenwert oder eine Menge von Datenwerten verstanden, welche die Ähnlichkeit (und damit implizit auch die Unähnlichkeit) zweier verglichener Entitäten anzeigen. Beispielsweise kann die Ähnlichkeit zweier Bilder oder Teilbilder gemäß Ausführungsformen der Erfindung als Ähnlichkeit von Häufigkeitsverteilungen von Pixelintensitäten quantifiziert werden. Beispielsweise kann eine Ähnlichkeit von Häufigkeitsverteilungen mittels der relativen Entropie dieser Häufigkeitsverteilungen quantifiziert werde.

Unter einem **"System"** ist hier eine Gesamtheit aus ein oder mehreren Elementen zu verstehen, die in der Lage ist, Daten zu verarbeiten. Beispielsweise kann ein System einen Computer umfassen, oder ein verteiltes Computersystem, das z.B. als Cloud-Computersystem ausgebildet ist. Es ist auch möglich, dass einzelne Komponenten des Systems oder das gesamte System in einer dezidierten Hardware implementiert sind. Beispielsweise kann das Prüfsystem komplett in ein Terminal integriert sein, welches neben einer oder mehreren Kameras auch ein oder mehrere Beleuchtungssysteme und eine Kopie der Datenbank mit den Referenzdaten beinhaltet. Es ist aber auch möglich, dass einzelne Komponenten, wie z.B. die Datenbank, von einer Terminal-externen Komponente bereitgestellt werden, beispielsweise über einen per Netzwerkverbindung mit dem Terminal verbundenen Datenbankserver.

Unter einer **"Server-Computersystem"** wird hier ein verteiltes oder monolithisches Computersystem verstanden, welches mit einem oder mehreren anderen Datenverarbeitungssystemen ("Clients"), z.B. Telekommunikationsgeräten, über ein Netzwerk verbunden ist und Daten und/oder Dienste an diese Clients bereitstellt.

Unter einer **"Registrierung"** wird hier der Vorgang eines Eintragens einer Information in ein Verzeichnis verstanden. Beispielsweise können im Zuge der Herausgabe, Personalisierung eines Dokuments Bildreferenzdaten und optional weitere Referenzdaten für ein bestimmtes Dokument ermittelt werden und in einer Datenbank so gespeichert werden, dass diese dem Dokument eindeutig zugewiesen sind, z.B. durch verknüpfte Speicherung mit einer Dokument-ID dieses Dokuments .

Unter einer **"irreversiblen, informationsverlustbehafteten Rechenfunktion"** wird hier eine Rechenfunktion verstanden, welche dazu ausgebildet ist, Eingangsdaten derart in Ausgabedaten zu transformieren, dass hierbei Information verloren geht und die Transformation nicht rückgängig gemacht werden kann. Es ist also unmöglich, aus den Ausgabedaten die Eingabedaten zu rekonstruieren. Beispielsweise kann die Rechenfunktion beinhalten, die in den Pixeln eines Bildes oder Teilbildes enthaltenen Intensitätswerte in eine Häufigkeitsverteilung von Intensitätswerten zu transformieren. Hierbei geht die Information bezüglich der Position der Intensitätswerte innerhalb des Bildes oder Teilbildes verloren, sodass eine Rekonstruktion des Originals nicht möglich ist. Ein anderes Beispiel ist die Durchführung einer Bildanalyse auf alphanumerischen Symbolen oder anderen graphischen Objekten, um jedes dieser Symbole bzw. graphischen Objekte als Rechteck zu interpretieren und nur die exakte Position dieses Rechtecks zu erfassen und als Ausgabe der Rechenfunktion bereitzustellen, nicht aber den Inhalt (Art des alphanumerischen Zeichens, Intensitätswerte, etc.) des bzw. der Rechtecke.

Unter **"Bildreferenzdaten"** werden hier Daten verstanden, die bei einer Integritätsprüfung als Vergleichsreferenz verwendet werden können und die durch Anwenden einer irreversiblen, informationsverlustbehafteten Rechenfunktion auf ein digitales Bild (oder einen Teil dieses Bildes) gewonnen wurden.

**Kurze Beschreibung der Zeichnung**

Nachfolgend werden Ausführungsformen der Erfindung mit Bezug auf die Zeichnung beschrieben. In der Zeichnung zeigt

Fig. 1A　ein Flussdiagramm eines Verfahrens zur Ermöglichung einer Integritätsprüfung eines Dokuments;

Fig. 1B　ein Flussdiagramm eines Verfahrens zur Durchführung einer Integritätsprüfung eines Dokuments;

Fig. 2　ein Gesichtsbild als Beispiel für optisch erfassbare personenbezogene Daten;

Fig. 3A　ein Histogramm von Pixelintensitäten eines Teilbildes eines Gesichtsbildes zum Zeitpunkt der Herausgabe eines Dokuments;

Fig. 3B　ein Histogramm von Pixelintensitäten eines Teilbildes eines zu einem späteren Prüfzeitpunkt erfassten Bildes des Gesichtsbildes nach Fig. 3A;

Fig. 3C　ein Diagramm mit Intensitätshistogrammen und davon abgeleiteten relativen Entropien als Ähnlichkeitsindikatoren für die Gesichtsbilder nach Fig. 3A und 3B;

Fig. 4A　Gesichtsbilder zweier unähnlicher Gesichter;

Fig. 4B　ein Diagramm mit Intensitätshistogrammen und davon abgeleiteten relativen Entropien als Ähnlichkeitsindikatoren für die ungleichen und unähnlichen Gesichtsbilder 402, 404;

Fig. 4C    ein Balkendiagramm zur Visualisierung des Unterschieds der relativen Entropien je eines Bildpaares mit gleichen und ungleichen (und unähnlichen) Motiven;

Fig. 4D    ein Streudiagramm zur Visualisierung des Unterschieds der relativen Entropien von mehreren Bildpaaren mit gleichen und ungleichen (und unähnlichen) Motiven;

Fig. 5A    Gesichtsbilder zweier ähnlicher Gesichter;

Fig. 5B    ein Balkendiagramm zur Visualisierung des Unterschieds der relativen Entropien je eines Bildpaares mit ähnlichen und unähnlichen Motiven;

Fig. 5C    ein Streudiagramm zur Visualisierung des Unterschieds der relativen Entropien von mehreren Bildpaaren mit gleichen und ungleichen (aber ähnlichen) Motiven;

Fig. 6    Gesichtserkennungs-Landmarken gemäß einer ISO-Norm;

Fig. 7    ein Dokument und die aus dem Dokument abgeleiteten Bildreferenzdaten und weiterer Referenzdaten;

Fig. 8    ein Diagramm eines Systems zur Ermöglichung der Integritätsprüfung eines Dokuments;

Fig. 9    ein Diagramm eines Systems zur Integritätsprüfung eines Dokuments.

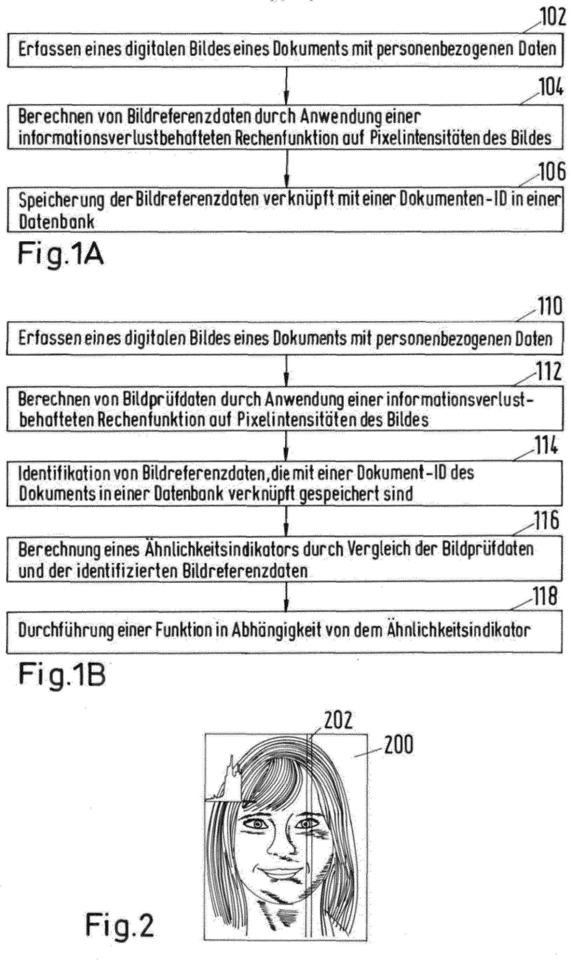

**Figur 1A** illustriert ein exemplarisches Flussdiagramm einer Ausgestaltung des erfindungsgemäßen Verfahrens zur Ermöglichung einer Integritätsprüfung eines Dokuments.

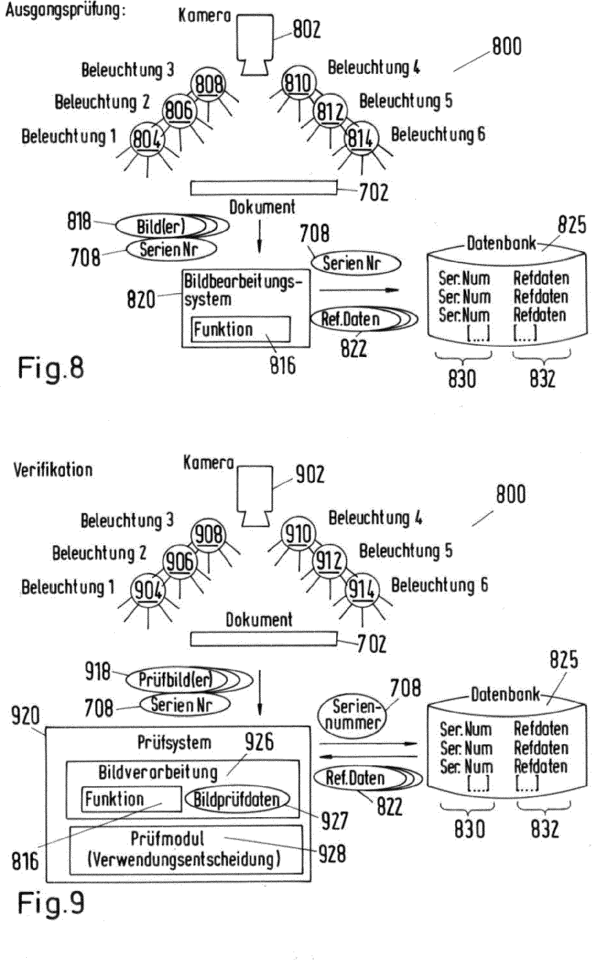

Das Verfahren kann beispielsweise im Zuge der Herstellung (Herausgabe), Personalisierung und/oder Registrierung eines Dokumentes durchgeführt werden. Das Verfahren kann beispielsweise von den Komponenten eines Systems 800 wie in Figur 8 gezeigt durchgeführt werden. Im Folgenden wird daher das Verfahren gemäß Figur 1A in Kombination mit dem System gemäß Figur 8 beschrieben.

**Figur 8** zeigt ein System 800 zur Ermöglichung der Prüfung der Integrität eines Dokumentes 702.

Das System 800 kann beispielsweise von dem Hersteller oder Herausgeber des Dokuments oder von einer Registrierungsinstanz für das Dokument betrieben werden.

Beispielsweise kann es sich bei dem Dokument um einen Personalausweis handeln, auf welchem verschiedene Sicherheitsmerkmale wie zum Beispiel Hologramme aufgebracht sind. Außerdem kann das Dokument optisch lesbare, personenbezogene Daten wie zum Beispiel ein Gesichtsbild der Person, für welchen der Personalausweis ausgestellt wird, enthalten. Üblicherweise beinhalten Personalausweise und andere personalisierte Dokumente auch weitere optisch erfassbare Daten, wie zum Beispiel Ausweisnummer, einen Hinweis auf den Herausgeber (zum Beispiel ein Staat, eine Firma oder eine sonstige Organisation), das Herausgabedatum, eine Dokumentennummer, Name und Anschrift und sonstige personenbezogene Daten der Person sowie in manchen Fällen eine Unterschrift. Die Unterschrift kann zum Beispiel manuell im Zuge der Herausgabe auf ein zur dauerhaften Aufnahme von Tinte geeignetes Beschriftungsfeld aufgebracht werden oder maschinell auf oder in das Dokument gedruckt werden, falls die Unterschrift in Form eines gescannten Bildes vorliegt.

Stände, Werte, Staatswappen und Firmenlogos, die ebenfalls häufig auf Dokumenten aufgedruckt sind, sind keine personenbezogenen Daten oder Inhalte, aus denen Personendaten zurückgewonnen werden können.

Das System 800 umfasst eine Kamera 802 und ein oder mehrere Beleuchtungssysteme 804-814. Beispielsweise kann das Beleuchtungssystem 804 eine Weißlichtquelle sein, Beleuchtungssystem 806 eine Infrarotlichtquelle, Beleuchtungssystem 808 eine UV-B-Lichtquelle, und/oder Beleuchtungssystem 810 ein Laser zur Erzeugung von kohärentem Licht einer bestimmten Wellenlänge, die geeignet ist, ein Hologramm des Dokuments zu rekonstruieren, sein. Die Kamera 802 kann eine Kamera sein, die einen sehr breiten Spektralbereich abdeckt um Licht in Wellenlängenbereich von ein oder mehr verschiedenen Beleuchtungsquellen zu erfassen. Es ist jedoch auch möglich, dass die Kamera 802 eine Kombination aus mehreren verschiedenen Kameras darstellt, wobei jede dieser verschiedenen Kameras in verschiedenen Wellenlängenbereichen sensitiv ist.

Beispielsweise kann ein fertig hergestelltes und durch Anbringung der personenbezogenen optisch lesbaren Daten fertig personalisiertes Dokument automatisch oder manuell auf eine Trägerplatte überführt werden. Eine Kamera 802, die in einem vordefinierten Abstand von dem Dokument 702 auf der Trägerplatte angebracht ist, erfasst in Schritt 102 ein Bild des von ein oder mehreren der Beleuchtungsquellen 804-814 bestrahlten Dokumentes, wobei das Bild das Dokument ganz oder zumindest teilweise abdeckt, sodass das digitale Bild zumindest einige der optisch erfassbaren, personenbezogenen Daten, abbildet.

In manchen Ausführungsformen sind Kamera und Beleuchtungsquellen und Dokument so relativ zueinander angeordnet, dass die erfassten digitalen Bilder eine Aufsicht des von einer der Beleuchtungsquellen beleuchteten Dokuments abbilden. In anderen Ausführungsformen kann alternativ oder zusätzlich dazu diese oder eine andere Kamera und Beleuchtungsquelle relativ zu dem Dokument so angeordnet sein, dass das oder die erfassten digitalen Bilder eine Durchsicht des von einer der Beleuchtungsquellen beleuchteten Dokumentes abbilden. Beispielsweise kann der Dokumentenkörper und die Trägerplatte transparent sein und die Beleuchtungsquelle und die Kamera an verschiedenen Seiten des Dokumentes angeordnet sein.

Das System beinhaltet einen Bildverarbeitungssystem 820, das dazu ausgebildet ist, die von der Kamera 802 erfassten ein oder mehreren digitalen Bilder des Dokumentes 702 zu empfangen und zu verarbeiten. Im Folgenden wird die Verarbeitung des empfangenen digitalen Bildes für ein Bild in einem bestimmten Spektralbereich (zum Beispiel Weißlicht, erfasst innerhalb eines einzigen, monochromen Kanals) beschrieben. In einigen Ausführungsformen werden die entsprechenden Schritte jedoch für mehrere digitale Bilder des Dokumentes, die jeweils in unterschiedlichen Spektralbereichen und/oder unter Verwendung verschiedener Beleuchtungstechnologien (Auflicht oder Durchlicht) erfasst wurden, jeweils pro erfassten digitalen Bild durchgeführt.

Das erfasste digitale Bild 818 wird an das Bildverarbeitungssystem 820 übermittelt. Zusätzlich wird eine Dokumenten-ID des Dokumentes an das Bildverarbeitungssystem übermittelt oder das Bildverarbeitungssystem ist dazu konfiguriert, die Dokumenten-ID selbst automatisch zu erkennen, zum Beispiel durch eine Bildanalyse des digitalen Bildes. Bei der Dokumenten-ID handelt es sich um einen eindeutigen Identifikator des Dokuments 702 innerhalb der Gesamtheit der von einem bestimmten Herausgeber oder Personalisierer oder Registrierer herausgegebenen, personalisierten oder registrierten Dokumente. Beispielsweise kann es sich bei der Dokumenten-ID um eine Seriennummer handeln, die auf dem Dokument aufgedruckt ist und durch Bildanalyse ermittelt wird. Es kann sich jedoch auch um eine Dokumenten-ID handeln, die über RFID Technologie oder andere Verfahren automatisch vom Dokument erfasst oder anderweitig erhalten werden.

Das Bildverarbeitungssystem 820 beinhaltet eine irreversible, informationsverlustbehaftete Rechenfunktion 816. In Schritt 104 wird diese Rechenfunktion auf Pixelintensitäten des Bildes angewandt, um Bildreferenzdaten zu erhalten, die einerseits depersonalisiert sind (also keine Information mehr beinhalten, die eine Identifikation einer bestimmten Person ermöglichen oder die eine Rekonstruktion einer solchen Information erlauben), und die andererseits immer noch hinreichend eindeutig für das Dokument sind, dass eine das Dokument auf Integritätsprüfung der Instanz in der Lage ist, zu erkennen, ob dieses Dokument bzw. die darin enthaltenen optisch erfassbaren personenbezogenen Daten auch nur geringfügig manipuliert wurde.

Das Bildverarbeitungssystem speichert in Schritt 106 die berechneten, depersonalisierten Bildreferenzdaten verknüpft mit der Dokumenten-ID, zum Beispiel der Seriennummer des Dokuments, in einer Datenbank 825. Die Datenbank beinhaltet eine Vielzahl von Datensätzen, die jeweils eine Kombination aus einer Dokumenten-ID 830 und depersonalisierten Bildreferenzdaten 832 beinhalten. Jeder dieser Datensätze wurde gemäß des hier beschriebenen Verfahrens auf Basis von ein oder mehreren digitalen Bildern, die ein dem jeweiligen Datensatz eindeutig zugeordnetes Dokument ganz oder teilweise abbilden, gewonnen. Die Daten der Datenbank 825 stellen somit die Grundlage dafür da, dass eine Prüfinstanz, wie zum Beispiel in Figur 9 abgebildet, jedes der von dem Betreiber des Systems 800 herausgegebenen, personalisierten und/oder registrierten Dokumente daraufhin prüfen kann, dass das Dokument bzw. zumindest die auf diesem abgebildeten personenbezogenen optisch erfassbaren Daten nicht manipuliert wurden. Eine zentrale Speicherung sensibler, personenbezogener Daten ist hierbei nicht nötig und nicht vorgesehen.

Die Datenbank 825 beinhaltet auch weitere Referenzdaten, die nicht aus personenbezogenen Daten sondern aus grafisch erfassbaren Merkmalen des Dokuments gewonnen wurden, und die bei der Prüfung ebenfalls berücksichtigt werden, um die Exaktheit des Prüfverfahrens zu verbessern.

**Figur 1B** ein Flussdiagramm eines Verfahrens zur Durchführung einer Integritätsprüfung eines Dokuments.

Das Verfahren kann beispielsweise von einem Terminal oder einem ein Terminal beinhaltendes System durchgeführt werden. Beispielsweise kann das Verfahren an Ländergrenzen, an Flughäfen, an Bahnhöfen, an Eingängen zu Firmengeländen und Gebäuden oder an Eingängen zu einzelnen Räumlichkeiten durchgeführt werden, zum Beispiel zur Zutrittskontrolle oder Zugriffskontrolle. Es ist auch möglich, dass das Verfahren im Zuge einer Autorisierung einer Person, die sich mit dem Dokument ausweist, erfolgt wobei der Person nur dann Zugriff auf eine bestimmte Hardware oder Softwarefunktion gewährt wird, wenn die Prüfung des Dokumentes ergibt, dass dieses nicht manipuliert wurde (integer ist).

Das Verfahren kann beispielsweise von den Komponenten eines Systems 900 wie in Figur 9 gezeigt durchgeführt werden. Im Folgenden wird daher das Verfahren gemäß Figur 1B in Kombination mit dem System gemäß Figur 9 beschrieben.

**Figur 9** zeigt ein System 900 zur Prüfung der Integrität eines Dokumentes 702.

Das System 900 kann beispielsweise vom Grenzschutz an Ländergrenzen oder an Flughafenterminals betrieben werden. Beispielsweise kann es sich bei dem Dokument 702 um einen Personalausweis handeln, wie dieser unter Bezug auf Figur 8 bereits beschrieben wurde.

Das System 900 umfasst eine Kamera 902 und ein oder mehrere Beleuchtungssysteme 904-914. Beispielsweise kann das Beleuchtungssystem 904 eine Weißlichtquelle sein, Beleuchtungssystem 906 eine Infrarotlichtquelle, Beleuchtungssystem 908 eine UV-B-Lichtquelle, und/oder Beleuchtungssystem 910 kann ein Laser zur Erzeugung von kohärentem Licht einer bestimmten Wellenlänge, die geeignet ist, ein Hologramm des Dokuments zu rekonstruieren, sein. Die Kamera 902 kann eine Kamera sein, die einen sehr breiten Spektralbereich abdeckt um Licht in Wellenlängenbereich von ein oder mehr verschiedenen Beleuchtungsquellen zu erfassen. Es ist jedoch auch möglich, dass die Kamera 902 eine Kombination aus mehreren verschiedenen Kameras darstellt, wobei z.B. jede dieser verschiedenen Kameras in verschiedenen Wellenlängenbereichen sensitiv ist und/oder unterschiedlich relativ zum Dokument positioniert ist.

Beispielsweise kann eine Person, die sich mit ihrem Personalausweis 702 Zugang oder Zutritt zu einem bestimmten Bereich verschaffen will, den Personalausweis einem Grenzpolizisten oder einer sonstigen den Zugang zu dem Bereich kontrollierenden Person vorlegen. Sicherheitspersonal ist zwar in der Regel dahingehend geschult, Gesichtsbilder auf Pässen und anderen Dokumenten mit dem realen Gesicht der Person vor Ort abzugleichen, jedoch sind gewisse Abweichungen nicht zu vermeiden, wenn man bedenkt, dass die meisten Ausweisdokumente eine Gültigkeit von mehreren Jahren haben. In diesem Zeitraum können sich Gesichtsausdrücke deutlich ändern, und selbstverständlich können diese Änderungen durch Gewichtszunahme, Gewichtsverlust, eine neue Frisur, ein neuer/anderer Bart auch erheblich ausfallen. Eine reine Sichtprüfung von dem Gesichtsbild auf dem Dokument und dem Gesichtsbild der realen Person ist also ungenügend. Außerdem besteht die Gefahr, dass das Dokument möglicherweise manipuliert ist, also nachträglich mit einem Gesichtsbild einer anderen Person versehen wurde als auf dem ursprünglich herausgegebenen Dokument aufgedruckt war. Umso vorteilhafter wäre es, wenn es zumindest ein verlässliches Prüfverfahren gäbe, das auf schnelle und verlässliche Weise feststellen könnte, ob ein Dokument, das möglicherweise vor Jahren für eine bestimmte Person herausgegeben oder personalisiert wurde, auch heute noch genau diese Person so abbildet, wie sie zum Zeitpunkt der Herausgabe oder Personalisierung des Dokumentes aussah.

Das Sicherheitspersonal oder der Besitzer des Dokuments positioniert das Dokument in einer bestimmten, vordefinierten Positionen relativ zu der Kamera 902. Beispielsweise kann der Besitzer oder das Sicherheitspersonal das Dokument in einen automatischen Einzug eines Terminals eingeben oder auf eine Trägerplatte überführen.

Die Kamera 902, die in einem vordefinierten Abstand von dem Dokument 702 positioniert ist, erfasst in Schritt 110 ein Prüfbild 918 des von ein oder mehreren der Beleuchtungsquellen 904-914 bestrahlten Dokumentes, wobei das Prüfbild das Dokument ganz oder zumindest teilweise abdeckt, sodass das Prüfbild zumindest einige der optisch erfassbaren, personenbezogenen Daten, abbildet.

In manchen Ausführungsformen sind Kamera 902, und Beleuchtungsquellen 904-914 und Dokument 702 so relativ zueinander angeordnet, dass die erfassten digitalen Prüfbilder eine Aufsicht des von einer der Beleuchtungsquellen beleuchteten Dokuments abbilden. In anderen Ausführungsformen kann alternativ oder zusätzlich dazu diese oder eine andere Kamera und Beleuchtungsquelle relativ zu dem Dokument so angeordnet sein, dass das oder die erfassten digitalen Prüfbilder eine Durchsicht des von einer der Beleuchtungsquellen beleuchteten Dokumentes abbilden. Beispielsweise kann der Dokumentenkörper und die Trägerplatte transparent sein und die Beleuchtungsquelle und die Kamera an verschiedenen Seiten des Dokumentes angeordnet sein.

Das System beinhaltet einen Bildverarbeitungssystem 926, das dazu ausgebildet ist, die von der Kamera 902 erfassten ein oder mehreren Prüfbilder 918 des Dokumentes 702 zu empfangen und zu verarbeiten. Im Folgenden wird die Verarbeitung des empfangenen digitalen Bildes für ein Prüfbild in einem bestimmten Spektralbereich (zum Beispiel Weißlicht, erfasst innerhalb eines einzigen, monochromen Kanals) beschrieben. In einigen Ausführungsformen werden die entsprechenden Schritte jedoch für mehrere digitale Bilder des Dokumentes, die jeweils in unterschiedlichen Spektralbereichen und/oder unter Verwendung verschiedener Beleuchtungstechnologien (Auflicht oder Durchlicht) erfasst wurden, jeweils pro erfassten Prüfbild durchgeführt.

Das erfasste Prüfbild 918 wird an ein Prüfsystem 920 übermittelt, welches ein Bildverarbeitungssystem 926 enthält. Das Prüfsystem 920 kann z.B. ein Terminal sein oder ein Standardcomputer oder ein anderer Typ eines Datenverarbeitungsgerätes oder Datenverarbeitungssystems. Zusätzlich wird eine Dokumenten-ID des Dokumentes an das Bildverarbeitungssystem übermittelt oder das Bildverarbeitungssystem ist dazu konfiguriert, die Dokumenten-ID selbst automatisch zu erkennen, zum Beispiel durch eine Bildanalyse des digitalen Prüfbildes. Bei der Dokumenten-ID handelt es sich um einen eindeutigen Identifikator des Dokuments 702 innerhalb der Gesamtheit der von einem bestimmten Herausgeber oder Personalisierer oder Registrierer herausgegebenen, personalisierten oder registrierten Dokumente. Beispielsweise kann es sich bei der Dokumenten-ID um eine Seriennummer handeln, die auf dem Dokument aufgedruckt ist und durch Bildanalyse ermittelt wird. Es kann sich jedoch auch um eine Dokumenten-ID handeln, die über RFID Technologie oder andere Verfahren automatisch vom Dokument durch eine Komponente des Systems 900 erfasst oder anderweitig erhalten werden.

Das Bildverarbeitungssystem 926 beinhaltet eine irreversible, informationsverlustbehaftete Rechenfunktion 816, die identisch ist zu der von dem Bildverarbeitungssystem 820 verwendeten Rechenfunktion. In Schritt 112 wird diese Rechenfunktion auf Pixelintensitäten des Prüfbildes angewandt, um Bildprüfdaten 927 zu berechnen, die einerseits depersonalisiert sind (also keine Information mehr beinhalten, die eine Identifikation einer bestimmten Person ermöglichen oder die eine Rekonstruktion einer solchen Information erlauben), und die andererseits vorzugsweise dennoch eindeutig für das Dokument sind.

In Schritt 114 ermittelt das Prüfsystem 920 in Interaktion mit einer Datenbank 825 einen Datensatz, dem die Dokumenten-ID eindeutig zugeordnet ist. Bei der Datenbank 825 kann es sich z.B. um die in Figur 8 beschriebene Datenbank handeln, die eine Vielzahl von dokumentenspezifischen Datensätzen beinhaltet, wobei jeder Datensatz zumindest eine Dokument-ID und Bildreferenzdaten des durch die Dokument-ID identifizierten Dokuments beinhaltet. Beispielsweise kann die Datenbank 825 über ein Netzwerkt, z.B. das Internet, kommunikativ an das Prüfsystem gekoppelt sein, sodass das Prüfsystem eine Anfrage mit der Dokument-ID des Dokuments 702 an den Datenbankserver senden kann, der die Datenbank 825 beinhaltet, und in Antwort auf die Anfrage den Datensatz, dem diese Dokumenten-ID spezifisch zugeordnet ist, erhält. Der Datensatz beinhaltet die Bildreferenzdaten 822, die das System 800 spezifisch für das Dokument 702 berechnet hat.

Das Bildverarbeitungssystem vergleicht in Schritt 116 die berechneten, depersonalisierten Prüfdaten des Dokuments 702 mit den für dieses Dokument spezifisch in der Datenbank 825 gespeicherten und von dieser Datenbank bezogenen Bildreferenzdaten. Der Vergleich erfolgt, um einen Ähnlichkeitsindikator für das (oder die) aktuell ermittelte(n) Prüfbild(er) zu berechnen. Beispielsweise können die Bildprüfdaten bzw. die Bildreferenzdaten aus Häufigkeitsverteilungen von Pixelintensitäten innerhalb bestimmter Teilbilder des Prüfbildes bzw. des bei der Herausgabe, Personalisierung oder Registrierung erfassten digitalen Bildes bestehen. Der Ähnlichkeitsindikator kann als relative Entropie dieser beiden Häufigkeitsverteilungen berechnet werden.

Die Berechnung des Ähnlichkeitsindikators kann mehrfach für mehrere unterschiedliche Prüfbilder unter Verwendung unterschiedlicher Bildreferenzdaten des Dokuments durchgeführt werden, wobei jeweils unterschiedliche Spektralbereiche und/oder Beleuchtungstechnologien für die Beleuchtung des Dokuments verwendet wurden. In diesem Fall kann als ein zusätzlicher Schritt ein aggregierter Ähnlichkeitsindikator durch Aggregierung aller für ein bestimmtes Dokument berechneter Ähnlichkeitsindikatoren berechnet werden. Diese Berechnung kann z.B. in einer Summierung bestehen oder in der Berechnung eines geometrischen oder arithmetischen Mittelwerts.

Übersteigt der Ähnlichkeitsindikator oder der aggregierte Ähnlichkeitsindikator einem vordefinierten Wert, wird das Dokument vom Prüfsystem als integer (nicht manipuliert) behandelt. Andernfalls wird das Dokument vom Prüfsystem als manipuliert angesehen und behandelt.

Die Datenbank beinhaltet eine Vielzahl von Datensätzen, die jeweils eine Kombination aus einer Dokumenten-ID 830 und depersonalisierten Bildreferenzdaten 832 beinhalten. Jeder dieser Datensätze wurde gemäß des hier beschriebenen Verfahrens auf Basis von ein oder mehreren digitalen Bildern, die ein dem jeweiligen Datensatz eindeutig zugeordnetes Dokument ganz oder teilweise abbilden, gewonnen. Die Daten der Datenbank 825 stellen somit die Grundlage dafür da, dass eine Prüfinstanz, wie zum Beispiel in Figur 9 abgebildet, jedes der von dem Betreiber des Systems 800 herausgegebenen, personalisierten und/oder registrierten Dokumente daraufhin prüfen kann, dass das Dokument bzw. zumindest die auf diesem abgebildeten personenbezogenen optisch erfassbaren Daten nicht manipuliert wurden. Eine zentrale Speicherung sensibler, personenbezogener Daten ist hierbei nicht nötig und nicht vorgesehen.

In Schritt 118 führt das Prüfsystem eine Hard- oder Softwarefunktion des Dokuments oder eines anderen Objekts oder Systems in Abhängigkeit von dem Ähnlichkeitsindikator oder aggregierten Ähnlichkeitsindikator aus. Beispielsweise kann das Prüfsystem ein Prüfmodul 928 enthalten, welches dazu konfiguriert ist, das Ergebnis des Vergleichs auf einem Display des Prüfsystems ausgeben um das Sicherheitspersonal dazu zu veranlassen, die Person durchzulassen oder den Zutritt zu verwehren. Es ist aber auch möglich, dass das Prüfsystem z.B. automatisch eine Tür oder sonstige Schließvorrichtung öffnet oder freigibt, sollte der (aggregierte) Ähnlichkeitsindikator den Grenzwert überschreiten, und diese Aktion zu unterlassen, wenn der (aggregierte) Ähnlichkeitsindikator den Grenzwert unterschreitet.

Die Datenbank 825 beinhaltet auch weitere Referenzdaten, die nicht aus personenbezogenen Daten sondern aus grafisch erfassbaren Merkmalen des Dokuments gewonnen wurden, und die bei der Prüfung ebenfalls berücksichtigt werden, um die Exaktheit des Prüfverfahrens zu verbessern.

**Figur 2** zeigt ein Gesichtsbild 200 als Beispiel für optisch erfassbare personenbezogene Daten. Gesichtsbilder sind häufig verwendete Beispiele, aber nicht die einzig mögliche Form von optisch erfassbaren, personenbezogenen Daten auf personalisierten Dokumenten. Neben Gesichtsbildern können zum Beispiel Bilder von Fingerabdrücken, Irisbilder, Unterschriften oder dergleichen verwendet werden. Die Anmelderin hat jedoch beobachtet, dass das Verfahren, insbesondere Ausführungsformen, die relative Entropien auf Basis von Häufigkeitsverteilungen von Pixelintensitäten räumlich korrespondierende Teilbilder berechnen, besonders geeignet für personenbezogene Daten in Form von Gesichtsbildern sind.

Vorzugsweise sind Größe, Position und/oder die Ermittlung der Teilbilder bzw. der Teilbildgrenzen zwischen einem für die Herausgabe, Personalisierung und/oder Registrierung von Dokumenten verwendeten System 800 und einem System 900 zur Integritätsprüfung vereinbart. Beispielsweise kann die Vereinbarung darin bestehen, das vom System 800 erfasste digitale Bild 818 bzw. das vom System 900 erfasste Prüfbild 918 in vertikale Streifen 202 vordefinierter Breite zu zerlegen und für jeden dieser Streifen bzw. Teilbilder eine klassenbasierte Häufigkeitsverteilung der Pixelintensitäten zu ermitteln, wobei jede Klasse für einen Intensitätsbereich steht.

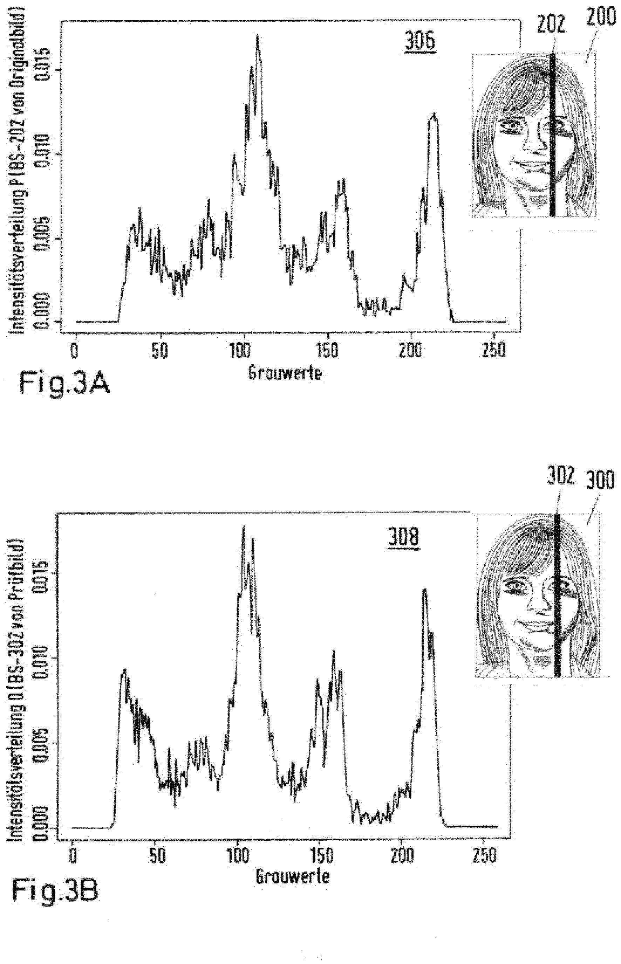

**Figur 3A** zeigt ein Histogramm 306 von Pixelintensitäten eines Teilbildes 202 eines Gesichtsbildes 200 zum Zeitpunkt der Herausgabe eines Dokuments 702. Bei dem Bild 200 handelt es sich um ein monochromatisches Bild (Pixelintensitäten sind Grauwerte). Die Intensitätswerte der Pixel des Bildes 200 können Werte zwischen 0 und 255 einnehmen. In dem hier gezeigten Beispiel wird ein Histogramm 306 der Pixelintensitäten gezeigt, die innerhalb des einen vertikalen Streifens 202 innerhalb des Bildes 200 ermittelt wurden. Der Streifen 202 ist jedoch nur ein Teilbild von einer Vielzahl an Teilbildern, die dadurch erzeugt werden, dass das Bild in aneinander angrenzende vertikale Streifen gleicher Breite zerlegt wird. Für jedes dieser anderen Teilbilder bzw. Streifen wird ebenfalls eine Häufigkeitsverteilung der Pixelintensitäten ermittelt (hier nicht gezeigt).

Das in Figur 3A gezeigte Histogramm ist ein Beispiel für eine sehr feingranulare, klassenbasierte Häufigkeitsverteilung, gemäß welcher jeder ganzzahligen Intensitätswert einer entsprechenden Klasse (bin) entspricht. D. h., wenn der Wertebereich der möglichen Pixelintensitäten eine Skala von 0 bis 255 abdeckt gibt es 256 verschiedene Klassen. Für jede der Klassen wird ermittelt, wie häufig ein Pixel in dem Teilbild 202 vorkommt, dass einen Intensitätswert hat, der von dieser Klasse repräsentiert wird.

In anderen Ausführungsformen erfolgt die automatische Ermittlung der klassenbasierte Häufigkeitsverteilung grobgranularer. Beispielsweise kann jede Klasse einen Intensitätsbereich von 5 Einheiten abdecken. In diesem Fall gäbe es nicht 256 Klassen sondern nur 52 Klassen. Würden pro Klasse zehn Intensitätseinheiten abgedeckt, würde das Histogramm 306 lediglich 26 Klassen bzw. Balken darstellen. Vorzugsweise wird die klassenbasierte Häufigkeitsverteilung so ermittelt, dass jede Klasse maximal zehn Intensitätseinheiten, vorzugsweise maximal 5 Intensitätseinheiten, bei einer Intensitätsskala von 0-255 aufweist.

Bei dem Histogramm 306 handelt es sich um eine Visualisierung einer klassenbasierten Häufigkeitsverteilung von Pixelintensitäten innerhalb eines Teilbildes 202, die zum Beispiel als Zwischenergebnis von der irreversiblen, informationsverlustbehafteten Rechenfunktion 816 des Bildverarbeitungssystem 820 berechnet wird. Die klassenbasierten Häufigkeitsverteilungen sämtlicher Teilbilder und/oder von diesen Häufigkeitsverteilung in abgeleitete Werte (Entropie) können als Bildreferenzdaten in einer Datenbank gespeichert werden.

**Figur 3B** zeigt ein Histogramm 308 von Pixelintensitäten eines Teilbildes 302 eines Gesichtsbildes 300 zu einem Zeitpunkt nach der Herausgabe des Dokuments 702, der hier als "Prüfzeitpunkt" bezeichnet wird. Beispielsweise kann der Prüfzeitpunkt der Zeitpunkt sein, an dem die Person, für die das Dokument ausgestellt bzw. personalisiert wurde, sich mithilfe dieses Dokuments gegenüber einer Behörde oder anderen Instanz authentifizieren möchte.

Bei dem Bild 300 handelt es sich um ein monochromatisches Bild (Pixelintensitäten sind Grauwerte). Die Intensitätswerte der Pixel des Bildes 300 können Werte zwischen 0 und 255 einnehmen. In dem hier gezeigten Beispiel wird ein Histogramm 308 der Pixelintensitäten gezeigt, die innerhalb des einen vertikalen Streifens 302 innerhalb des Bildes 300 ermittelt wurden. Der Streifen 302 ist jedoch nur ein Teilbild von einer Vielzahl an Teilbildern, die dadurch erzeugt werden, dass das Bild 300 in aneinander angrenzende vertikale Streifen gleicher Breite zerlegt wird. Für jedes dieser anderen Teilbilder bzw. Streifen wird ebenfalls eine Häufigkeitsverteilung der Pixelintensitäten ermittelt (hier nicht gezeigt).

Das in Figur 3B gezeigte Histogramm ist ein Beispiel für eine sehr feingranulare, klassenbasierte Häufigkeitsverteilung, gemäß welcher jeder ganzzahligen Intensitätswert einer entsprechenden Klasse (bin) entspricht. In anderen Ausführungsformen erfolgt die automatische Ermittlung der klassenbasierte Häufigkeitsverteilung grobgranularer. Beispielsweise kann jede Klasse einen Intensitätsbereich von 5 Einheiten abdecken. In diesem Fall gäbe es nicht 256 Klassen sondern nur 52 Klassen. Würden pro Klasse zehn Intensitätseinheiten abgedeckt, würde das Histogramm 308 lediglich 26 Klassen bzw. Balken darstellen. Vorzugsweise wird die klassenbasierte Häufigkeitsverteilung so ermittelt, dass jede Klasse maximal zehn Intensitätseinheiten, vorzugsweise maximal 5 Intensitätseinheiten, bei einer Intensitätsskala von 0-255 aufweist.

Die Gesichtsbilder 200 und 300 sind leicht unterschiedlich, da die Bilder mit unterschiedlichen Kamerasystemen unter unterschiedlichen Rahmenbedingungen (Umgebungslichts, Streuung, Alter und Typ der Lichtquellen) aufgenommen wurden. Außerdem kann sich das Dokument im Laufe der Zeit minimal verändert haben, zum Beispiel durch altersbedingte Trübungen von kunststoffbasierten Dokument-Schutzschichten etc. für das menschliche Auge sind die Unterschiede der Bilder 200 und 300 kaum wahrnehmbar. Durch Vergleich der Histogramme 306 und 308 wird deutlich, dass die Häufigkeitsverteilung in der Pixel in den räumlich zueinander korrespondierenden Streifen 202 und 302, ähnlich zueinander sind, jedoch nicht identisch.

Bei dem Histogramm 308 handelt es sich um eine Visualisierung einer klassenbasierten Häufigkeitsverteilung von Pixelintensitäten innerhalb eines Teilbildes 302, die zum Beispiel als Zwischenergebnis von der irreversiblen, informationsverlustbehafteten Rechenfunktion 816 des Prüfsystems berechnet wird. Die klassenbasierten Häufigkeitsverteilungen sämtlicher Teilbilder und/oder von diesen Häufigkeitsverteilung in abgeleitete Werte (Entropie) können als Prüfdaten verwendet und im Zuge der Prüfung mit zu diesem Dokument gehörenden Bildreferenzdaten verglichen werden, um den Ähnlichkeitsindikator zu berechnen.

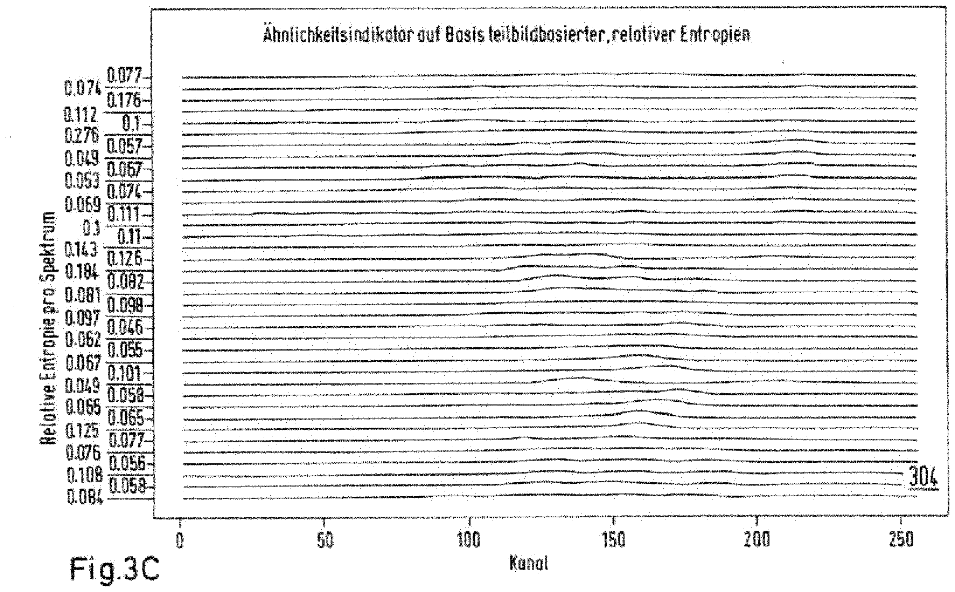

**Figur 3C** zeigt ein Diagramm, das die in Form einer relativen Entropie berechneten-Ähnlichkeitsindikatoren für die 40 Teilbildpaare zweier verglichener Gesichtsbilder 200, 300 nach Fig. 3A und 3B darstellt. Die Bilder 200, 300 zeigen das gleiche Motiv, jedoch mit geringen, technisch durch Varianzen beim Druck und der optischen Erfassung bedingten, Varianzen.

Jede der Zeilen korrespondiert zu einem räumlich korrespondierenden Teilbildpaar, wobei jede Zeile ein Histogramm der Pixelintensitäten ("Grauwerte") eines Teilbilds des ersten Vergleichsbildes in grau und ein Histogramm der Pixelintensitäten ("Grauwerte") eines Teilbilds des zweiten Vergleichsbildes in schwarz beinhaltet. Über weite Teile des Spektrums und für weite Teilebereiche des Bildes herrscht Übereinstimmung der beiden Histogramme, sodass nur eine einzige Linie zu erkennen ist, es gibt jedoch auch bestimmte Spektralbereiche und bestimmte Teilbildpaare, wo die schwarze und graue Linie nicht überlappen und unterschieden werden können. Die numerischen Werte im unteren Bereich des Diagramms zeigen die für jedes Teilbildpaar berechneten Ähnlichkeitsindikatoren in Form relativer Entropien der in den beiden Histogrammen visualisierten Pixelintensitätsverteilungen. Je geringer die Abweichungen der verglichenen Grauwertverteilungen, desto geringer der RE Wert und desto höher die Ähnlichkeit.

Die Ähnlichkeitsindikatoren werden von dem Prüfsystem im Zuge der Prüfung berechnet. Die Berechnung umfasst gemäß Ausführungsformen, dass Häufigkeitsverteilungen von Pixelintensitäten von räumlich korrespondierenden Teilbildern 202, 302 von einem "Ausgabebild" 200 und einem "Prüfbild" 300 des Dokuments miteinander verglichen werden. Jedes Teilbild, also jeder der vordefinierten vertikalen Streifen 202, 302, korrespondiert zu einer horizontalen Linie des Diagramms 304, welches den Ähnlichkeitsindikator repräsentiert. Der Ähnlichkeitsindikator ist also die Gesamtheit der horizontalen Streifen des Diagramms 304, oder ein aus diesen abgeleiteter numerischer Wert.

Der Vergleich erfolgt also vorzugsweise auf der Ebene einzelne Teilbilder, und zwar so, dass nur die Intensität-Häufigkeitsverteilungen räumlich zueinander korrespondierenden Teilbilder miteinander verglichen werden. Beispielsweise können die x- und/oder y Koordinaten, vordefinierte Streifenlängen und Streifenbreiten dafür verwendet werden, räumlich zueinander korrespondierende Teilbilder 202, 302 zu erkennen. Im Zuge der Berechnung der Bildreferenzdaten (im Hinblick auf das erfasste digitale Bild, das "Ausgabebild ") wie auch im Zuge der Berechnung der Prüfdaten (im Hinblick auf das erfasste Prüfbild) werden Häufigkeitsverteilungen der innerhalb der Teilbilder beobachteten Pixelintensitäten berechnet. Insbesondere kann die Berechnung eine Ermittlung von klassenbasierten Häufigkeitsverteilungen erfolgen, die sich als Histogramme darstellen lassen. Die Gesamtheit der für alle Teilbilder des Ausgangsbildes ermittelten Häufigkeitsverteilungen der Intensitäten werden als Bildreferenzdaten in der Datenbank gespeichert.

Im Zuge der Prüfung werden die Häufigkeitsverteilungen der Pixelintensitäten des Ausgabebilds und des Prüfbildes eines Dokuments für jedes Paar von räumlich korrespondierenden Teilbildern des Ausgabebildes und des Prüfbildes miteinander verglichen. Vorzugsweise beinhaltet diese Vergleich, dass für jedes Paar von räumlich korrespondierenden Teilbildern die relative Entropie zwischen den beiden verglichenen Häufigkeitsverteilungen berechnet wird.

Vorzugsweise wird die relative Entropie $RE_{TBi}$ jedes der Teilbildpaare TB als Kullback-Leibler Divergenz berechnet gemäß folgender Formel:

$$RE_{TBi} = \sum_{x \in X} P(x) * \log \frac{P(x)}{Q(x)}$$

- wobei x ein bestimmter Pixelintensitätswert ist, z.B. eine ganze Zahl innerhalb des Wertebereiches 0 bis 255,
- wobei X der gesamte mögliche Intensitätswertebereich ist, z.B. 0 bis 255,
- wobei P die Häufigkeitsverteilung einer bestimmten Pixelintensität (x) innerhalb eines Teilbildes TBi 202 des Ausgangsbildes 200, 818 darstellt),
- wobei Q die Häufigkeitsverteilung einer bestimmten Pixelintensität (x) innerhalb eines räumlich korrespondierenden Teilbildes TBi 302 des Prüfbildes 300, 918 darstellt, und
- wobei i ein konkretes Teilbild aus der Menge aller Teilbilder eines Bildes bezeichnet.

Die relative Entropie "RE" misst hier die Abweichung der Häufigkeitsverteilung Q zu der Häufigkeitsverteilung P. Ein kleiner RE Wert bedeutet eine hohe Übereinstimmung, ein großer RE Wert bedeutet wenig Übereinstimmung bzw. geringe Ähnlichkeit der Häufigkeitsverteilungen (und damit auch der entsprechenden Teilbilder, deren Pixelintensitätshäufigkeiten verglichen wurden).

Gemäß anderer Ausführungsformen kann anstelle der Kullback-Leibler-Divergenz auch eine Kreuzentropie oder andere entropiebasierte Maße für Ähnlichkeiten von Häufigkeitsverteilungen verwendet werden.

Numerische Werte, durch einen Vergleich von Entropien zweier Häufigkeitsverteilungen berechnet werden und die als ein Maß für die Ähnlichkeit dieser Häufigkeitsverteilungen verwendet werden können, werden hier als "relative Entropien" bezeichnet. Gemäß Ausführungsformen wird der im Zuge der Prüfung berechnete Ähnlichkeitsindikator in Form von einem oder mehreren relativen Entropien berechnet. Die Berechnung kann auf einem Vergleich der Entropien der Pixelintensitätsverteilung innerhalb des gesamten Ausgabebildes bzw. Prüfbildes erfolgen. Vorzugsweise erfolgt die Berechnung der relativen Entropien jedoch jeweils für Paare von räumlich korrespondierenden Teilbildern.

Gemäß Ausführungsformen der Erfindung wird ein Gesamt-Ähnlichkeitsindikator für die beiden verglichenen Bilder mit optisch erfassbaren personenbezogenen Daten durch Aggregation sämtlicher berechneter Ähnlichkeitsindikatoren (RE Werte der Teilbildpaare) berechnet. Der Gesamt-Ähnlichkeitsindikator kann z.B. als geometrischer oder arithmetischer Mittelwert über die REs der verglichenen Teilbildpaare berechent werden. Vorzugsweise erfolgt die Berechnung eines Gesamt-Ähnlichkeitsindikators und einer von dessen Höhe abhängigen Entscheidung, ob ein Dokument als manipliert gilt oder nicht, durch ein trainiertes machine-learning Programm, z.B. einen trainierten Klassifikator. Vorzugsweise kann ein Minimum Bayes Klassifikator verwendet werden.

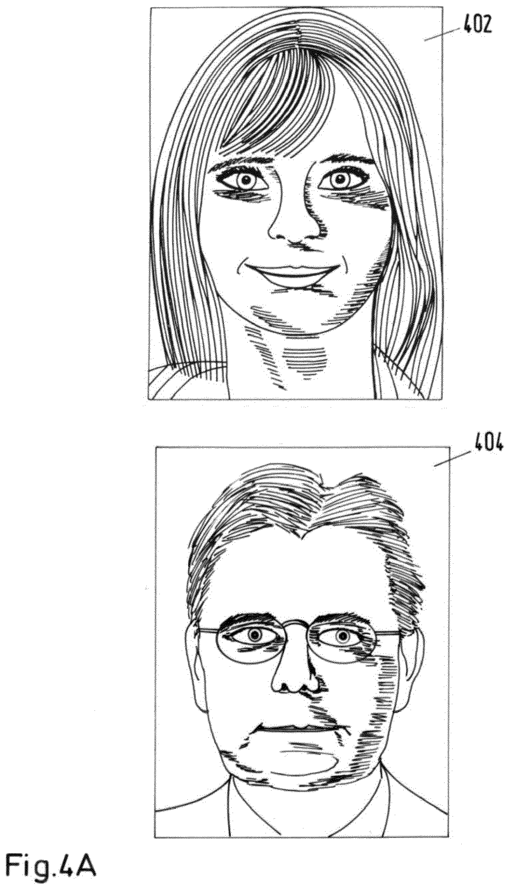

**Figur** 4A zeigt Gesichtsbilder 402, 404 zweier nichtidentischer, unähnlicher Motive, nämlich zweier unähnlicher Gesichter.

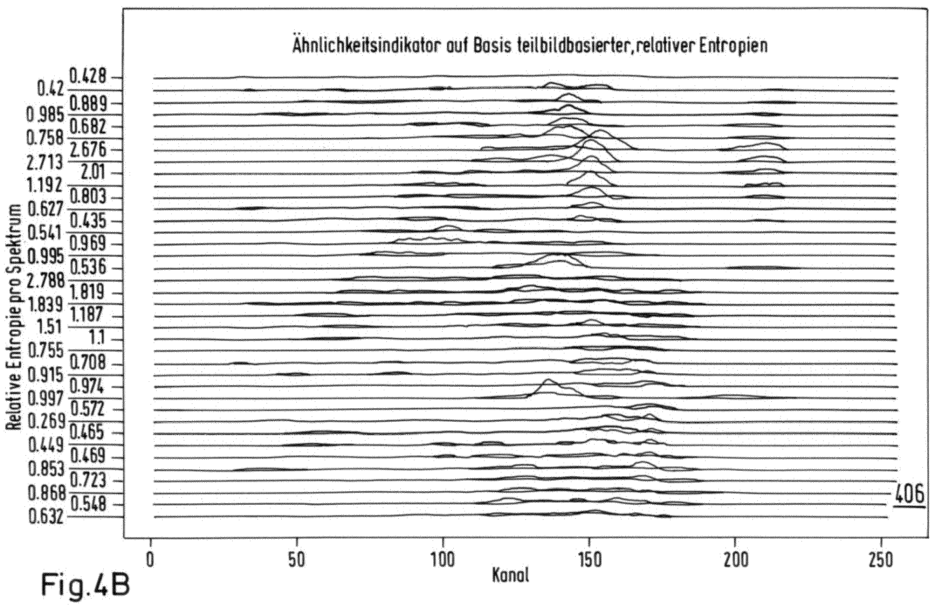

**Figur** 4B zeigt ein Diagramm, das die Ähnlichkeit bzw. Uneähnlichkeit zweier Bilder mit unterschiedlichen, unähnlicher Gesichtsbilder 402, 404 darstellt.

Das Diagramm enthält 40 vertikale Zeilen, die jeweils ein Paar von räumlich korrespondierenden Teilbildern der Bilder 402, 404 darstellen.. Pro Teilbild/Zeile wurde ein Histogramm der Pixelintensitäten ("Grauwerte") eines Teilbilds des ersten Vergleichsbildes in grau und ein Histogramm der Pixelintensitäten ("Grauwerte") eines Teilbilds des zweiten Vergleichsbildes in schwarz geplottet. Die numerischen Werte an der unteren Kante des Diagramms zeigen die für jedes Teilbildpaar berechneten Ähnlichkeitsindikatoren in Form relativer Entropien. Die teilbildbasierten relativen Entropien wurden als Kullback-Leibler Divergenzen berechnet wie dies für Figur 3 beschrieben wurde.

Die Diagramme 3C und 4B zeigen die jeweiligen Intensitätsverteilungs-Histogramme innerhalb eines Paares räumlich korrespondierender Teilbilder zweier verglichener Bilder sowie die für jedes Teilbildpaar errechnete relative Entropie als numerische Zahl an der unteren Achse des Diagramms.

Ein Vergleich der in Diagramm 4B gezeigten relativen Entropien mit den in Diagramm 3C gezeigten relativen Entropien zeigt deutlich, dass die Bilder 200, 300 sich deutlich ähnlicher sind als die Bilder 402, 404. Obwohl also nicht die Bilder direkt verglichen wurden, sondern nur die Pixelintensitätsverteilungen innerhalb von räumlich korrespondierenden Teilbildern, zeigt der hierdurch ermittelte Ähnlichkeitsindikator gemäß Figur 3C und 4B korrekt an, dass im Falle von Figur 3C zwei sehr ähnliche Bilder mit gleichen Motiven verglichen wurden, im Fall Figur 4B dagegen sehr unähnliche. Die Werte der relativen Entropien unterscheiden sich dementsprechend, wobei ein kleiner RE Wert für hohe Bildähnlichkeit steht, ein großer RE Wert für geringe Ähnlichkeit.

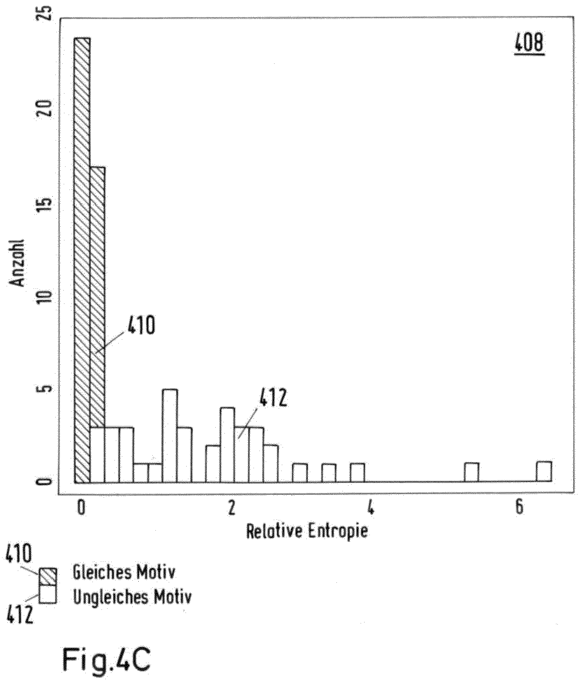

**Figur 4C** zeigt ein Balkendiagramm zur Visualisierung des Unterschieds der relativen Entropien der Teilbildpaare, gleicher und ungelicher Motive.

Die Rubrik bzw. die Balken 410 - gleiches Motiv - zeigt die Verteilung der relativen Entropien an, die für die Teilbildpaare der Bilder 200, 300 berechnet wurden und die in Figur 3C als numerische Werte im unteren Teil der Figur visualisiert sind.

Die Rubrik bzw. die Balken 412 - ungleiches Motiv - zeigt die Verteilung der relativen Entropien an, die für die Teilbildpaare der Bilder 402, 404 berechnet wurden und die in Figur 4B als numerische Werte im unteren Teil der Figur visualisiert sind.

Es zeigt sich, dass die relativen Entropien der Teilbilpaare des Bildpaares 200, 300 mit dem gleichen Motiv zeigen (mit dunklem Grauton und Nummer 410 gekennzeichnet) in die beiden Klassen mit der geringsten relativen Entropie fallen. Die relativen Entropien aller Teilbilpaare des Bildpaares 402, 404 mit dem ungleichen, unähnlichen Motiv (mit hellem Grauton und Nummer 412 gekennzeichnet) sind demgegenüber breit gestreut und weisen teilweise sehr hohe Werte auf, was ein Maß für geringe Ähnlichkeit/hohe Unähnlichkeit ist.

Die Verteilung der Balken bzw. der relativen Entropien zeigt also, dass die Auf der Basis von relativen Entropien gewonnenen Bildreferenzdaten bzw. Bildprüfdaten sehr geeignet sind, Ähnlichkeiten von personenbezogenen optisch erfassbaren Daten, wie z.B. Gesichtsbildern, korrekt zu erkennen, und dies, obwohl die Häufigkeitsverteilungen der Pixelintensitäten keine Rekonstruktion der Originalbilder zulassen.

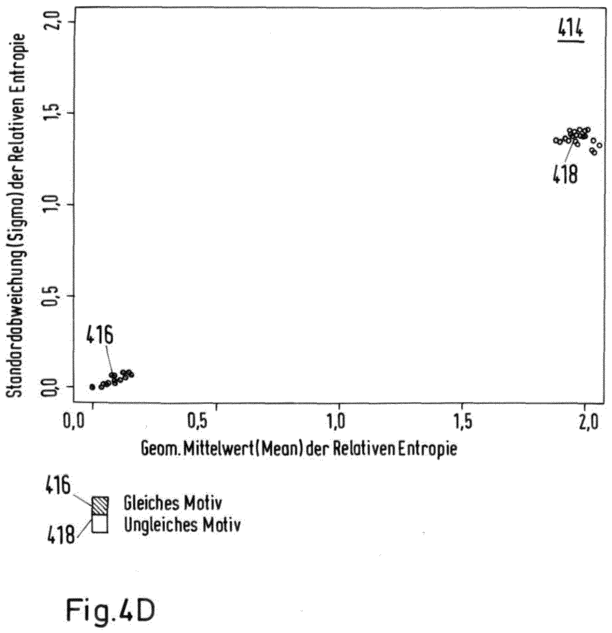

**Figur 4D** zeigt ein Streudiagramm zur Visualisierung des Unterschieds der relativen Entropien von Teilbildpaaren von Bildern mit gleichen und ungleichen, unähnlichen Motiven.

Es wurden fünf digitale Bilder BF1-BF5 vom gleichen Motiv 402 ("Erika Mustermann") erstellt, also ("Referenzbilder"). Die Bilder BF1-BF5 weichen allerdings leicht voneinander ab, da die Bilder bei leicht unterschiedlichen Randbedingungen gedruckt und/oder erfasst (Beleuchtung, Streulicht, verwendete Kamera) wurden.

Außerdem wurden fünf digitale Bilder BM1-BM5 vom gleichen Motiv 404 ("Herr Mustermann") erstellt, hier als "Testbilder" bezeichnet. Die Bilder BM1-BM5 weichen allerdings leicht voneinander ab, da die Bilder bei leicht unterschiedlichen Randbedingungen gedruckt bzw. erfasst wurden.

Es ist also zu erwarten, dass die Referenzbilder BF1-BF5 und die aus diesen abgeleiteten Bildreferenzdaten einander sehr ähnlich sind, dass die Testbilder BM1-BM5 und die aus diesen abgeleiteten Bildreferenzdaten einander sehr ähnlich sind, aber jedes der Referenzbilder BF1-BF5 zu jedem der Testbilder BM1-BM5 sehr unähnlich sind (gleiches gilt für die jeweils abgeleiteten Bildreferenzwerte).

Es wurden relative Entropien für die Teilbildpaare von 25 Bildpaaren aus der Gesamtheit der 10 Bilder BF1-BF5, BM1-BM5 berechnet, die das gleiche Motiv aber mit unterschiedlichen Randbedingungen abbilden. Also z.B. ein erstes Bildpaar BF1-BF3, ein zweites Bildpaar BM3-BM5, etc.

Außerdem wurden relative Entropien für die Teilbildpaare von 25 Bildpaaren berechnet, die unterschiedliche Motive 402, 404 abbilden. Also z.B. ein erstes Bildpaar BF1-MF2, ein zweites Bildpaar BF1-BM3, etc.

Die relativen Entropien wurden als Kullback-Leibler Divergenz berechnet.

Aus den pro Bildpaar erhaltenen relativen Entropien wurde für jedes der Bildpaare ein Mittelwert und eine Standardabweichung berechnet und in einem Streudiagramm aufgetragen. Man erkennt deutlich, dass die Mittelwerte und Standardabweichungen von Bildpaaren, die das gleiche Motiv zeigen aber unter leicht unterschiedlichen Rahmenbedingungen aufgenommen wurden, stark "clustern", also eine Gruppe von Datenpunkten mit sehr ähnlichen Mittelwerten und Standardabweichungen für die relativen Entropien bilden. Bildpaare, die unterschiedliche Motive zeigen, haben deutlich abweichende Mittelwerte und Standardabweichungen für die relative Entropie.

Die Figuren 4C und 4D belegen also, dass eine relative Entropie auf Basis von Pixelintensitäts-Häufigkeitsverteilungen ein sehr guter Indikator für die Ähnlichkeit und Integrität von Bildmotiven unabhängig von kleineren Schwankungen der Umgebungsparameter bei der Bilderfassung ist.

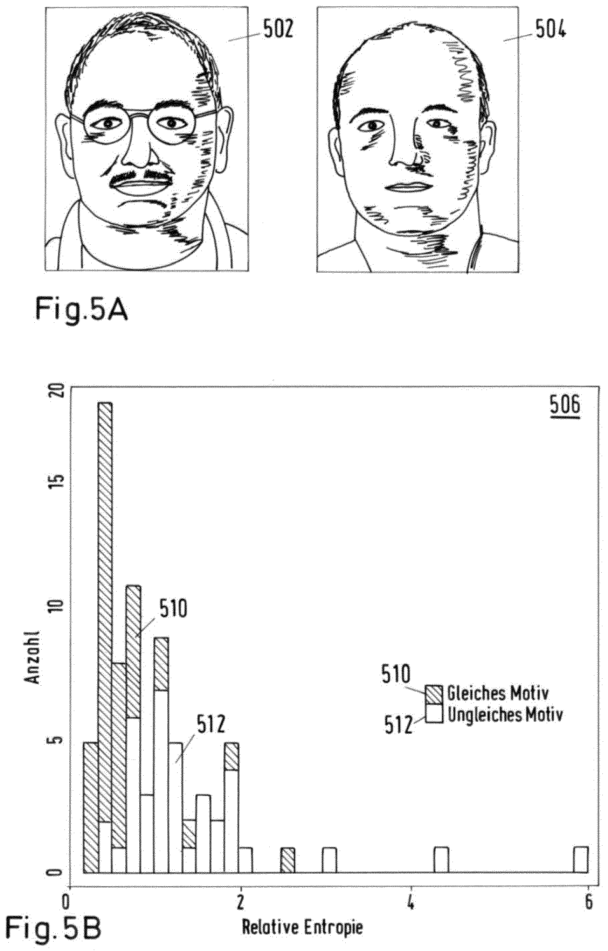

**Figur 5A** zeigt Gesichtsbilder 502, 504 zweier unterschiedlicher Personen mit ähnlichen Gesichtern. Es soll untersucht werden, ob ein auf relativen Entropien basierender Ähnlichkeitsindikator in der Lage ist, einerseits Bilder der gleichen Person, die unter leicht abweichenden Umgebungsbedingungen aufgenommen wurden, als "identisches/integres" Bildmotiv zu erkennen, andererseits Bilder zweier unterschiedlicher Personen, die dem menschlichen Auge aber als "ähnlich" erscheinen, als "unterschiedliches/falsches/wahrscheinlich manipuliertes" Bildmotiv zu erkennen.

Es wurden fünf digitale Bilder BMA1-BMA5 vom gleichen Motiv "Mann 502" erstellt. Die Bilder BMA1-BMA5 weichen allerdings leicht voneinander ab, da die Bilder bei leicht unterschiedlichen Randbedingungen gedruckt und/oder erfasst (Beleuchtung, Streulicht, verwendete Kamera) wurden.

Außerdem wurden fünf digitale Bilder BMB1-BMB5 vom gleichen Motiv "Mann 504" erstellt. Die Bilder BMB1-BMB5 weichen allerdings leicht voneinander ab, da die Bilder bei leicht unterschiedlichen Randbedingungen (Beleuchtung, Streulicht, verwendete Kamera) erfasst wurden.

Jedes dieser Bilder BMA1-BMA5, BMB1-BMB5 wurde in 40 räumlich zueinander korrespondierende Teilbilder geteilt.

**Figur 5B** zeigt ein Balkendiagramm zur Visualisierung des Unterschieds der relativen Entropien von Bildpaaren mit ähnlichen und unähnlichen, ungleichen Motiven 502, 504.

Die Rubrik bzw. die Balken 510 - gleiches Motiv - zeigt die Verteilung der relativen Entropien an, die für die Teilbildpaare eines Bildpaares mit gleichem Motiv - BMA1-BMA2 - berechnet wurden.

Die Rubrik bzw. die Balken 512 - ungleiches Motiv - zeigt die Verteilung der relativen Entropien an, die für die Teilbildpaare eines Bildpaares BMA1-BMB1 berechnet wurden.

Es zeigt sich, dass das Bildpaar, das die gleiche Person darstellt (510 - "gleiches Motiv"), eine große Anzahl von relativen Entropien von unter 3 aufweist, wohingegen das Bildpaar, das unterschiedliche Personen darstellt (512 - "ungleiches Motiv") zumindest einige Teilbildppare mit recht hohen Entropien aufweist.

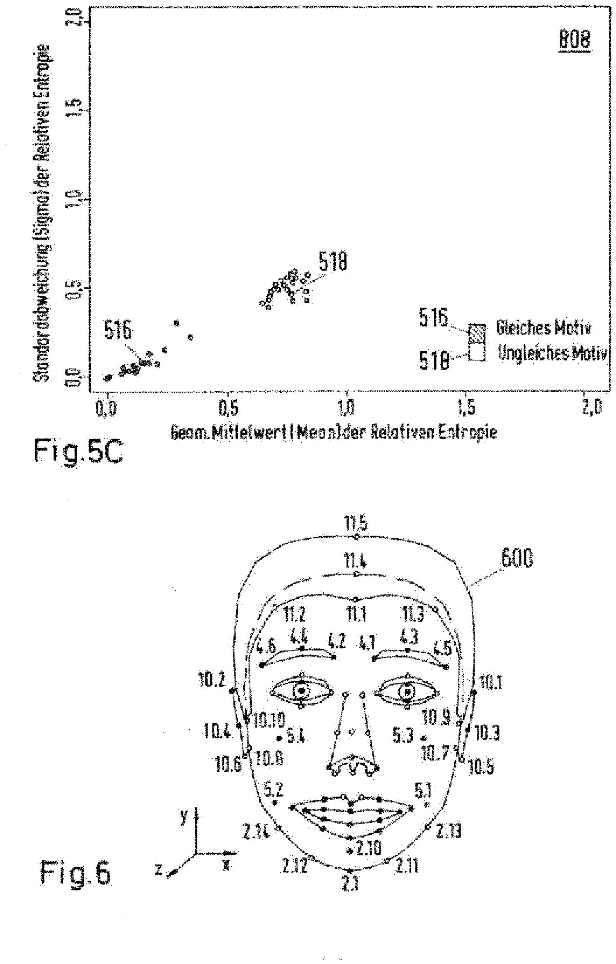

**Figur 5C** zeigt ein Streudiagramm von Mittelwert-Standardabweichungs-Datenpunkten der relativen Entropien der im Hinblick auf die Figuren 5A und 5B beschriebenen Bildpaare.

Es wurden die mit Referenz auf Figur 5A beschriebenen fünf digitalen Bilder BMA1-BMA5 vom gleichen Motiv 502 ("Referenzbilder") und fünf digitalen Bilder BMB1-BMB5 vom gleichen Motiv 504 ("Testbilder") bereitgestellt.

Im nächsten Schritt wurden 25 Bildpaare mit unterschiedlichen Motiven 502, 504 ausgewählt, z.B. BMA1-BMB1, BMA1-BMB2, usw. ausgewählt.

Außerdem wurden 25 Bildpaare mit gleichen Motiven ausgwählt, z.B. BMA1-BMA2, BMB1-BMB2, usw.

Jedes der Bilder wurde in vertikale Streifen ("Teilbilder") gleicher Länge und Position zerlegt, wie dies z.B. in Figuren 2 und 3 veranschaulicht ist. Für jedes Paar von räumlich korrespondierenden Teilbildern von jedem der 50 Bildpaare wurde eine relative Entropie in Form der Kullback-Leibler Divergenz berechnet.

Aus den pro Bildpaar erhaltenen relativen Entropien wurde für jedes der Bildpaare ein Mittelwert und eine Standardabweichung berechnet und in einem Streudiagramm aufgetragen. Man erkennt deutlich, dass die Mittelwerte und Standardabweichungen von Bildpaaren, die das gleiche Motiv zeigen aber unter leicht unterschiedlichen Rahmenbedingungen aufgenommen wurden, stark "clustern", also eine Gruppe von Datenpunkten mit sehr ähnlichen Mittelwerten und Standardabweichungen für die relativen Entropien bilden. Bildpaare, die unterschiedliche (aber ähnliche) Motive zeigen, haben deutlich abweichende Mittelwerte und Standardabweichungen für die relative Entropie. Allerdings sind die Unterschiede nicht so stark wie in dem Streudiagramm in Figur 5C, was auf die größere Ähnlichkeit der beiden Gesichter 502, 504 im Vergleich zu den Gesichtern 402, 404 zurückzuführen ist.

Die Figuren 4C und 4D belegen also, dass eine relative Entropie auf Basis von Pixelintensitäts-Häufigkeitsverteilungen ein sehr guter Indikator für die Ähnlichkeit und Integrität von Bildmotiven unabhängig von kleineren Schwankungen der Umgebungsparameter bei der Bilderfassung ist. Dennoch ist die Trennung hinreichend eindeutig, um eine eindeutige Feststellung zu treffen, dass die durch die Datenpunkte 516 repräsentierten Bildpaare unterschiedliche Motive zeigen und die durch die Datenpunkte 518 repräsentierten Bildpaare gleiche Motive, die lediglich unter leicht anderen Rahmenbedingungen aufgenommen wurden, zeigen.

Beispielsweise kann die Unterscheidung visuell durch einen Menschen auf Basis eines Streudiagramms der Mittelwerte und Standardabweichungen getroffen werden.

Gemäß Ausführungsformen beinhaltet das System 800 zur Ermöglichung der Überprüfung der Integrität eines Dokuments und/oder das System 900 zur Prüfung der Integrität des Dokuments eine Software, die dazu ausgebildet ist, folgende Schritte durchzuführen:

- Zugriff auf eine Menge an Bildern, die zum Zwecke der Qualitätsprüfung der irreversiblen informationsverlustbehafteten Rechenfunktion und/oder des Teilbilderzeugungsalgorithmus bereitgestellt wurde. Diese Bilder werden im Folgenden als Q-Bilder bezeichnet. Die Menge an Q-Bildern umfasst mindestens zwei GM-Bilder ("Gleichmotiv-Bilder") und mindestens zwei UM-Bilder (Ungleiches-Motiv-Bilder). Gleichmotiv-Bilder sind digitale Bilder, die das gleiche Motiv zeigen, also z.B. ein auf einem Dokument aufgedrucktes Gesichtsbild einer Person, aber unter unterschiedlichen Umgebungsparametern aufgenommen wurden. Beispielsweise können diese Bilder sequenziell von der gleichen Kamera aufgenommen werden, ggf. nachdem das Dokument von dem Träger entfernt und wieder auf den Träger aufgebracht wurde, denn minimale Änderungen in den Lichtverhältnissen und/oder der relativen Position des Dokuments zur Kamera können bereits minimale Änderungen im digitalen Bild bewirken. UM-Bilder sind digitale Bilder, die unterschiedliche Motive zeigen, also z.B. die jeweils auf einem Dokument aufgedruckten Gesichtsbilder von unterschiedlichen Personen.
- Zerlegung von jedem der Q-Bilder wird nach dem gleichen Schema in eine Menge von Teilbildern, beispielsweise in dünne vertikale Streifen.
- Erzeugung aller kombinatorisch möglichen Paare an Q-Bildern, wobei diese Paare mindestens ein GM-Bildpaar und mindestens ein UM-Bildpaar umfassen;
- Berechnung einer relativen Entropie für jedes räumlich korrespondierende Teilbildpaar aller Q-Bildpaare;
- Für jedes der Q-Bildpaare: Ermittlung eines geometrischen oder arithmetischen Mittelwerts aller relativen Entropien, die für die Teilbildpaare dieses Q-Bildpaares berechnet wurden;
- Für jedes der Q-Bildpaare: Ermittlung der Standardabweichung aller relativen Entropien, die für die Teilbildpaare dieses Q-Bildpaares berechnet wurden;
- Durchführen eines Clusteralgorithmus auf alle Q-Bildpaare, wobei jedes der Q-Bildpaare durch eine Kombination aus dem für dieses Q-Bildpaar ermittelten Mittelwerts und der Standardabweichung repräsentiert ist;
- Prüfen, ob der Clusteralgorithmus alle GM-Bildpaare mit exakt oder mit hinreichender Exaktheit von allen UM-Bildpaaren getrennt hat;
- Falls dies der Fall ist, Ausgabe eines Ergebnisses, dass die irreversible informationsverlustbehaftete Rechenfunktion und der Teilbilderzeugungsalgorithmus geeignet sind um die Integrität des Dokuments prüfbar zu machen und zu prüfen;
- Andernfalls Ausgabe eines Ergebnisses, dass die irreversible informationsverlustbehaftete Rechenfunktion und/oder der Teilbilderzeugungsalgorithmus nicht geeignet sind um die Integrität des Dokuments prüfbar zu machen und zu prüfen. Beispielsweise kann ein Nutzer oder die Software die Größe der Teilbilder oder den Algorithmus zur Teilbilderstellung oder den Algorithmus zur Berechnung der relativen Entropie so lange ändern, bis der Clusteralgorithmus die GM-Bildpaare korrekt von den UM-Bildpaaren trennen kann.

Für die Clusteranalyse können konventionelle Clusteralgorithmen verwendet werden, z.B. Minimum Bayes Classifier, k-Means, spektrales Clustering, Kernbasierte Hauptkomponentenanalyse (kernel principal component analysis, kurz: kernel PCA), u.a.

Dies kann vorteilhaft sein, da hierdurch ein objektives und reproduzierbares Maß für die Geeignetheit des Teilbilderstellungsalgorithmus und der informationsverlustbehafteten Rechenfunktion ist, die zum einen gewährleisten soll, dass hinreichend viel Information verloren geht, dass die personenbezogenen Daten depersonalisiert werden, aber nicht so viel Information verloren gehen darf, dass jegliches Dokument als integer gilt, das auch nur halbwegs ähnlich ist zu dem ursprünglich herausgegebenen Dokument.

**Figur 6** zeigt Landmarken 600 für Gesichtserkennungsalgorithmen gemäß der ISO-Norm ISO/IEC 19794-5:2001 (E), die gemäß Ausführungsformen der Erfindung als Basis für die Identifizierung und Erzeugung von Teilbildern genutzt werden können.

Beispielsweise kann ein System zur Ermöglichung der Integritätsprüfung eines Dokuments und/oder ein System zur Integritätsprüfung eines Dokuments eine Software oder ein Softwaremodul beinhalten, das zur Erzeugung einer Menge von Teilbildern aus einem erfassten digitalen Bild (Ausgabebild 818, Prüfbild 918) ausgebildet ist. Die Software kann dazu konfiguriert sein, zunächst in den digitalen Bildern nach bestimmten Landmarken zu suchen, wie diese zum Beispiel in der in Figur 6 gezeigten ISO Norm vor definiert sind. Im nächsten Schritt werden Regionen (Teilbilder) erkannt, die von den erkannten Landmarken begrenzt werden.

Die Bildung von Teilbildern anhand von Landmarken kann den Vorteil haben, dass die Qualität der Prüfung von Dokumenten mit Gesichtsbildern verbessert wird, weil die Teilbilder hier an wirklich relevanten Bereichen gebildet wird, wohingegen bei der streifenbasierten Erzeugung der Teilbilder einige Teilbilder dabei sind, die keine relevante Information enthalten oder die Intensitätshäufigkeitsverteilung über verschiedene Gesichtsbereiche mitteln.

Im nächsten Schritt werden die Häufigkeitsverteilungen der Intensitäten innerhalb der einzelnen Teilbilder ermittelt und als Bildreferenzdaten oder Bildprüfdaten verwendet. Beispielsweise können die Bildreferenzdaten, die in der Datenbank gespeichert sind, Metadaten enthalten, welche unter Bezugnahme auf die in der ISO-Norm definierten Landmarken angeben, welches der Teilbilder als Basis für die Erhebung der Bildreferenzdaten bzw. Bildprüfdaten diente. Im Rahmen der Prüfung werden die Paare von räumlich korrespondierenden Teilbildern, für die z.B. die relativen Entropien oder äquivalente Ähnlichkeitsindikatoren berechnet werden, anhand identischer Landmarken-IDs ermittelt.

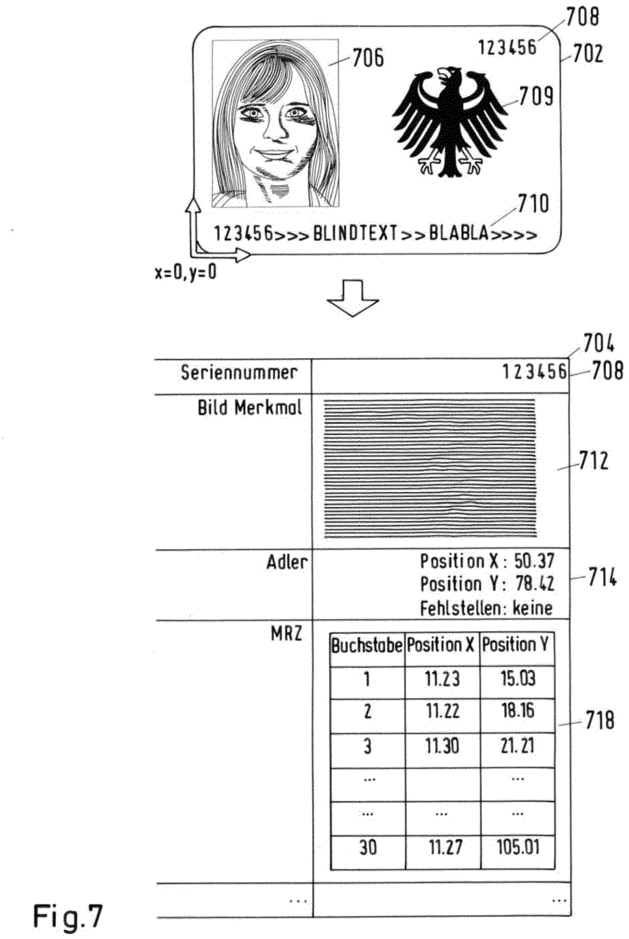

**Figur 7** zeigt ein Dokument 702 und die aus dem Dokument abgeleiteten Bildreferenzdaten 712 und weiterer Referenzdaten 714, 718. Das Dokument kann z.B. ein Personalausweis sein, der optisch lesbare, personenbezogene Daten in Form eines Gesichtsbildes 706 enthält. Außerdem kann das Dokument weitere optisch erfassbare Daten beinhalten, die nicht personenbezogen sind, beispielsweise ein Staatswappen 709, eine Seriennummer (Dokument-ID) 708 des Dokuments sowie weitere Dokument- oder Dokumententyp-bezogene alphanumerische Zeichenketten 710, hier in form einer MRZ ("Machine Readable Zone").

Gemäß Ausführungsformen der Erfindung kann das System 800 zur Ermöglichung der Integritätsprüfung eines Dokuments dazu ausgebildet sein, mindestens ein digitales Bild von dem gesamten Dokument 702 zu erfassen.

Im nächsten Schritt ermittelt das System 800 eine Teilregion 706 des Bildes, welche ein Gesichtsbild abbildet, unterteilt dieses in Teilbilder, wendet eine irreversible, informationsverlustbehaftete Rechenfunktion auf jedes der Teilbilder an (ermittelt beispielsweise die Häufigkeitsverteilung der Intensitäten innerhalb jedes der Teilbilder), und speichert das Ergebnis (z.B. die Häufigkeitsverteilung) jedes der Teilbilder separat (hier in Form einer einzelnen horizontalen Kurve) von Bildreferenzdaten 712 in einer Datenstruktur 704 in einer Datenbank. Innerhalb der Bildreferenzdaten 712 entspricht somit jede horizontale Kurve einem der Teilbilder. Bei der Datenstruktur 704 kann es sich z.B. um eine Datei oder einen Datensatz in einer Datenbank handeln. In manchen Ausführungsformen wird das gesamte erfasste Bild (einschließlich der Dokumentregionen, die keine personenbezogenen Daten beinhalten), in Teilbilder zerlegt und wie oben beschrieben weiterverarbeitet. Auch dieses Vorgehen stellt sicher, dass die personenbezogenen Daten nicht rekonstruiert werden können.

Die Position des Staatswappens, der MRZ, die Position einzelner alphanumerischer Zeichen und sonstiger optisch erfassbarer Daten relativ zur Dokumentenkante (x=0, y=0) kann nur innerhalb gewisser Fertigungstoleranzen bestimmt sein. Beim Aufprägen oder Aufdrucken von Logos und Symbolen gibt es im Rahmen der Fertigungstoleranzen immer kleine Variationen bezüglich der relativen Positionierung von Prägestempel/Druckkopf und Dokument. Beispielsweise gelten derzeit Positionsabweichungen von ca. 0,5 mm für den Druck von alphanumerischen Zeichen auf Dokumente als üblich und tolerabel.

Es wird eine Bildanalyse des erfassten Dokumentenbildes durchgeführt, um die Position (z.B. linkes unteres Eck) und/oder Größe eines als Rechteck repräsentierten alphanumerischen Zeichens relativ zu einer Dokumentenkante exakt zu bestimmen. Die exakten, mittels Bildanalyse erfassten Positionen und/oder Größen einzelner weiterer optisch erfassbarer Merkmale des Dokuments werden als weitere Referenzdaten in der Datenbank gespeichert. Beispielsweise wird die Position des Staatswappens als weitere Referenzdaten 714 gespeichert und die Position jedes ein alphanumerisches Symbol innerhalb der MRZ repräsentierenden Rechtecks als weitere Referenzdaten 718 gespeichert.

Im Zuge der Prüfung werden analoge weitere Referenzdaten durch eine gleichartige Bildanalyse des Prüfbildes gewonnen und mit den weiteren Referenzdaten verglichen.

Wenn der Abstand der erfassten Positionen und/oder der Unterschied der erfassten Größen der alphanumerischen Zeichen oder Logos einen Schwellenwert überschreitet, gelten die beiden verglichenen Zeichen bzw. Logos als unähnlich. Der Gesamt-Ähnlichkeitsindikator für zwei Dokumente wird so berechnet, dass in diesen nicht nur die relativen Entropien der verglichenen (Gesichts)bilder, sondern auch die Positions- und Größenunterschiede der alphanumerischen Zeichen und Logos der beiden Dokumente eingehen.

Beispielsweise können die pro Dokument erfassten Positionen und/oder Größen aller alphanumerischen Zeichen und Logos als Vector repräsentiert werden. Es wird also im Zuge der Herausgabe, Personalisierung oder Registrierung eines Dokuments für einen Nutzer ein solcher Vector erzeugt und als Teil der Referenzdaten gespeichert. Zum Zeitpunkt der Prüfung wird das Dokument erneut erfasst und ein Prüfvektor mit den Positionen und/oder Größen der alphanumerischen Zeichen oder Logos im Dokument auf Basis des aktuell erfassten Prüfbildes erzeugt. Im nächsten Schritt wird komponentenweise die Ähnlichkeit der beiden Vektoren bestimmt. Hierzu können verschiedene Verfahren zur Berechnung der Ähnlichkeit von Vektoren verwendet werden, z.B. Verfahren auf Basis realativer Entropien, Minimum Bayes oder ähnlichen Verfahren. Im letzten Schritt wird dann ein Ähnlichkeitsindikator als Funktion sowohl der für den Bildvergleich erhaltenen relativen Entropie als auch für die errechnete Vektorähnlichkeit gebildet. Beispielsweise können die (Gesichts)bildähnlichkeit und die Vektorähnlichkeit normalisiert und gemittelt werden. Je nach Beschaffenheit des Dokuments und des Anteils an (Gesichts)bilddaten und alphanumerischen Daten oder Logos kann die anteilige Berücksichtigung der verschiedenen Komponetnen jedoch auch einem anderen als einem 1:1 Verhältnis folgen.

Bezugszeichenliste

| | |
|---|---|
| 102-106 | Schritte |
| 110-118 | Schritte |
| 200 | erfasstes digitales Bild |
| 202 | Teilbild (vertikaler Bildstreifen) von Bild 200 |
| 300 | erfasstes Prüfbild |
| 302 | Teilbild (vertikaler Bildstreifen) von Prüfbild 300 |
| 304 | Ähnlichkeitsindikator in der Form von Teilbild-Histogramm-Ähnlichkeiten |
| 306 | Histogramm von Pixelintensitätswerten des Teilbildes 202 |
| 308 | Histogramm von Pixelintensitätswerten des Teilbildes 302 |
| 402 | erfasstes digitales Bild |
| 404 | Prüfbild |
| 406 | Ähnlichkeitsindikator in der Form von Teilbild-Histogramm-Ähnlichkeiten |
| 408 | Balkendiagramm von Ähnlichkeitsindikatoren in der Form relativer Entropien von Bildern gleicher und ungleicher Motive |
| 410 | relative Entropien von Bildern gleicher Motive |
| 412 | relative Entropien von Bildern ungleicher Motive |
| 414 | Diagramm mit geclusterten Ähnlichkeitsindikatoren |
| 416 | Cluster von Ähnlichkeitsindikatoren von Bildern gleicher Motive |
| 418 | Cluster von Ähnlichkeitsindikatoren von Bildern ungleicher Motive |
| 502 | erfasstes digitales Bild, welches einen Mann abbildet |
| 504 | Prüfbild, das einen anderen Mann ähnlichen Aussehens abbildet |
| 506 | Balkendiagramm von Ähnlichkeitsindikatoren in der Form relativer Entropien von Bildern, die den gleichen Mann abbilden und von Bildern, die die beiden unterschiedlichen Männer abbilden, |
| 508 | Diagramm mit geclusterten Ähnlichkeitsindikatoren |
| 510 | relative Entropien von Bildern gleicher Motive |
| 512 | relative Entropien von Bildern ungleicher Motive |

| | |
|---|---|
| 516 | Cluster von Ähnlichkeitsindikatoren von Bildern gleicher Motive |
| 518 | Cluster von Ähnlichkeitsindikatoren von Bildern ungleicher Motive |
| 600 | Gesichtsbild-Landmarken gemäß ISO Norm |
| 702 | Dokument |
| 704 | Datensatz mit Referenzdaten |
| 706 | Gesichtsbild (personenbezogene Daten) |
| 708 | Seriennummer |
| 709 | Staatswappen |
| 710 | MRZ |
| 712 | Datenfeld für Bildreferenzdaten |
| 714 | Datenfeld für weitere Referenzdaten (Positionen Staatswappen) |
| 718 | Datenfeld für weitere Referenzdaten (Positionen von Symbolen in MRZ) |
| 800 | System zur Herstellung, Personalisierung und/oder Registrierung eines personenbezogenen Dokuments |
| 802 | Kamera |
| 804-814 | verschiedene Lichtquellen |
| 816 | irreversible, informationsverlustbehaftete Rechenfunktion |
| 818 | erfasste Digitale Bilder des Dokuments |
| 820 | Bildverarbeitungssysteme |
| 822 | Bildreferenzdaten |
| 825 | Datenbank |
| 830 | Seriennummern von registrierten Dokumenten in DB |
| 832 | Bild- und ggf. weitere Referenzdaten in DB |
| 900 | System zur Prüfung der Integrität eines Dokuments |
| 902 | Kamera |
| 904-914 | verschiedene Lichtquellen |
| 918 | Prüfbilder |
| 926 | Bildverarbeitungssystem |
| 927 | Bildprüfdaten |
| 928 | Prüfmodul |

**Patentansprüche**

1. Computerimplementiertes Verfahren zur Ermöglichung der Prüfung der Integrität eines Dokuments, umfassend:

- Erfassen (102) eines digitalen Bildes (818, 200, 402, 502) von zumindest einem Teil eines Dokuments (702) durch eine Kamera (802), wobei das Dokument einer Person zugeordnet ist, wobei das Dokument optisch lesbare, personenbezogene Daten (706) umfasst, wobei das digitale Bild zumindest die personenbezogenen Daten abbildet;

- Berechnung von Bildreferenzdaten (832) durch Anwenden einer irreversiblen, informationsverlustbehafteten Rechenfunktion (816) auf Eingabedaten, wobei die Eingabedaten Intensitätsdaten von Pixeln des digitalen Bildes oder Intensitätsdaten von Pixeln von Teilbildern des digitalen Bildes sind, wobei der Informationsverlust mindestens so groß ist, dass die Bildreferenzdaten depersonalisiert sind und maximal so groß ist, dass die Bildreferenzdaten Dokumentindividuell sind;

- Berechnung von weiteren Referenzdaten (714, 718) durch Anwenden einer weiteren irreversiblen, informationsverlustbehafteten Rechenfunktion auf weitere Daten (708-710), wobei das Dokument die weiteren Daten umfasst, wobei die weiteren Daten optisch erfassbare, nichtpersonenbezogene Daten (708, 709, 710) sind, wobei das digitale Bild auch die weiteren Daten abbildet, wobei die weiteren Daten ein oder mehrere graphische Elemente umfassen, wobei die graphischen Elemente im Rahmen einer produktionsbedingten Fehlertoleranz in oder auf das Dokument ein- bzw. aufgebracht wurden;

- Speicherung der Bildreferenzdaten (822, 832) des Dokuments in eine Datenbank (825); und

- Speicherung der weiteren Referenzdaten (714, 718) in der Datenbank; **dadurch gekennzeichnet, dass** die Berechnung der weiteren Referenzdaten umfasst:

• Durchführung einer Bildanalyse zur Bestimmung der Größe und optional zusätzlich auch von Positionsdaten jedes der ein oder mehreren graphischen Elemente auf dem Dokument, wobei die Genauigkeit der Größenbestimmung und der ggf. optional durchgeführten Positionsdatenbestimmung höher ist als die produktionsbedingte Fehlertoleranz; und

• Verwendung der Größen und optional zusätzlich auch der Positionsdaten als die weiteren Referenzdaten (708-710).

2. Das computerimplementierte Verfahren nach Anspruch 1,

- wobei die Datenbank eine dokument-interne Datenbank des Dokuments ist; oder

- wobei die Datenbank eine Dokument-externe Datenbank ist;

- wobei die Bildreferenzdaten vorzugsweise die Daten einer Vielzahl von Dokumenten beinhalten und die Bildreferenzdaten jeweils verknüpft mit einer Dokument-ID (824, 830) des Dokuments gespeichert sind.

3. Das computerimplementierte Verfahren nach einem der vorigen Ansprüche, wobei die Erfassung des digitalen Bildes, die Berechnung der Bildreferenzdaten und die Speicherung der Bildreferenzdaten im Zuge des Herstellens des Dokuments und/oder Personalisierens des Dokuments für die Person erfolgt.

4. Das computerimplementierte Verfahren nach einem der vorigen Ansprüche, wobei die personenbezogenen Daten ein Bild (200, 402, 502, 706) der Person, insbesondere ein Gesichtsbild der Person, beinhalten.

5. Das computerimplementierte Verfahren nach einem der vorigen Ansprüche, wobei die Datenbank dazu ausgebildet ist, in Antwort auf den Erhalt einer Prüfanfrage bezüglich des Dokuments Bildreferenzdaten, die für dieses Dokument in der Datenbank gespeichert wurden, zu identifizieren und/oder zurückzugeben.

6. Das computerimplementierte Verfahren nach einem der vorigen Ansprüche, wobei die Berechnung der Bildreferenzdaten umfasst:

- Unterteilen des digitalen Bildes in die Teilbilder gemäß vordefinierter, mit einem Prüfgerät vereinbarter, Teilbildgrenzen oder Teilbildgrenzziehungsalgorithmen;

- Für jedes der Teilbilder, Berechnung von Teilbildreferenzdaten durch Anwendung der irreversiblen, informationsverlustbehafteten Rechenfunktion auf die Intensitäten der Pixel innerhalb dieses Teilbildes;

- Verwendung der Teilbildreferenzdaten der Teilbilder als die Bildreferenzdaten.

7. Das computerimplementierte Verfahren nach einem der vorigen Ansprüche, wobei das Anwenden der irreversiblen, informationsverlustbehafteten Rechenfunktion auf die Eingabedaten umfasst:

- Für die Pixel des digitalen Bildes oder für die Pixel jedes der Teilbilder, automatische Bestimmung einer Häufigkeitsverteilung der Intensitäten dieser Pixel, wobei die Häufigkeitsverteilung insbesondere eine klassenweise erfasste Häufigkeit von Pixeln mit einem Intensitätswert innerhalb eines klassenspezifischen Intensitätswertbereiches ist; und Verwendung der bestimmten Häufigkeitsverteilung oder der Gesamtheit der bestimmten Häufigkeitsverteilung als die Bildreferenzdaten; oder

- Für die Pixel des digitalen Bildes oder für die Pixel jedes der Teilbilder, automatische Erkennung von Position und Erstreckung von Linien durch Analyse der Intensitäten dieser Pixel; und Verwendung der erkannten Linien des Bildes oder der Gesamtheit der erkannten Positionen und Erstreckungen der Linien der Teilbilder als die Bildreferenzdaten.

**8.** Das computerimplementierte Verfahren nach einem der vorigen Ansprüche,

- wobei die Erfassung des digitalen Bildes und die Berechnung und Speicherung der Bildreferenzdaten jeweils für eines von mehreren unterschiedlichen Spektralbereichen durchgeführt wird, wobei die Spektralbereiche ausgewählt sind aus einer Gruppe umfassend: Infrarotlicht, Licht im sichtbaren Wellenlängenbereich, UV-Licht; kohärentes Licht einer Wellenlänge, das identisch ist zu der Wellenlänge des zur Erstellung eines holographischen Sicherheitsmerkmals des Dokuments verwendeten Lichts; und/oder

- wobei die Erfassung des digitalen Bildes und die Berechnung und Speicherung der Bildreferenzdaten jeweils für eine von mehreren unterschiedlichen Beleuchtungstechnologien durchgeführt wird, wobei die Beleuchtungstechnologien ausgewählt sind aus einer Gruppe umfassend: Auflicht, Durchlicht, Beleuchtung des Dokuments mit kohärentem Licht zur Rekonstruktion eines Hologramms.

**9.** Computerimplementiertes Verfahren zur Prüfung der Integrität eines Dokuments, umfassend:

- Erfassen (110) eines Prüfbildes (918, 404, 504) durch eine Kamera (902), wobei das Prüfbild ein digitales Bild von zumindest einem Teil eines Dokuments (702) ist, wobei das Dokument einer Person zugeordnet ist, wobei das Dokument optisch lesbare, personenbezogene Daten (706) umfasst, wobei das Prüfbild zumindest die personenbezogenen Daten abbildet;

- Berechnung (112) von Bildprüfdaten (927) durch Anwenden einer irreversiblen, informationsverlustbehafteten Rechenfunktion (816) auf Eingabedaten, wobei die Eingabedaten Intensitätsdaten von Pixeln des Prüfbildes oder Intensitätsdaten von Pixeln von Teilbildern des Prüfbildes sind, wobei der Informationsverlust mindestens so groß ist, dass die Bildprüfdaten depersonalisiert sind (also eine Identifikation der Person nicht erlauben) und maximal so groß ist, dass die Bildprüfdaten Dokument-individuell sind;

- Berechnung von weiteren Bildprüfdaten durch Anwenden einer weiteren irreversiblen, informationsverlustbehafteten Rechenfunktion auf weitere Daten, wobei das Dokument die weiteren Daten umfasst, wobei die weiteren Daten optisch erfassbare, nicht-personenbezogene Daten (708, 709, 710) sind, wobei das Prüfbild auch die weiteren Daten abbildet, wobei die weiteren Daten ein oder mehrere graphische Elemente umfassen, wobei die graphischen Elemente im Rahmen einer produktionsbedingten Fehlertoleranz in oder auf das Dokument ein- bzw. aufgebracht wurden;

- Identifikation (114) von Bildreferenzdaten (822, 832) des Dokuments in einer Datenbank (825);

- Identifikation (114) von weiteren Referenzdaten des Dokuments in der Datenbank (825);
- Berechnung (116) eines Ähnlichkeitsindikators durch Vergleich der Bildprüfdaten und der identifizierten Bildreferenzdaten;
- Verwendung (118) des Dokuments und/oder Durchführung einer Software- oder Hardwarefunktion nur dann, wenn der Ähnlichkeitsindikators einen Mindestwert überschreitet;

**dadurch gekennzeichnet, dass** die Berechnung der weiteren Bildprüfdaten umfasst:

• Durchführung einer Bildanalyse zur Bestimmung der Größe und optional zusätzlich auch von Positionsdaten jedes der ein oder mehreren graphischen Elemente auf dem Dokument, wobei die Genauigkeit der Größenbestimmung und der ggf. optional durchgeführten Positionsdatenbestimmung höher ist als die produktionsbedingte Fehlertoleranz; und
• Verwendung der Größen und optional zusätzlich auch der Positionsdaten als die weiteren Bildprüfdaten;

und, dass die Berechnung des Ähnlichkeitsindikators einen Vergleich der weiteren Bildprüfdaten und der identifizierten weiteren Referenzdaten umfasst und die Ähnlichkeit der verglichenen weiteren Bildprüfdaten und Referenzdaten in den Ähnlichkeitsindikator eingeht.

**10.** Das computerimplementierte Verfahren nach Anspruch 9,

- wobei es sich bei dem Dokument um ein Sicherheitsdokument, insbesondere ein Ausweisdokument handelt und wobei die Erfassung des digitalen Bildes, die Berechnung der Bildprüfdaten und die Speicherung der Bildprüfdaten im Zuge des Prüfens des Dokuments zum Zwecke der Zutritts- oder Zugriffskontrolle bezüglich der das Dokument besitzenden Person erfolgt; oder
- wobei es sich bei dem Dokument um ein Sicherheitsdokument oder Wertdokument handelt und wobei die Erfassung des digitalen Bildes, die Berechnung der Bildprüfdaten und die Speicherung der Bildprüfdaten zum Zwecke der Echtheitsprüfung des Dokuments erfolgt.

11. Das computerimplementierte Verfahren nach einem der vorigen Ansprüche 9-10, wobei das Anwenden der irreversiblen, informationsverlustbehafteten Rechenfunktion auf die Eingabedaten umfasst:

- für die Pixel des Prüfbildes oder für die Pixel jedes der Teilbilder des Prüfbildes, automatische Bestimmung einer Häufigkeitsverteilung der Intensitäten dieser Pixel, wobei die Verteilung insbesondere eine klassenweise erfasste Häufigkeit von Pixeln mit einem Intensitätswert innerhalb eines klassenspezifischen Intensitätswertbereiches ist; und Verwendung der bestimmten Häufigkeitsverteilung oder der Gesamtheit der bestimmten Häufigkeitsverteilungen als die Bildprüfdaten; oder
- für die Pixel des Prüfbildes oder für die Pixel jedes der Teilbilder des Prüfbildes, automatische Erkennung von Position und Erstreckung von Linien durch Analyse der Intensitäten dieser Pixel; und Verwendung der erkannten Linien des Prüfbildes oder der Gesamtheit der erkannten Positionen und Erstreckungen der Linien der Teilbilder des Prüfbildes als die Bildprüfdaten.

12. Das computerimplementierte Verfahren nach einem der vorigen Ansprüche 9-11,

- wobei die Erfassung des Prüfbildes und die Berechnung der Bildprüfdaten jeweils für eines von mehreren unterschiedlichen Spektralbereichen durchgeführt wird, wobei die Spektralbereiche ausgewählt sind aus einer Gruppe umfassend: Infrarotlicht, Licht im sichtbaren Wellenlängenbereich, UV-Licht; kohärentes Licht einer Wellenlänge, das identisch ist zu der Wellenlänge des zur Erstellung eines holographischen Sicherheitsmerkmals des Dokuments verwendeten Lichts; und/oder
- wobei die Erfassung des Prüfbildes und die Berechnung der Bildprüfdaten jeweils für eine von mehreren unterschiedlichen Beleuchtungstechnologien durchgeführt wird, wobei die Beleuchtungstechnologien ausgewählt sind aus einer Gruppe umfassend: Auflicht, Durchlicht, Beleuchtung des Dokuments mit kohärentem Licht zur Rekonstruktion eines Hologramms; und/oder
- wobei die Spektralbereiche der bei der Erfassung des Prüfbildes verwendeten Lichtquellen und/oder die bei der Erfassung des Prüfbildes verwendete Beleuchtungstechnologien korrespondieren zu denjenigen Spektralbereichen und Beleuchtungstechnologien, die im Zuge der Herstellung oder Personalisierung des Dokuments für die Erfassung eines digitalen Bildes (200, 402, 502) verwendet wurden, aus welchem die Referenzbilddaten dieses Dokuments berechnet wurden.

13. System (800) zur Herausgabe, Personalisierung oder Registrierung eines Dokuments, umfassend:

- eine Kamera (802), die dazu ausgebildet ist, ein digitales Bild (818, 200, 402, 502) von zumindest einem Teil eines Dokuments (702) zu erfassen (102), wobei das Dokument einer Person zugeordnet ist, wobei das Dokument optisch lesbare, personenbezogene Daten (706) umfasst, wobei das digitale Bild zumindest die personenbezogenen Daten abbildet;
- ein Referenzerstellungs-Computersystem (820), wobei das Referenzerstellungs-Computersystem ausgebildet ist zur Berechnung von Bildreferenzdaten (832) durch Anwenden einer irreversiblen, informationsverlustbehafteten Rechenfunktion (816) auf Eingabedaten, wobei die Eingabedaten Intensitätsdaten von Pixeln des digitalen Bildes oder Intensitätsdaten von Pixeln von Teilbildern des digitalen Bildes sind, wobei der Informationsverlust mindestens so groß ist, dass die Bildreferenzdaten depersonalisiert sind und maximal so groß ist, dass die Bildreferenzdaten Dokument-individuell sind, wobei das Referenzerstellungs-Computersystem ferner ausgebildet ist zur Berechnung von weiteren Referenzdaten (714, 718) durch Anwenden einer weiteren irreversiblen, informationsverlustbehafteten Rechenfunktion auf weitere Daten (708-710), wobei das Dokument die weiteren Daten umfasst, wobei die weiteren Daten optisch erfassbare, nicht-personenbezogene Daten (708, 709, 710) sind, wobei das digitale Bild auch die weiteren Daten abbildet, wobei die weiteren Daten ein oder mehrere graphische Elemente umfassen, wobei die graphischen Elemente im Rahmen einer produktionsbedingten Fehlertoleranz in oder auf das Dokument ein- bzw. aufgebracht wurden; und
- eine Datenbank (825), in welcher die Bildreferenzdaten (822, 832) und die weiteren Referenzdaten gespeichert sind;

**dadurch gekennzeichnet, dass** die Berechnung der weiteren Referenzdaten umfasst:

• Durchführung einer Bildanalyse zur Bestimmung der Größe und optional zusätzlich auch von Positionsdaten jedes der ein oder mehreren graphischen Elemente auf dem Dokument, wobei die Genauigkeit der Größenbestimmung und der ggf. optional durchgeführten Positionsdatenbestimmung höher ist als die produktionsbedingte Fehlertoleranz; und

• Verwendung der Größen und optional zusätzlich auch der Positionsdaten als die weiteren Referenzdaten (708-710).

14. System (900) zur Prüfung der Integrität eines Dokuments, umfassend:

- eine Kamera (902), die ausgebildet ist zum Erfassen (110) eines Prüfbildes (918, 404, 504) eines Dokuments, wobei das Prüfbild ein digitales Bild von zumindest einem Teil eines Dokuments (702) ist, wobei das Dokument einer Person zugeordnet ist, wobei das Dokument optisch lesbare, personenbezogene Daten (706) umfasst, wobei das Prüfbild zumindest die personenbezogenen Daten abbildet;
- ein Prüfsystem (920), wobei das Prüfsystem ausgebildet ist zur:

• Berechnung (112) von Bildprüfdaten (927) durch Anwenden einer irreversiblen, informationsverlustbehafteten Rechenfunktion (816) auf Eingabedaten, wobei die Eingabedaten Intensitätsdaten von Pixeln des Prüfbildes oder Intensitätsdaten von Pixeln von Teilbildern des Prüfbildes sind, wobei der Informationsverlust mindestens so groß ist, dass die Bildprüfdaten depersonalisiert sind und maximal so groß ist, dass die Bildprüfdaten Dokument-individuell sind;
• Berechnung von weiteren Bildprüfdaten durch Anwenden einer weiteren irreversiblen, informationsverlustbehafteten Rechenfunktion auf weitere Daten, wobei das Dokument die weiteren Daten umfasst, wobei die weiteren Daten optisch erfassbare, nicht-personenbezogene Daten (708, 709, 710) sind, wobei das Prüfbild auch die weiteren Daten abbildet, wobei die weiteren Daten ein oder mehrere graphische Elemente umfassen, wobei die graphischen Elemente im Rahmen einer produktionsbedingten Fehlertoleranz in oder auf das Dokument ein- bzw. aufgebracht wurden;
• Identifikation (114) von Bildreferenzdaten (822, 832), die für das Dokument in einer Datenbank (825) gespeichert sind;

- Identifikation (114) von weiteren Referenzdaten des Dokuments in der Datenbank (825);

• Berechnung (116) eines Ähnlichkeitsindikators durch Vergleich der Bildprüfdaten und der identifizierten Bildreferenzdaten;
• Verwendung (118) des Dokuments und/oder Durchführung einer Software- oder Hardwarefunktion nur dann, wenn der Ähnlichkeitsindikator einen Mindestwert überschreitet;

**dadurch gekennzeichnet, dass** die Berechnung der weiteren Bildprüfdaten umfasst:

• Durchführung einer Bildanalyse zur Bestimmung der Größe und optional zusätzlich auch von Positionsdaten jedes der ein oder mehreren graphischen Elemente auf dem Dokument, wobei die Genauigkeit der Größenbestimmung und der ggf. optional durchgeführten Positionsdatenbestimmung höher ist als die produktionsbedingte Fehlertoleranz; und
• Verwendung der Größen und optional zusätzlich auch der Positionsdaten als die weiteren Bildprüfdaten (708-710);

und dass die Berechnung des Ähnlichkeitsindikators einen Vergleich der weiteren Bildprüfdaten und der identifizierten weiteren Referenzdaten umfasst und die Ähnlichkeit der verglichenen weiteren Prüfdaten und Referenzdaten in den Ähnlichkeitsindikator eingeht.

## Claims

1. A computer implemented method for checking the integrity of a document, comprising:

- detecting (102) a digital image (818, 200, 402, 502) of at least a portion of a documents (702) with a camera (802), wherein the document is assigned to a person, wherein the document comprises optically readable, personal data (706), wherein the digital image depicts at least the personal data;
- calculating image reference data (832) by applying an irreversible, information loss-associated computational function (816) to input data, wherein the input data are intensity data of pixels of the digital image or intensity data of pixels of subimages of the digital image, wherein the information loss is at least so great that the image reference data are depersonalised and is at most so great that the image reference data are individual to the document;
- calculating further reference data (714, 718) by applying a further irreversible, information loss-associated computational function to further data (708-710), wherein the document comprises the further data, wherein the further data are optically detectable, non-personal data (708, 709, 710), wherein the digital image also depicts the further data, wherein the further data comprise one or more graphic elements, wherein the graphic elements have been introduced into or applied onto the document according to a production-related error tolerance;
- storing the image reference data (822, 832) of the document in a database (825); and
- storing the further reference data (714, 718) in the database;

**characterised in that** the calculation of the further reference data comprises:

• performing an image analysis to determine the value and optionally also position data for each of the one or more graphic elements on the document, wherein the precision of the value determination and the optionally performed position data determination is greater than the production-related error tolerance; and
• using the values and optionally also the position data as the further reference data (708-710).

2. The computer-implemented method according to claim 1,

- wherein the database is a document-internal database of the document; or
- wherein the database is a document-external database;
- wherein the image reference data preferably include the data of a plurality of documents and the image reference data are stored linked respectively to a document ID (824, 830) of the document.

3. The computer-implemented method according to any one of the preceding claims, wherein the detection of the digital image, the calculation of the image reference data and the storage of the image reference data is performed when producing the document and/or personalising the document for the person.

4. The computer-implemented method according to any one of the preceding claims, wherein the personal-related data include an image (200, 402, 502, 706) of the person, in particular a facial image of the person.

5. The computer-implemented method according to any one of the preceding claims, wherein the database is configured, in response to receiving a checking request for the document, to identify and/or return image reference data which have been saved for this document in the database.

6. The computer-implemented method according to any one of the preceding claims, wherein the calculation of the image reference data comprises:

- subdividing the digital image into the subimages according to predefined, subimage boundaries or subimage delineation algorithms agreed with a checking device;
- for each of the subimages, calculating subimage reference data by applying the irreversible, information loss-affected computational function to the intensities of the pixels within this subimage;
- using the subimage reference data of the subimages as the image reference data.

7. The computer-implemented method according to any one of the preceding claims, wherein the application of the irreversible, information loss-affected computational function to the input data comprises:

- for the pixels of the digital image or for the pixels of the subimages, automatically determining a frequency distribution of the intensities of these pixels, wherein the frequency distribution is in particular a class-by-class determined frequency of pixels with an intensity value within a class-specific intensity value range; and using the specific frequency distribution or the entirety of the particular frequency distribution as the image reference data; or
- for the pixels of the digital image or for the pixels of each of the subimages, automatically determining the position and extension of lines by analysing the intensities of these pixels; and using the detected lines of the image or the entirety of the detected positions and extensions of the lines of the subimages as the image reference data.

8. The computer-implemented method according to any one of the preceding claims,

- wherein the detection of the digital image and the calculation and storage of the image reference data is performed respectively for one or more different spectral ranges, wherein the spectral ranges are selected from a group comprising: infrared light, light in the visible wavelength range, UV light; coherent light of a wavelength, which is identical to the wavelength of the light used for creating a holographic security feature of the document; and/or
- wherein the detection of the digital image and the calculation and storage of the image reference data is performed respectively for one or more different lighting technologies, wherein the lighting technologies are selected from a group comprising: incidental light, transmitted light, illumination of the document with coherent light for reconstructing a hologram.

9. A computer implemented method for checking the integrity of a document, comprising:

- detecting (110) an inspection image (918, 404, 504) with a camera (902), wherein the inspection image is a digital image of at least a portion of a document (702), wherein the document is assigned to a person, wherein the document comprises optically readable, personal data (706), wherein the inspection image depicts at least the personal data;

- calculating (112) image inspection data (927) by applying an irreversible, information loss-associated computational function (816) to input data, wherein the input data are intensity data of pixels of the inspection image or intensity data of pixels of subimages of the inspection image, wherein the information loss is at least so great that the image inspection data are depersonalised (i.e. do not allow an identification of the person) and at most is so great that the image inspection data are individual to the document;

- calculating further image inspection data by applying a further irreversible, information loss-associated computational function to further data, wherein the document comprises the further data, wherein the further data are optically detectable, non-personal data (708, 709, 710), wherein the inspection image also depicts the further data, wherein the further data comprise one or more graphic elements, wherein the graphic elements have been introduced into or applied onto the document according to a production-related error tolerance;

- identifying (114) image reference data (822, 832) of the document in a database (825);

- identifying (114) further reference data of the document in the database (825);

- calculating (116) a similarity indicator by comparing the image inspection data and the identified image reference data;

- using (118) the document and/or performing a software or hardware function only when the similarity indicator falls below a minimum value;

**characterised in that** the calculation of the further image inspection data comprises:

• performing an image analysis for determining the value and optionally also position data for each of the one or more graphic elements on the document, wherein the precision of the value determination and the optionally performed position data determination is greater than the production-related error tolerance; and

• using the values and optionally also the position data as the further image inspection data;

and **in that** the calculation of the similarity indicator includes a comparison of the further image inspection data and the identified further reference data and the similarity of the compared further image inspection data and reference data enters the similarity indicator.

10. The computer-implemented method according to claim 9,

- wherein the document is a security document, in particular an identity document and wherein the detection of the digital image, the calculation of the image inspection data and the storage of the image inspection data takes place while checking the document for the purpose of controlling the entry or access of the person holding the document;
or
- wherein the document is a security document or valuable document and wherein the detection of the digital image, the calculation of the image inspection data and the storage of the image inspection data is performed for the purpose of authenticating the document.

11. The computer-implemented method according to any one of the preceding claims 9-10, wherein the application of the irreversible, information loss-associated computational function to the input data comprises:

- for the pixels of the inspection image or for the pixels of each of the subimages of the inspection image, automatically determining a frequency distribution of the intensities of these pixels, wherein the distribution is in particular a class-by-class detected frequency of pixels with an intensity value within a class-specific intensity value range; and using the specific frequency distribution or the entirety of the specific frequency distributions as the image inspection data; or
- for the pixels of the inspection image or for the pixels of each of the subimages of the inspection image automatically detecting the position and extension of lines by analysing the intensities of these pixels; and using the detected lines of the inspection image or the entirety of the detected positions and extensions of lines of the subimages of the inspection image as the image inspection data.

12. The computer-implemented method according to any one of the preceding claims 9-11,

- wherein the detection of the inspection image and the calculation of the image inspection data is performed respectively for one or more different spectral ranges, wherein the spectral ranges are selected from a group comprising: infrared light, light in the visible wavelength range, UV light; coherent light of a wavelength which is identical to the wavelength of the light used for creating a holographic security feature of the document; and/or

- wherein the detection of the inspection image and the calculation of the image inspection data is performed respectively for one or more different lighting technologies, wherein the lighting technologies are selected from a group comprising: incidental light, transmitted light, illumination of the document with coherent light for reconstructing a hologram; and/or

- wherein the spectral ranges of the light sources used for the detection of the inspection image and/or the lighting technologies used for the detection of the inspection image correspond to those spectral ranges and lighting technologies which were used during the production or personalisation of the document for detecting a digital image (200, 402, 502) from which the reference image data of these documents were calculated.

13. A system (800) for issuing, personalising or registering a document, comprising:

- a camera (802), which is configured for detecting (102) a digital image (818, 200, 402, 502) of at least a portion of a document (702), wherein the document is assigned to a person, wherein the document comprises optically readable, personal data (706) wherein the digital image depicts at least the personal data:

- a reference creating computer system (820), wherein the reference creating computer system is configured for calculating image reference data (832) by applying an irreversible, information loss-associated computational function (816) to input data, wherein the input data are intensity data of pixels of the digital image or intensity data of pixels of subimages of the digital image, wherein the information loss is at least so great that the image reference data are depersonalised and at most is so great that the image reference data are individual to the document,

wherein the reference creating computer system is further configured for calculating further reference data (714, 718) by applying a further irreversible, information loss-associated computational function for further data (708-710), wherein the document comprises the further data, wherein the further data are optically detectable, non-personal data (708, 709, 710), wherein the digital image also depicts the further data, wherein the further data comprise one or more graphic elements, wherein the graphic elements have been inserted into or applied onto the document according to a production-related error tolerance; and

- a database (825), in which the image reference data (822, 832) and the further reference data are stored;

**characterised in that** the calculation of the further reference data comprises:

• performing an image analysis for determining the value and optionally also position data for each of the one or more graphic elements on the document, wherein the precision of the value determination and the optionally performed position data determination is greater than the production-related error tolerance;
and
• using the values and optionally also the position data as the further reference data (708-710).

14. A system (900) for checking the integrity of a document, comprising:

- a camera (902), which is configured for detecting (110) an inspection image (918, 404, 504) of a document, wherein the inspection image is a digital image of at least a portion of a document (702), wherein the document is assigned to a person, wherein the document comprises optically readable, personal data (706), wherein the inspection image depicts at least the personal data;

- an inspection system (920), wherein the inspection system is configured for:

• calculating (112) image inspection data (927) by applying an irreversible, information loss-associated computational function (816) to input data, wherein the input data are intensity data of pixels of the inspection image or intensity data of pixels of subimages of the inspection image, wherein the information loss is at least so great that the image inspection data are depersonalised and is at most so great that the image inspection data are individual to the document;

• calculating further image inspection data by applying a further irreversible, information loss-associated computational function to further data, wherein the document comprises the further data, wherein the further data are optically detectable, non-personal data (708, 709, 710), wherein the inspection image also depicts the further data, wherein the further data comprise one or more graphic elements, wherein the graphic elements have been introduced into or applied onto the document according to a production-related error tolerance;
• identifying (114) image reference data (822, 832) which are saved for the document in a database (825);
• identifying (114) further reference data of the document in the database (825);
• calculating (116) a similarity indicator by comparing the image inspection data and the identified image reference data;
• using (118) the document and/or performing a software or hardware function only when the similar indicator falls below a minimum value;

**characterised in that** the calculation of the further image inspection data comprises:

• performing an image analysis for determining the value and optionally also position data for each of the one or more graphic elements on the document, wherein the precision of the value determination and the optionally performed position data determination is greater than the production-related error tolerance;
and
• using the values and optionally also the position data as the further image inspection data (708-710);

and **in that** the calculation of the similarity indicator comprises a comparison of the further image inspection data and the identified further reference data and the similarity of the compared further image inspection data and reference data enters the similarity indicator.

**Revendications**

1. Procédé mis en oeuvre par ordinateur pour le contrôle de l'intégrité d'un document, comprenant :

- la détection (102) d'une image numérique (818, 200, 402, 502) d'au moins une partie d'un document (702) avec une caméra (802), dans lequel le document est attribué à une personne, dans lequel le document comprend des données personnelles (706) lisibles de manière optique, dans lequel l'image numérique illustre au moins les données personnelles ;
- le calcul de données de référence d'image (832) par application d'une fonction de calcul associée à une perte d'information irréversible (816) pour entrer des données, dans lequel les données d'entrée sont des données d'intensité de pixels de l'image numérique ou des données d'intensité de pixels de sous-images de l'image numérique, dans lequel la perte d'information est au moins si importante que les données de référence d'image sont dépersonnalisées et est au plus si importante que les données de référence d'image sont individuelles pour le document ;
- le calcul de données de référence (714, 718) supplémentaires par application d'une fonction de calcul associée à une perte d'information irréversible supplémentaire à des données (708 à 710) supplémentaires, dans lequel le document comprend les données supplémentaires, dans lequel les données supplémentaires sont des données (708, 709, 710) non personnelles détectables de manière optique, dans lequel l'image numérique illustre également les données supplémentaires, dans lequel les données supplémentaires comprennent un ou plusieurs éléments graphiques, dans lequel les éléments graphiques ont été introduits dans le document ou appliqués à ce dernier selon une tolérance d'erreur liée à la production ;
- le stockage des données de référence d'image (822, 832) du document dans une base de données (825) ; et
- le stockage des données de référence (714, 718) supplémentaires dans la base de données ; **caractérisé en ce que** le calcul des données de référence supplémentaires comprend :

• la réalisation d'une analyse d'image pour déterminer la valeur et éventuellement également les données de position pour chacun du ou des éléments graphiques sur le document, dans lequel la précision de la détermination de la valeur et de la détermination des données de position éventuellement réalisée est supérieure à la tolérance d'erreur liée à la production ; et
• l'utilisation des valeurs et éventuellement également des données de position en tant que les données de référence (708 à 710) supplémentaires.

2. Procédé mis en oeuvre par ordinateur selon la revendication 1,

- dans lequel la base de données est une base de données interne au document du document ; ou

- dans lequel la base de données est une base de données externe au document ;

- dans lequel les données de référence d'image incluent préférentiellement les données d'une pluralité de documents et les données de référence d'image sont stockées de manière respectivement liée à un ID de document (824, 830) du document.

3. Procédé mis en oeuvre par ordinateur selon l'une quelconque des revendications précédentes, dans lequel la détection de l'image numérique, le calcul des données de référence d'image et le stockage des données de référence d'image sont réalisés lors de la production du document et/ou de la personnalisation du document pour la personne.

4. Procédé mis en oeuvre par ordinateur selon l'une quelconque des revendications précédentes, dans lequel les données liées à la personne incluent une image (200, 402, 502, 706) de la personne, en particulier une image faciale de la personne.

5. Procédé mis en oeuvre par ordinateur selon l'une quelconque des revendications précédentes, dans lequel la base de données est conçue, en réponse à la réception d'une requête de contrôle pour le document, pour identifier et/ou renvoyer des données de référence d'image qui ont été enregistrées pour ce document dans la base de données.

6. Procédé mis en oeuvre par ordinateur selon l'une quelconque des revendications précédentes, dans lequel le calcul des données de référence d'image comprend :

- la subdivision de l'image numérique en les sous-images selon des limites de sous-images prédéfinies ou des algorithmes de délimitation de sous-images en accord avec un dispositif de contrôle ;

- pour chacune des sous-images, le calcul de données de référence de sous-images par application de la fonction de calcul affectée par une perte d'information irréversible aux intensités des pixels à l'intérieur de cette sous-image ;

- l'utilisation des données de référence de sous-image des sous-images en tant que données de référence d'image.

7. Procédé mis en oeuvre par ordinateur selon l'une quelconque des revendications précédentes, dans lequel l'application de la fonction de calcul affectée par une perte d'information irréversible aux données d'entrée comprend :

- pour les pixels de l'image numérique ou pour les pixels des sous-images, la détermination automatique d'une distribution de fréquence des intensités de ces pixels, dans lequel la distribution de fréquence est en particulier une fréquence déterminée classe par classe de pixels avec une valeur d'intensité à l'intérieur d'une plage de valeurs d'intensité spécifique d'une classe ; et l'utilisation de la distribution de fréquence spécifique ou de la totalité de la distribution de fréquence particulière en tant que les données de référence d'image ; ou

- pour les pixels de l'image numérique ou pour les pixels de chacune des sous-images, la détermination automatique de la position et de l'extension des lignes par analyse des intensités de ces pixels ; et l'utilisation des lignes détectées de l'image ou de la totalité des positions détectées et des extensions des lignes des sous-images en tant que données de référence d'image.

8. Procédé mis en oeuvre par ordinateur selon l'une quelconque des revendications précédentes,

- dans lequel la détection de l'image numérique et le calcul et le stockage des données de référence d'image sont respectivement réalisés pour une ou plusieurs plages spectrales différentes, dans lequel les plages spectrales sont choisies dans un groupe comprenant : la lumière infrarouge, la lumière dans la plage de longueurs d'ondes visibles, la lumière UV ; la lumière cohérente d'une seule longueur d'onde, qui est identique à la longueur d'onde de la lumière utilisée pour la création d'une fonctionnalité de sécurité holographique du document ; et/ou

- dans lequel la détection de l'image numérique et le calcul et le stockage des données de référence d'image sont respectivement réalisés pour une ou plusieurs technologies d'éclairage différentes, dans lequel les technologies d'éclairage sont choisies dans un groupe comprenant : la lumière incidente, la lumière transmise, l'illumination du document par de la lumière cohérente pour la reconstruction d'un hologramme.

9. Procédé mis en oeuvre par ordinateur pour le contrôle de l'intégrité d'un document, comprenant :

- la détection (110) d'une image d'inspection (918, 404, 504) avec une caméra (902), dans lequel l'image d'inspection est une image numérique d'au moins une partie d'un document (702), dans lequel le document est attribué à une personne, dans lequel le document comprend des données personnelles (706) lisibles de manière optique, dans lequel l'image d'inspection illustre au moins les données personnelles ;

- le calcul (112) de données d'inspection d'image (927) par application d'une fonction de calcul associée à une perte d'information irréversible (816) pour entrer des données, dans lequel les données d'entrée sont des données d'intensité de pixels de l'image d'inspection ou des données d'intensité de pixels de sous-images de l'image d'inspection, dans lequel la perte d'information est au moins si importante que les données d'inspection d'image sont dépersonnalisées (c.à.d. ne permettent pas une identification de la personne) et est au plus si importante que les données d'inspection d'image sont individuelles pour le document ;

- le calcul de données d'inspection d'image supplémentaires par application d'une fonction de calcul associée à une perte d'information irréversible supplémentaire à des données supplémentaires, dans lequel le document comprend les données supplémentaires, dans lequel les données supplémentaires sont des données (708, 709, 710) non personnelles détectables de manière optique, dans lequel l'image d'inspection illustre également les données supplémentaires, dans lequel les données supplémentaires comprennent un ou plusieurs éléments graphiques, dans lequel les éléments graphiques ont été introduits dans ou appliqués au document selon une tolérance d'erreur liée à la production ;

- l'identification (114) des données de référence d'image (822, 832) du document dans une base de données (825) ;

- l'identification (114) de données de référence supplémentaires du document dans la base de données (825) ;

- le calcul (116) d'un indicateur de similitude par comparaison des données d'inspection d'image et des données de référence d'image identifiée ;

- l'utilisation (118) du document et/ou la réalisation d'une fonction logicielle ou matérielle uniquement lorsque l'indicateur de similitude passe sous une valeur minimale ;

**caractérisé en ce que** le calcul des données de d'inspection d'image supplémentaires comprend :

• la réalisation d'une analyse d'image pour la détermination de la valeur et éventuellement également des données de position pour chacun du ou des éléments graphiques sur le document, dans lequel la précision de la détermination de la valeur et de la détermination des données de position éventuellement réalisée est supérieure à la tolérance d'erreur liée à la production ;

et

• l'utilisation des valeurs et éventuellement également des données de position en tant que les données d'inspection d'image supplémentaires ;

et **en ce que** le calcul de l'indicateur de similitude inclut une comparaison des données d'inspection d'image supplémentaires et des données de référence supplémentaires identifiées et la similitude des données d'inspection d'image supplémentaires et des données de référence comparées entre dans l'indicateur de similitude.

10. Procédé mis en oeuvre par ordinateur selon la revendication 9,

- dans lequel le document est un document de sécurité, en particulier un document d'identité et dans lequel la détection de l'image numérique, le calcul des données d'inspection d'image et le stockage des données d'inspection d'image ont lieu pendant le contrôle du document dans le but de réguler l'entrée ou l'accès de la personne détenant le document ;
ou
- dans lequel le document est un document de sécurité ou un document précieux et dans lequel la détection de l'image numérique, le calcul des données d'inspection d'image et le stockage des données d'inspection d'image sont réalisés dans le but d'authentifier le document.

11. Procédé mis en oeuvre par ordinateur selon l'une quelconque des revendications 9 à 10 précédentes, dans lequel l'application de la fonction de calcul associée à une perte d'information irréversible aux données d'entrée comprend :

- pour les pixels de l'image d'inspection ou pour les pixels de chaque sous-image, la détermination automatique d'une distribution de fréquence des intensités de ces pixels, dans lequel la distribution est en particulier une fréquence détectée classe par classe de pixels avec une valeur d'intensité à l'intérieur d'une plage de valeurs d'intensité spécifique d'une classe ; et l'utilisation de la distribution de fréquence spécifique ou de la totalité de la distribution de fréquence spécifique en tant que les données d'inspection d'image ; ou
- pour les pixels de l'image d'inspection ou pour les pixels de chacune des sous-images de l'image d'inspection, la détection automatique de la position et de l'extension des lignes par analyse des intensités de ces pixels ; et l'utilisation des lignes détectées de l'image d'inspection ou de la totalité des positions et des extensions des lignes détectées des sous-images de l'image d'inspection en tant que données d'inspection d'image.

12. Procédé mis en oeuvre par ordinateur selon l'une quelconque des revendications 9 à 11 précédentes,

- dans lequel la détection de l'image d'inspection et le calcul des données de d'inspection d'image sont respectivement réalisés pour une ou plusieurs plages spectrales différentes, dans lequel les plages spectrales sont choisies dans un groupe comprenant : la lumière infrarouge, la lumière dans la plage de longueurs d'ondes visibles, la lumière UV ; la lumière cohérente d'une seule longueur d'onde, qui est identique à la longueur d'onde de la lumière utilisée pour la création d'une fonctionnalité de sécurité holographique du document ; et/ou
- dans lequel la détection de l'image d'inspection et le calcul des données d'inspection d'image sont respectivement réalisés pour une ou plusieurs technologies d'éclairage différentes, dans lequel les technologies d'éclairage sont choisies dans un groupe comprenant : la lumière incidente, la lumière transmise, l'illumination du document par de la lumière cohérente pour la reconstruction d'un hologramme ; et/ou
- dans lequel les plages spectrales des sources lumineuses utilisées pour la détection de l'image d'inspection et/ou les technologies d'éclairage utilisées pour la détection de l'image d'inspection correspondent aux plages spectrales et technologies d'éclairage utilisées pendant la production ou la personnalisation du document pour la détection d'une image numérique (200, 402, 502) à partir de laquelle les données de référence d'image de ces documents ont été calculées.

13. Système (800) destiné à la publication, la personnalisation ou l'enregistrement d'un document, comprenant :

- une caméra, qui est conçue pour la détection (102) d'une image numérique (818, 200, 402, 502) d'au moins une partie d'un document (702), dans lequel le document est attribué à une personne, dans lequel le document comprend des données (706) personnelles lisibles de manière optique, dans lequel l'image numérique illustre au moins les données personnelles ;
- un système informatique créateur de références (820), dans lequel le système informatique créateur de références est conçu pour le calcul de données de référence d'image (832) par application d'une fonction de calcul associée à une perte d'information irréversible (816) pour entrer des données, dans lequel les données d'entrée sont des données d'intensité de pixels de l'image numérique ou des données d'intensité de pixels de sous-images de l'image numérique, dans lequel la perte d'information est au moins si importante que les données de référence d'image sont dépersonnalisées et est au plus si importante que les données de référence d'image sont individuelles pour le document, dans lequel le système informatique créateur de références est en outre conçu pour le calcul de données de référence (714, 718) supplémentaires par application d'une fonction de calcul associée à une perte d'information irréversible supplémentaire à des données (708 à 710) supplémentaires, dans lequel le document comprend les données supplémentaires, dans lequel les données supplémentaires sont des données (708, 709, 710) non personnelles détectables de manière optique, dans lequel l'image numérique illustre également les données supplémentaires, dans lequel les données supplémentaires comprennent un ou plusieurs éléments graphiques, dans lequel les éléments graphiques ont été insérés dans le document ou appliqués à ce dernier selon une tolérance d'erreur liée à la production ; et
- une base de données (825), dans laquelle les données de référence d'image (822, 832) et les données de référence supplémentaires sont stockées ;

**caractérisé en ce que** le calcul des données de référence supplémentaires comprend :

• la réalisation d'une analyse d'image pour la détermination de la valeur et éventuellement également des données de position pour chacun du ou des éléments graphiques sur le document, dans lequel la précision de la détermination de la valeur et de la détermination des données de position éventuellement réalisée est supérieure à la tolérance d'erreur liée à la production ;
et
• l'utilisation des valeurs et éventuellement également des données de position en tant que les données de référence (708 à 710) supplémentaires.

14. Système (900) destiné au contrôle de l'intégrité d'un document, comprenant :

- une caméra (902), qui est conçue pour la détection (110) d'une image d'inspection (918, 404, 504) d'un document, dans lequel l'image d'inspection est une image numérique d'au moins une partie d'un document (702), dans lequel le document est attribué à une personne, dans lequel le document comprend des données (706) personnelles lisibles de manière optique, dans lequel l'image d'inspection illustre au moins les données personnelles ;
- un système d'inspection (920), dans lequel le système d'inspection est conçu pour :

    • le calcul (112) de données d'inspection d'image (927) par application d'une fonction de calcul associée à une perte d'information irréversible (816) pour entrer des données, dans lequel les données d'entrée sont des données d'intensité de pixels de l'image d'inspection ou des données d'intensité de pixels de sous-images de l'image d'inspection, dans lequel la perte d'information est au moins si importante que les données d'inspection d'image sont dépersonnalisées et est au plus si importante que les données d'inspection d'image sont individuelles pour le document ;

    • le calcul de données d'inspection supplémentaires par application d'une fonction de calcul associée à une perte d'information irréversible supplémentaire à des données supplémentaires, dans lequel le document comprend les données supplémentaires, dans lequel les données supplémentaires sont des données (708, 709, 710) non personnelles détectables de manière optique, dans lequel l'image d'inspection illustre également les données supplémentaires, dans lequel les données supplémentaires comprennent un ou plusieurs éléments graphiques, dans lequel les éléments graphiques ont été introduits dans le document ou appliqués à celui-ci selon une tolérance d'erreur liée à la production ;

    • - l'identification (114) de données de référence d'image (822, 832) qui sont enregistrées pour le document dans une base de données (825) ;

    • l'identification (114) de données de référence supplémentaires du document dans la base de données (825) ;

    • le calcul (116) d'un indicateur de similitude par comparaison des données d'inspection d'image et des données de référence d'image identifiée ;

    • l'utilisation (118) du document et/ou la réalisation d'une fonction logicielle ou matérielle uniquement lorsque l'indicateur de similitude passe sous une valeur minimale ; **caractérisé en ce que** le calcul des données de d'inspection d'image supplémentaires comprend :

    • la réalisation d'une analyse d'image pour la détermination de la valeur et éventuellement également des données de position pour chacun du ou des éléments graphiques sur le document, dans lequel la précision de la détermination de la valeur et de la détermination des données de position éventuellement réalisée est supérieure à la tolérance d'erreur liée à la production ; et

    • l'utilisation des valeurs et éventuellement également des données de position en tant que les données d'inspection d'image (708 à 710) supplémentaires ;

et **en ce que** le calcul de l'indicateur de similitude comprend une comparaison des données d'inspection d'image supplémentaires et des données de référence supplémentaires identifiées et la similitude des données d'inspection d'image supplémentaires et des données de référence comparées entre dans l'indicateur de similitude.

102

Erfassen eines digitalen Bildes eines Dokuments mit personenbezogenen Daten

104

Berechnen von Bildreferenzdaten durch Anwendung einer informationsverlustbehafteten Rechenfunktion auf Pixelintensitäten des Bildes

106

Speicherung der Bildreferenzdaten verknüpft mit einer Dokumenten-ID in einer Datenbank

## Fig.1A

110

Erfassen eines digitalen Bildes eines Dokuments mit personenbezogenen Daten

112

Berechnen von Bildprüfdaten durch Anwendung einer informationsverlust-behafteten Rechenfunktion auf Pixelintensitäten des Bildes

114

Identifikation von Bildreferenzdaten, die mit einer Dokument-ID des Dokuments in einer Datenbank verknüpft gespeichert sind

116

Berechnung eines Ähnlichkeitsindikators durch Vergleich der Bildprüfdaten und der identifizierten Bildreferenzdaten

118

Durchführung einer Funktion in Abhängigkeit von dem Ähnlichkeitsindikator

## Fig.1B

Fig.2

Fig.3A

Fig.3B

Fig.3C

Fig.4A

Fig.4B

Fig.4C

Fig.4D

Fig.5A

Fig.5B

EP 3 889 922 B1

Fig.5C

Fig.6

46

**Fig.7**

| Seriennummer | 123456 |
|---|---|
| Bild Merkmal | |
| Adler | Position X : 50.37<br>Position Y : 78.42<br>Fehlstellen : keine |
| MRZ | |

| Buchstabe | Position X | Position Y |
|---|---|---|
| 1 | 11.23 | 15.03 |
| 2 | 11.22 | 18.16 |
| 3 | 11.30 | 21.21 |
| ... | | ... |
| ... | ... | ... |
| 30 | 11.27 | 105.01 |

Ausgangsprüfung:

Fig.8

Verifikation

Fig.9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 202011107898 U1
- US 20120324534 A1
- DE 102016001449 A1